# EUROPEAN PATENT APPLICATION

(11) **EP 4 800 669 A1**
(43) Date of publication of application: **02.09.2026**
(21) Application number: 26157873.6
(22) Date of filing: 11.02.2026
(51) Int. Cl.: G07C 9/00, B60R 25/24, H04L 9/40, H04W 4/40

(54) **MANAGEMENT SERVER AND NOTIFICATION PROGRAM**

(30) Priority: 28.02.2025 JP 2025031967
(71) Applicant: Toyota Jidosha Kabushiki Kaisha, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); MATSUMOTO, Satoshi, Toyota-shi, 471-8571 (JP); MURASE, Junji, Ohguchi-cho, 480-0195 (JP); MORI, Yuki, Ohguchi-cho, 480-0195 (JP); HASEGAWA, Yosuke, Ohguchi-cho, 480-0195 (JP)
(74) Representative: J A Kemp LLP

(57) **Abstract**

A management server includes processing circuitry configured to, upon receiving a deletion request for deleting a deletion-target digital key from a sender device, the deletion-target digital key being one of digital keys registered with a vehicle, and the sender device being one of the devices that respectively store information relating to the digital keys, store information indicating the deletion-target digital key is in a deletion-pending state in which the deletion-target digital key is deleted upon satisfaction of a predetermined condition, and transmit a pending-state notification to a receiving device, the pending-state notification indicating that the deletion-target digital key is in the deletion-pending state, and the receiving device being one of the devices that belongs to a user other than a user of the sender device.

## Description

### BACKGROUND

### 1. Field

The present disclosure relates to a management server and a notification program.

### 2. Description of Related Art

JP2023-184349A discloses a digital key management system that uses a device, such as a smartphone, as a key for a vehicle. The management system causes the vehicle and the device to store information relating to a digital key. As a result, the device registered as the digital key enables the associated vehicle to be used without requiring a dedicated physical key for the vehicle. In the management system, a device that stores information relating to the digital key of the vehicle is configured to issue a registration request to enable a device of another user to function as the digital key of the vehicle. In this manner, the management system is configured to enable a device of another user to be registered with the vehicle as the digital key of the vehicle. That is, the management system enables generation of a new digital key for the vehicle. Thus, the management system allows the vehicle to be lent to another person without requiring the delivery of a physical key dedicated to the vehicle.

In the management system described in the above publication, multiple digital keys may be registered with the same vehicle. When deletion of a digital key registered with the vehicle is requested, the management server may delete the digital key on the condition that a predetermined condition is satisfied. In this case, among multiple users of the management system, it is necessary to enable users other than the user who requested deletion of the digital key to recognize that the digital key for which deletion has been requested is present.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

A management server according to an embodiment is configured to communicate with a vehicle and multiple devices and manage information relating to multiple digital keys registered with the vehicle. The management server includes processing circuitry configured to, upon receiving a deletion request for deleting a deletion-target digital key from a sender device, the deletion-target digital key being one of the digital keys registered with the vehicle, and the sender device being one of the devices that respectively store information relating to the digital keys, store information indicating the deletion-target digital key is in a deletion-pending state in which the deletion-target digital key is deleted upon satisfaction of a predetermined condition, and transmit a pending-state notification to a receiving device, the pending-state notification indicating that the deletion-target digital key is in the deletion-pending state, and the receiving device being one of the devices that belongs to a user other than a user of the sender device.

A notification program to be executed by a first device according to an embodiment of the present disclosure is provided. The first device is one of multiple devices in a digital key system. The digital key system is configured to cause the devices to function as digital keys registered with a vehicle by storing, in the devices, information relating to digital keys that are registerable with the vehicle. The notification program is configured to cause processing circuitry of the first device to, when the first device transmits a deletion request for deleting a deletion-target digital key, the deletion-target digital key being one of the digital keys registered with the vehicle, transmit a pending-state notification to a receiving device, the receiving device being included in the devices and belonging to a user other than a user of the first device, and the pending-state notification indicating that the deletion-target digital key is in a deletion-pending state in which the deletion-target digital key is deleted upon satisfaction of a predetermined condition.

Other features and aspects will be apparent from the following detailed description, the drawings, and the claims.

### BRIEF DESCRIPTION OF THE DRAWINGS

Fig. 1 is a schematic diagram showing a digital key management system according to a first embodiment.
Fig. 2 is a schematic diagram showing a configuration of an owner device that is a virtual machine constructed on the server shown in Fig. 1.
Fig. 3 is a schematic diagram of contract information stored in the storage device of the management server shown in Fig. 1.
Fig. 4 is a schematic diagram of owner key information stored in the owner device shown in Fig. 1.
Fig. 5 is a schematic diagram of shareable key information stored in the shareable device shown in Fig. 1.
Fig. 6 is a schematic diagram illustrating data in the database of the management server shown in Fig. 1.
Fig. 7 is a sequence diagram of an owner key registration process executed when the owner device in Fig. 1 is a mobile device.
Fig. 8 is a sequence diagram of an owner key registration process executed when the owner device in Fig. 1 is a virtual device.
Fig. 9 is a sequence diagram of a friend key registration process executed by the management system shown in Fig. 1.
Fig. 10 is a sequence diagram of a guest key registration process executed by the management system shown in Fig. 1.
Fig. 11 is a sequence diagram of a digital key deletion process executed by the management system shown in Fig. 1.
Fig. 12 is a flowchart illustrating a series of processes executed by the management server to generate the pending-state notification shown in Fig. 11.
Fig. 13 is a diagram illustrating an example of an image displayed on the device notified of the pending-state notification shown in Fig. 11.
Fig. 14 is a sequence diagram illustrating a series of processes executed by the management system in the deletion process shown in Fig. 11.
Fig. 15 is a schematic diagram illustrating how the management server according to a modification of the first embodiment transmits a notification.
Fig. 16 is a sequence diagram of the digital key deletion process executed by the management system of the second embodiment.
Fig. 17 is an example of an image displayed on the device notified of a confirmation request in the management system shown in Fig. 16.
Fig. 18 is a sequence diagram showing a continuation of the process of Fig. 16.
Fig. 19 is a sequence diagram of the digital key deletion process executed by the management system according to a third embodiment.
Fig. 20 is a flowchart illustrating a series of processes executed by the management server to generate the pending-state notification shown in Fig. 19.
Fig. 21 is a schematic diagram illustrating the configuration of a friend device according to fourth, fifth, and ninth embodiments.
Fig. 22 is a sequence diagram of the digital key deletion process executed by the management system of the fourth embodiment.
Fig. 23 is a flowchart illustrating a series of processes that the notification program has the execution device of a friend device execute to generate the pending-state notification shown in Fig. 22.
Fig. 24 is a schematic diagram showing how a friend device according to a modification of the fourth embodiment transmits a notification.
Fig. 25 is a sequence diagram of the digital key deletion process executed by the management system of the fifth embodiment.
Fig. 26 is a sequence diagram showing a continuation of the process of Fig. 25.
Fig. 27 is a schematic diagram showing a configuration of the owner device according to a sixth embodiment.
Fig. 28 is a sequence diagram of the digital key deletion process executed by the management system of the sixth embodiment.
Fig. 29 is a schematic diagram illustrating the configuration of a guest device according to seventh and eighth embodiments.
Fig. 30 is a sequence diagram of the digital key deletion process executed by the management system of the seventh embodiment.
Fig. 31 is a flowchart illustrating a series of processes that the notification program has the execution device of a guest device execute to generate the pending-state notification shown in Fig. 30.
Fig. 32 is a schematic diagram showing how a guest device according to a modification of the seventh embodiment transmits a notification.
Fig. 33 is a sequence diagram of the digital key deletion process executed by the management system of the eighth embodiment.
Fig. 34 is a sequence diagram showing a continuation of the process of Fig. 33.
Fig. 35 is a sequence diagram of the digital key deletion process executed by the management system of the ninth embodiment.
Fig. 36 is a flowchart illustrating a series of processes that the notification program has the execution device of the friend device execute when generating the pending-state notification shown in Fig. 35.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

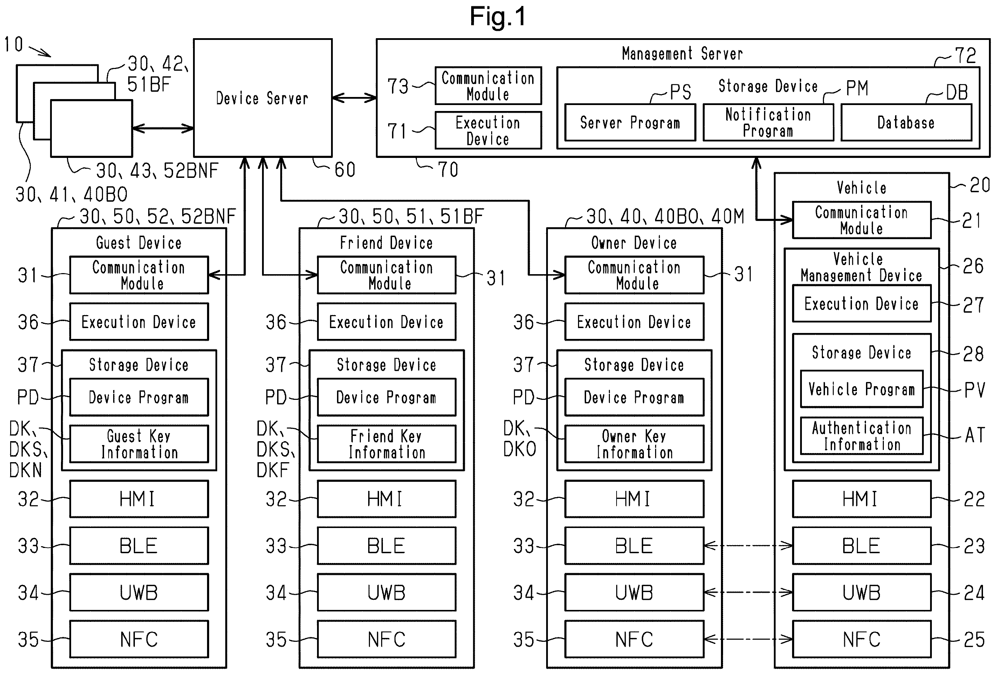

A digital key management system including a management server 70 according to a first embodiment will now be described with reference to Figs. 1 to 14.

### Overview of Management System 10

As shown in Fig. 1, the management server 70 is one of the devices forming the management system 10. The management server 70 communicates with a vehicle 20 and multiple devices 30 to manage information relating to multiple digital keys that can be registered with the vehicle 20. Standards for digital keys have been established by the Car Connectivity Consortium (CCC). The digital key-related aspects in the present embodiment are based on compliance with the CCC standard. However, they are also applicable to standards and systems other than CCC standard. The management system 10 includes the vehicle 20, multiple devices 30, a device server 60, and the management server 70.

Each vehicle 20 includes a communication module 21, a human machine interface (HMI) 22, a Bluetooth Low Energy (BLE) module 23, an ultra-wideband (UWB) module 24, a near-field communication (NFC) module 25, and a vehicle management device 26.

The communication module 21 communicates with the management server 70 via a wireless communication line. The HMI 22 includes an input device and a presentation device. When the input device receives a user operation of the vehicle 20, the input device outputs a signal indicating the user's operation to the vehicle 20. The presentation device is configured to present information to the user via images, sounds, or other media. The presentation device is, for example, a monitor and a speaker.

The BLE module 23 performs short-range wireless communication with a device 30 via BLE communication. The UWB module 24 performs short-range wireless communication with a device 30 via UWB communication. The UWB module 24 measures the distance between a device 30 and the vehicle 20. The NFC module 25 performs short-range wireless communication with a device 30 via NFC communication.

The vehicle management device 26 is mounted on the vehicle 20. The vehicle management device 26 manages digital keys of the vehicle 20. Examples of the vehicle management device 26 include a digital key ECU. The vehicle management device 26 includes an execution device 27 and a storage device 28. The execution device 27 is processing circuitry including one or more processors that execute various processes according to computer programs (software). The storage device 28 stores a vehicle program PV and authentication information AT. The vehicle program PV causes the execution device 27 to store and delete the authentication information AT. The authentication information AT relates to digital keys, namely, digital key-related information. Specifically, the authentication information AT is used to authenticate a digital key so that control of the vehicle 20 using the digital key is enabled during use. The authentication information AT is provided for each digital key to be authenticated. The execution device 27 includes a CPU. The execution device 27 executes the vehicle program PV to execute processes relating to storage and deletion of the authentication information AT.

When the vehicle management device 26 authenticates a digital key, the vehicle management device 26 enables the authenticated digital key to control the vehicle 20. For example, when authenticating a digital key, the vehicle management device 26 enables the digital key to unlock the vehicle 20. For example, when authenticating a digital key, the vehicle management device 26 enables the digital key to start the vehicle 20.

The devices 30 are mobile information terminals such as smartphones. Each device 30 includes a communication module 31, an HMI 32, a BLE module 33, a UWB module 34, an NFC module 35, an execution device 36, and a storage device 37.

The communication module 31 communicates with the device server 60 via a wireless communication line. The HMI 32 includes an input device and a presentation device. When the input device receives an operation performed by a user of the device 30, the input device outputs a signal indicating the operation to the device 30. The presentation device presents information to the user via images, sounds, or other media. The presentation device is, for example, a monitor and a speaker.

The BLE module 33 performs short-range wireless communication with a vehicle 20 via BLE communication. The UWB module 34 performs short-range wireless communication with a vehicle 20 via UWB communication. The NFC module 35 performs short-range wireless communication with a vehicle 20 via NFC communication.

The storage device 37 stores a device program PD and key information DK. The device program PD is executed by the execution device 36 to cause the execution device 36 to store and delete the key information DK. The key information DK indicates digital keys.

The device program PD includes, for example, a device application and a digital key framework. The device application is used to store and delete the key information DK. The digital key framework is a program that provides functions of pairing of devices 30 and sharing of digital keys by using an API built into the OS. The execution device 36 executes the device program PD to execute processes relating to storage and deletion of the key information DK. The execution device 36 is processing circuitry including one or more processors that execute various processes according to computer programs (software).

The devices 30 include a device 30 that does not store the key information DK. Examples of the device 30 that does not store the key information DK include devices 41, 42, and 43. The devices 30 include a device 30 that does not store the device program PD. Examples of the device 30 that does not store the device program PD include the devices 41, 42, and 43.

The devices 30 include multiple devices 40BO that belong to the owner of a vehicle 20, and multiple shareable devices 50. The owner device 40 is one of the devices 40BO belonging to the owner of a vehicle 20. The owner device 40 stores owner key information DKO as the key information DK. The owner key information DKO indicates an owner key KO. The owner key KO is a digital key. Only one owner key KO is allowed to be registered with one vehicle 20. Thus, only one owner key KO is assigned to one vehicle 20.

The devices 40BO that belong to the owner of a vehicle 20 are not limited to the owner device 40. For example, the device 41 illustrated in Fig. 1 is a device 40BO that belongs to the owner of the vehicle 20. The devices 40BO that belong to the owner of a vehicle 20 are information processing terminals owned by the owner of the vehicle 20. Examples of the information processing terminal include a personal computer, a smartphone, a tablet terminal, and a wearable terminal. Examples of the wearable terminal include a ring-type terminal worn on the wrist and a necklace-type terminal worn on the neck. Among the shareable devices 50, the shareable device 50 owned by the owner of a vehicle 20 is also a device 40BO that belongs to the owner of the vehicle 20. The number of devices 40BO that belong to the owner of a vehicle 20 other than the owner device 40 is not limited to one.

The devices 40BO that belong to the owner of a vehicle 20 do not have to store the owner key information DKO. For example, the device 41 does not store the owner key information DKO. The devices 40BO that belong to the owner of a vehicle 20 do not have to store the key information DK. For example, the device 41 does not store the key information DK. The devices 40BO that belong to the owner of a vehicle 20 do not have to store the device program PD. For example, the device 41 does not store the device program PD.

The devices 30 include not only personally owned devices, such as smartphones, but also virtual machines constructed on a server 80. Hereinafter, the owner device 40 that is personally owned will be referred to as a mobile device 40M, and the owner device 40 that is a virtual machine will be referred to as a virtual device 40V.

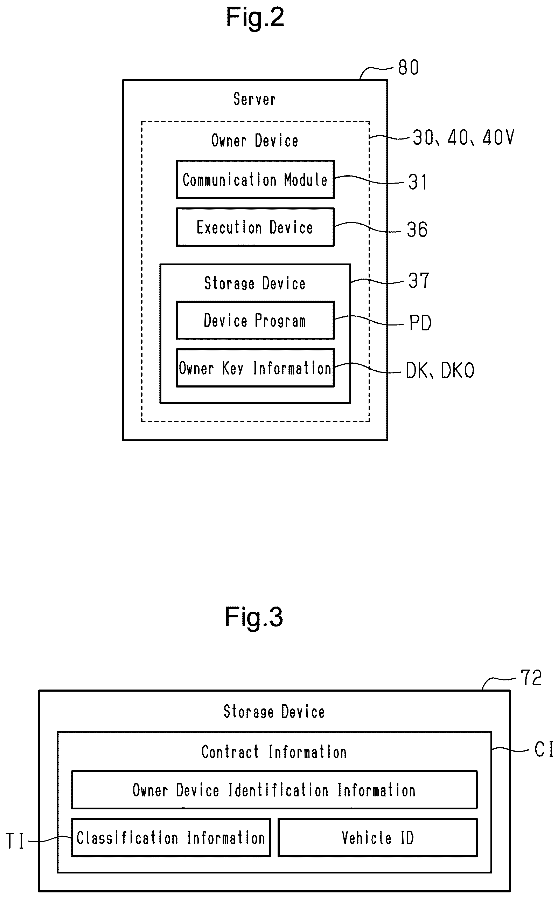

As shown in Fig. 2, the virtual device 40V includes a communication module 31, an execution device 36, and a storage device 37. The communication module 31, the execution device 36, and the storage device 37 of the virtual device 40V may be virtual components that use designated regions of the communication module 31, the execution device 36, and the storage device 37 of the server 80. In the same manner as the storage device 37 of the mobile device 40M, the storage device 37 of the virtual device 40V stores a device program PD and key information DK. The execution device 36 executes the device program PD to execute processes relating to storage and deletion of the key information DK.

The virtual device 40V is a device 40BO that belongs to the owner of a vehicle 20. For example, when the owner of a vehicle 20 is a rental service provider or a sharing service provider, the device 40BO that belongs to the owner of the vehicle 20 may be the virtual device 40V.

As shown in Fig. 3, the management server 70 stores contract information CI in the storage device 72. The contract information CI is stored in the storage device 72 upon completion of the contract for a vehicle 20 by the owner. The contract information CI includes classification information TI, which indicates whether the owner device 40 is the virtual device 40V or the mobile device 40M. The contract information CI includes owner device identification information, which is used to identify the owner device 40. The contract information CI also includes a vehicle ID, which is used to identify the vehicle 20. When the owner device 40 is the virtual device 40V, the owner device identification information is used to identify the virtual device 40V and the server 80 on which the virtual device 40V resides. The owner device identification information includes, for example, IP addresses of the virtual device 40V and the server 80, or authentication information derived from certificates issued by the server 80. When the owner device 40 is the mobile device 40M, the owner device identification information is used to identify the mobile device 40M and the device server 60 to which the mobile device 40M belongs. The owner device identification information includes, for example, the IP addresses of the mobile device 40M and the device server 60, or a serial code of the mobile device 40M, which serves as a personal device.

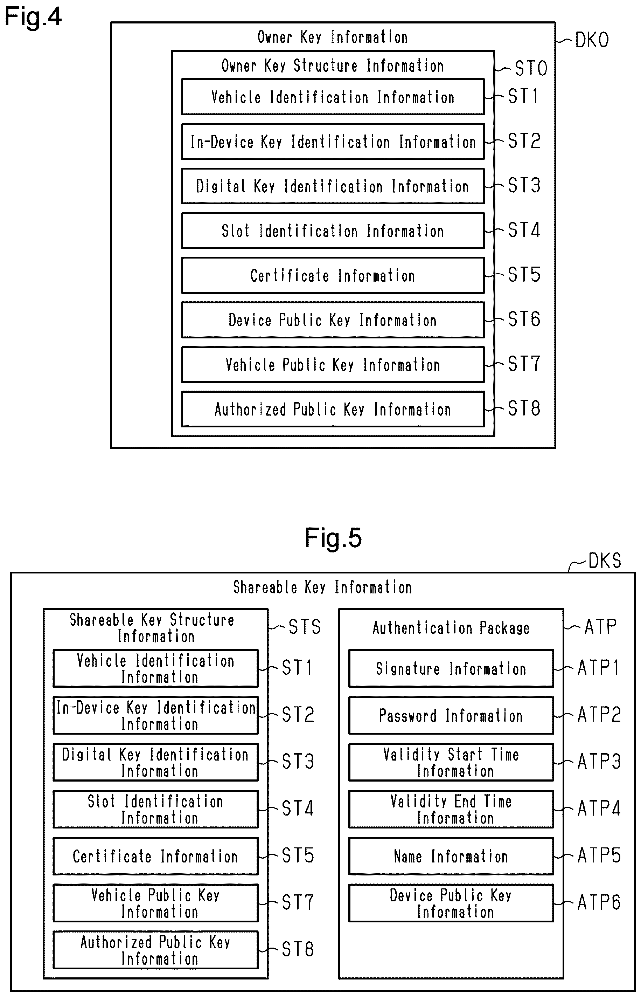

As shown in Fig. 4, the owner key information DKO includes owner key structure information STO. The owner key structure information STO includes vehicle identification information ST1, in-device key identification information ST2, digital key identification information ST3, and slot identification information ST4. The owner key structure information STO further includes certificate information ST5, device public key information ST6, vehicle public key information ST7, and authorized public key information ST8.

The vehicle identification information ST1 is used to identify a vehicle 20 to which digital keys are assigned. For example, the vehicle identification information ST1 is the ID of a vehicle 20.

The in-device key identification information ST2 is used to manage the digital keys in a device 30. The in-device key identification information ST2 is used to identify the digital keys in the application of a device 30.

The digital key identification information ST3 is used to manage the digital keys in the management server 70. The slot identification information ST4 is used to identify digital keys locally within the devices 30. The digital key identification information ST3 includes the classification information TI.

The certificate information ST5 indicates a certificate used to authenticate a digital key. The device public key information ST6 indicates a device public key PKD, which is the public key of a device 30. The device public key PKD included in the owner key information DKO indicates the public key of the owner device 40. The vehicle public key information ST7 indicates a vehicle public key PKV, which is the public key of a vehicle 20. The authorized public key information ST8 indicates the vehicle public key PKV that has been permitted.

As shown in Fig. 1, the shareable device 50 stores shareable key information DKS as the key information DK. The sharable key information KS indicates a shareable key KS. The shareable key KS is a digital key. Multiple shareable keys KS are allowed to be registered with a single vehicle 20. That is, multiple shareable keys KS may be associated with a single vehicle 20.

The shareable devices 50 include friend devices 51 and guest devices 52. A friend device 51 stores, as the shareable key information DKS, friend key information DKF indicating a friend key KF. A guest device 52 stores, as the shareable key information DKS, guest key information DKN indicating a guest key KN. That is, the types of the shareable keys KS include the friend key KF and the guest key KN. The friend key KF is a shareable key KS that has been registered based on a registration request D21 that is directly issued from the owner device 40, which will be described later. The guest key KN is a shareable key KS that has been registered based on a registration request D31 from a friend device 51, which will be described later. The guest key KN is a shareable key KS registered based on a registration request from a shareable device 50, which is a device 30 different from the owner device 40.

When a digital key is registered, the digital key is enabled. When the digital key is registered, the vehicle 20 stores the authentication information AT, and the devices 30 store the key information DK. The authentication information AT relates to digital keys. The key information DK relates to digital keys.

A friend device 51 is one of multiple devices 51BF that belong to the user of the friend device 51. The devices 51BF that belong to the user of the friend device 51 are not limited to the friend device 51. For example, the device 42 shown in Fig. 1 is a device 51BF that belongs to the user of the friend device 51. The device 51BF that belongs to the user of the friend device 51 is an information processing terminal owned by the user of the friend device 51. The device 51BF that belongs to the user of the friend device 51 does not have to store the friend key information DKF. For example, the device 42 does not store the friend key information DKF. The device 51BF that belongs to the user of the friend device 51 does not have to store the key information DK. For example, the device 42 does not store the key information DK. The device 51BF that belongs to the user of the friend device 51 does not have to store the device program PD. For example, the device 42 does not store the device program PD. The number of devices 51BF that belong to the user of the friend device 51, other than the friend device 51, is not limited to one.

A guest device 52 is one of multiple devices 52BNF that belongs to the user of the guest device 52. The devices 52BNF that belong to the user of the guest device 52 are not limited to the guest device 52. For example, the device 43 shown in Fig. 1 is a device 52BNF that belongs to the user of the guest device 52. The device 52BNF that belongs to the user of the guest device 52 is an information processing terminal owned by the user of the guest device 52. The device 52BNF that belongs to the user of the guest device 52 does not have to store the guest key information DKN. For example, the device 43 does not store the guest key information DKN. The device 52BNF that belongs to the user of the guest device 52 does not have to store the key information DK. For example, the device 43 does not store the key information DK. The device 52BNF that belongs to the user of the guest device 52 does not have to store the device program PD. For example, the device 43 does not store the device program PD. The number of devices 52BNF that belong to the user of the guest device 52, other than the guest device 52, is not limited to one.

As shown in Fig. 5, the shareable key information DKS includes shareable key structure information STS and an authentication package ATP. The shareable key structure information STS includes vehicle identification information ST1, in-device key identification information ST2, digital key identification information ST3, and slot identification information ST4. The shareable key structure information STS further includes certificate information ST5, vehicle public key information ST7, and authorized public key information ST8. In other words, the shareable key structure information STS includes the information contained in the owner key structure information STO, excluding the device public key information ST6.

The authentication package ATP includes signature information ATP1, password information ATP2, validity start time information ATP3, validity end time information ATP4, name information ATP5, and device public key information ATP6.

The signature information ATP1 indicates that the shareable device 50 is an authorized entity for receiving a digital key. For example, in the shareable key information DKS stored in the friend devices 51, the signature information ATP1 indicates a signature of the owner devices 40. That is, the signature information ATP1 indicates that the owner device 40 has signed the device public key PKD of the friend device 51 indicated by the device public key information ATP6. In the shareable key information DKS stored in the guest device 52, for example, the signature information ATP1 indicates a signature of the friend device 51. That is, the signature information ATP1 indicates that the friend device 51 has signed the device public key PKD of the guest device 52 that is indicated by the device public key information ATP6.

The password information ATP2 indicates a pairing password PAS. The pairing password PAS is used to establish a secure channel during the pairing between a vehicle 20 and the owner device 40. The validity start time information ATP3 indicates the earliest date and time at which the shareable key KS becomes valid for use. The validity end time information ATP4 indicates the latest date and time until which the shareable key KS remains valid for use. The name information ATP5 indicates a name for identifying the shareable key KS. For example, in response to an operation performed on the owner device 40, the name information ATP5 is set for each shareable device 50 as a name by which the shareable key KS is identifiable.

Referring to Fig. 1, the device server 60 relays communication between a device 30 and the management server 70. Fig. 1 shows only one device server 60. However, a separate device server 60 may be provided for each type of device 30. That is, the device server 60 used for communication with a first type of device 30 may differ from the device server 60 used for communication with a second type of device 30. For example, the type may refer to the model of a device 30, and a separate device server 60 may be provided for each model of a device 30. Alternatively, for example, the type may refer to the communication line used by a device 30, and a separate device server 60 may be provided for each type of communication line used by the device 30.

Each device server 60 relays communication between the corresponding device 30 and the management server 70. The devices 30 of different types are each configured to communicate with the management server 70 via the corresponding device server 60.

### Management Server 70

The management server 70 is configured to manage multiple digital keys. The management server 70 is configured to communicate with a vehicle 20 and multiple devices 30. The management server 70 includes an execution device 71, a storage device 72, and a communication module 73. The execution device 71 is processing circuitry including one or more processors that execute various processes according to computer programs (software). The communication module 73 communicates with the device server 60 via a wireless communication line. The communication module 73 is configured to wirelessly communicate with the communication module 21 of the vehicle 20.

The storage device 72 stores a server program PS, a notification program PM, and a database DB.

The server program PS causes the execution device 71 to register digital keys in the database DB and delete digital keys from the database DB.

The notification program PM causes the execution device 71 to transmit a notification.

The database DB includes information in which, for each of the digital keys, the corresponding vehicle 20 is associated with the registered devices 30. The database DB includes data DA that is partitioned per vehicle 20. When digital keys are registered, the management server 70 stores, as the data DA, information indicating the devices 30 that store the key information DK indicating the digital keys. The management server 70 manages the digital keys by storing, in the database DB, information relating to the digital keys as the data DA.

### Data DA

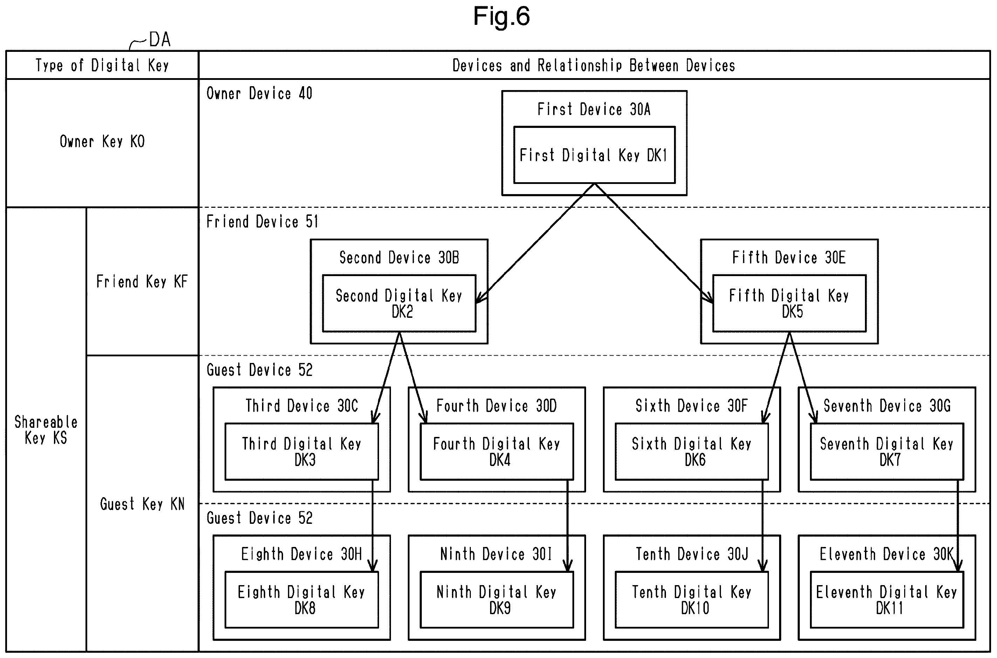

As shown in Fig. 6, the data DA of one vehicle 20 includes information relating to the types of digital keys registered with that vehicle 20, the registered devices 30, and the relationship between the registered devices 30. The digital keys are categorized into multiple hierarchical levels according to their respective types. From highest to lowest in the hierarchy, the digital keys are ordered as an owner key KO, a friend key KF, and a guest key KN. Digital keys with higher hierarchy levels are assigned greater permission levels.

Permission includes, for example, the number of shareable keys KS that may be requested for registration and the range of control over a vehicle 20 enabled through authentication of a digital key. Digital keys at higher hierarchical levels are permitted to request registration of a greater number of shareable keys KS. Specifically, for example, the number of friend keys KF that the owner device 40 is permitted to request for registration is greater than the number of guest keys KN that a friend device 51 is permitted to request for registration.

Further, for example, the higher the hierarchy level of a digital key, the wider the range of control of a vehicle 20. The range of control of a vehicle 20 refers to the set of controllable functions, such as engine start control of the vehicle 20, power-on control of the vehicle 20, and door unlocking and locking control of the vehicle 20. For example, when the range of control of a vehicle 20 includes all three of the above functions, the range is broader than when it includes only door unlocking and locking control of the vehicle 20. Specifically, the control scope the range of control of a vehicle 20 enabled by a friend key KF includes all three functions described above, whereas the range of control of the vehicle 20 enabled by a guest key KN is limited to only the door unlocking and locking control of the vehicle 20.

The following describes a state in which digital keys are registered with eleven devices 30 for one vehicle 20. The eleven devices 30 include a first device 30A, a second device 30B, a third device 30C, a fourth device 30D, a fifth device 30E, a sixth device 30F, a seventh device 30G, an eighth device 30H, a ninth device 301, a tenth device 30J, and an eleventh device 30K.

The digital key registered with the first device 30A is referred to as a first digital key DK1. The digital key registered with the second device 30B is referred to as a second digital key DK2. The digital key registered with the third device 30C is referred to as a third digital key DK3. The digital key registered with the fourth device 30D is referred to as a fourth digital key DK4. The digital key registered with the fifth device 30E is referred to as a fifth digital key DK5. The digital key registered with the sixth device 30F is referred to as a sixth digital key DK6. The digital key registered with the seventh device 30G is referred to as a seventh digital key DK7. The digital key registered with the eighth device 30H is referred to as an eighth digital key DK8. The digital key registered with the ninth device 301 is referred to as a ninth digital key DK9. The digital key registered with the tenth device 30J is referred to as a tenth digital key DK10. The digital key registered with the eleventh device 30K is referred to as an eleventh digital key DK11.

The device 30 with which the owner key KO is registered as a digital key is the first device 30A. In other words, the first device 30A is the owner device 40. That is, the first digital key DK1 is the owner key KO.

The devices 30 with which shareable keys KS are registered as digital keys are the second device 30B, the third device 30C, the fourth device 30D, the fifth device 30E, the sixth device 30F, the seventh device 30G, the eighth device 30H, the ninth device 301, the tenth device 30J, and the eleventh device 30K. That is, the second device 30B, the third device 30C, the fourth device 30D, the fifth device 30E, the sixth device 30F, the seventh device 30G, the eighth device 30H, the ninth device 30I, the tenth device 30J, and the eleventh device 30K are shareable devices 50. That is, the second digital key DK2, the third digital key DK3, the fourth digital key DK4, the fifth digital key DK5, the sixth digital key DK6, the seventh digital key DK7, the eighth digital key DK8, the ninth digital key DK9, the tenth digital key DK10, and the eleventh digital key DK11 are all shareable keys KS.

Specifically, the devices 30 with which friend keys KF are registered as shareable keys KS are the second device 30B and the fifth device 30E. In other words, the second device 30B and the fifth device 30E are friend devices 51.

The devices 30 with which guest keys KN are registered as shareable keys KS are the third device 30C, the fourth device 30D, the sixth device 30F, the seventh device 30G, the eighth device 30H, the ninth device 30I, the tenth device 30J, and the eleventh device 30K. That is, the third device 30C, the fourth device 30D, the sixth device 30F, the seventh device 30G, the eighth device 30H, the ninth device 30I, the tenth device 30J, and the eleventh device 30K are guest devices 52.

### Direct Hierarchical Relationships

The relationship between the registered devices 30 included in the data DA will now be described. The relationship between the second device 30B and the first device 30A is such that the friend key KF has been registered with the second device 30B in response to a registration request from the first device 30A. In other words, the second digital key DK2 is registered based on the first digital key DK1. In this case, the second digital key DK2 is one generation downstream from, and directly hierarchically related to, the first digital key DK1.

The relationship between the fifth device 30E and the first device 30A is such that the friend key KF has been registered with the fifth device 30E in response to a registration request from the first device 30A. In other words, the fifth digital key DK5 is registered based on the first digital key DK1. In this case, the fifth digital key DK5 is one generation downstream from, and directly hierarchically related to, the first digital key DK1.

The relationship between the third device 30C and the second device 30B is such that the guest key KN has been registered with the third device 30C in response to a registration request from the second device 30B. In other words, the third digital key DK3 is registered based on the second digital key DK2. In this case, the third digital key DK3 is one generation downstream from, and directly hierarchically related to, the second digital key DK2. The third digital key DK3 is two generations downstream from, and directly hierarchically related to, the first digital key DK1.

The relationship between the fourth device 30D and the second device 30B is such that the guest key KN has been registered with the fourth device 30D in response to a registration request from the second device 30B. In other words, the fourth digital key DK4 is registered based on the second digital key DK2. In this case, the fourth digital key DK4 is one generation downstream from, and directly hierarchically related to, the second digital key DK2. The fourth digital key DK4 is two generations downstream from, and directly hierarchically related to, the first digital key DK1.

The relationship between the sixth device 30F and the fifth device 30E is such that the guest key KN has been registered with the sixth device 30F in response to a registration request from the fifth device 30E. In other words, the sixth digital key DK6 is registered based on the fifth digital key DK5. In this case, the sixth digital key DK6 is one generation downstream from, and directly hierarchically related to, the fifth digital key DK5. The sixth digital key DK6 is two generations downstream from, and directly hierarchically related to, the first digital key DK1.

The relationship between the seventh device 30G and the fifth device 30E is such that the guest key KN has been registered with the seventh device 30G in response to a registration request from the fifth device 30E. In other words, the seventh digital key DK7 is registered based on the fifth digital key DK5. In this case, the seventh digital key DK7 is one generation downstream from, and directly hierarchically related to, the fifth digital key DK5. The seventh digital key DK7 is two generations downstream from, and directly hierarchically related to, the first digital key DK1.

The relationship between the eighth device 30H and the third device 30C is such that the guest key KN has been registered with the eighth device 30H in response to a registration request from the third device 30C. That is, the eighth digital key DK8 is registered based on the third digital key DK3. In this case, the eighth digital key DK8 is one generation downstream from, and directly hierarchically related to, the third digital key DK3. The eighth digital key DK8 is two generations downstream from, and directly hierarchically related to, the second digital key DK2. The eighth digital key DK8 is three generations downstream from, and directly hierarchically related to, the first digital key DK1.

The relationship between the ninth device 30I and the fourth device 30D is such that the guest key KN has been registered with the ninth device 30I in response to a registration request from the fourth device 30D. That is, the ninth digital key DK9 is registered based on the fourth digital key DK4. In this case, the ninth digital key DK9 is one generation downstream from, and directly hierarchically related to, the fourth digital key DK4. The ninth digital key DK9 is two generations downstream from, and directly hierarchically related to, the second digital key DK2. The ninth digital key DK9 is three generations downstream from, and directly hierarchically related to, the first digital key DK1.

The relationship between the tenth device 30J and the sixth device 30F is such that the guest key KN has been registered with the tenth device 30J in response to a registration request from the sixth device 30F. That is, the tenth digital key DK10 is registered based on the sixth digital key DK6. In this case, the tenth digital key DK10 is one generation downstream from, and directly hierarchically related to, the sixth digital key DK6. The tenth digital key DK10 is two generations downstream from, and directly hierarchically related to, the fifth digital key DK5. The tenth digital key DK10 is three generations downstream from, and directly hierarchically related to, the first digital key DK1.

The relationship between the eleventh device 30K and the seventh device 30G is such that the guest key KN has been registered with the eleventh device 30K based on a registration request from the seventh device 30G. That is, the eleventh digital key DK11 is registered based on the seventh digital key DK7. In this case, the eleventh digital key DK11 is one generation downstream from, and directly hierarchically related to, the seventh digital key DK7. The eleventh digital key DK11 is two generations downstream from, and directly hierarchically related to, the fifth digital key DK5. The eleventh digital key DK11 is three generations downstream from, and directly hierarchically related to, the first digital key DK1.

In this manner, the data DA includes information relating to the devices 30 with which digital keys have been registered. In the data DA, each registered device 30 is associated with information indicating the device 30 that initiated the registration request of that registered device 30. The data DA also includes information indicating the digital key on which the registration of each digital key is based.

The digital key registered based on a request from the first digital key DK1, and any digital key that is one or more generations downstream from that digital key, are all digital keys that are directly hierarchically related to the first digital key DK1. That is, in the relationship diagram shown in Fig. 6, each digital key other than the first digital key DK1 is one or more generations downstream from, and directly hierarchically related to, the first digital key DK1.

The digital key registered based on a request from the second digital key DK2, and any digital key that is one or more generations downstream from that digital key, are all digital keys that are directly hierarchically related to the second digital key DK2. That is, in the relationship diagram shown in Fig. 6, the third digital key DK3, the fourth digital key DK4, the eighth digital key DK8, and the ninth digital key DK9 are one or more generations downstream from, and directly hierarchically related to, the second digital key DK2.

### Higher-Level and Lower-Level Digital Keys

The first digital key DK1 is a higher-level digital key than a digital key registered based on a request from the first digital key DK1, and any digital key one or more generations downstream from that registered digital key. That is, in the data DA shown in Fig. 6, the first digital key DK1 has a higher level than the other digital keys.

A digital key registered based on a request from the first digital key DK1 is a higher-level digital key than any digital key that is one or more generations downstream from that digital key. That is, in the data DA shown in Fig. 6, the second digital key DK2 and the fifth digital key DK5 are higher-level digital keys than a digital key registered based on a request from the second digital key DK2 or the fifth digital key DK5, and any digital key one or more generations downstream from that registered digital key. In other words, the second digital key DK2 and the fifth digital key DK5 have a higher level than the third digital key DK3, the fourth digital key DK4, the sixth digital key DK6, the seventh digital key DK7, the eighth digital key DK8, the ninth digital key DK9, the tenth digital key DK10, and the eleventh digital key DK11.

A digital key one generation downstream from a digital key registered based on a request from the first digital key DK1 has a higher level than any digital key two or more generations downstream from the digital key registered based on the request from the first digital key DK1. That is, in the data DA shown in Fig. 6, the third digital key DK3, the fourth digital key DK4, the sixth digital key DK6, and the seventh digital key DK7 have a higher level than any digital key registered based on a request from the third digital key DK3, the fourth digital key DK4, the sixth digital key DK6, or the seventh digital key DK7. In other words, the third digital key DK3, the fourth digital key DK4, the sixth digital key DK6, and the seventh digital key DK7 have a higher level than the eighth digital key DK8, the ninth digital key DK9, the tenth digital key DK10, and the eleventh digital key DK11.

For example, in the data DA shown in Fig. 6, the digital keys that are directly hierarchically related to the third digital key DK3 are the first digital key DK1, the second digital key DK2, and the eighth digital key DK8. For example, in the data DA shown in Fig. 6, the higher-level digital keys than the third digital key DK3 are the first digital key DK1, the second digital key DK2, and the fifth digital key DK5. For example, in the data DA shown in Fig. 6, the higher-level digital keys that are directly hierarchically related to the third digital key DK3 are the first digital key DK1 and the second digital key DK2.

### Registration of Digital Key

A series of registration processes executed by the management system 10 to register a digital key will now be described. The registration of a digital key includes the registration of an owner key KO, the registration of a friend key KF, and the registration of a guest key KN. First, a series of processes in which the owner key KO is registered with and activated in a personal device will be described. Next, a series of processes in which the owner key KO is registered with and activated in a virtual machine will be described. Among the devices 30 that do not store the key information DK indicating the owner key KO, the device 30 configured as the owner device 40 is referred to as the first device 30A. In registering the owner key KO, it is assumed that a required application is installed on the first device 30A.

In the following description, the processes executed by the execution device 27 of a vehicle 20 are described as processes executed by the vehicle 20. The processes executed by the execution device 36 of a device 30 will be described as processes executed by the device 30. The processes executed by the execution device 71 of the management server 70 will be described as processes executed by the management server 70.

### Series of Processes for Registering Owner Key KO to Personal Device

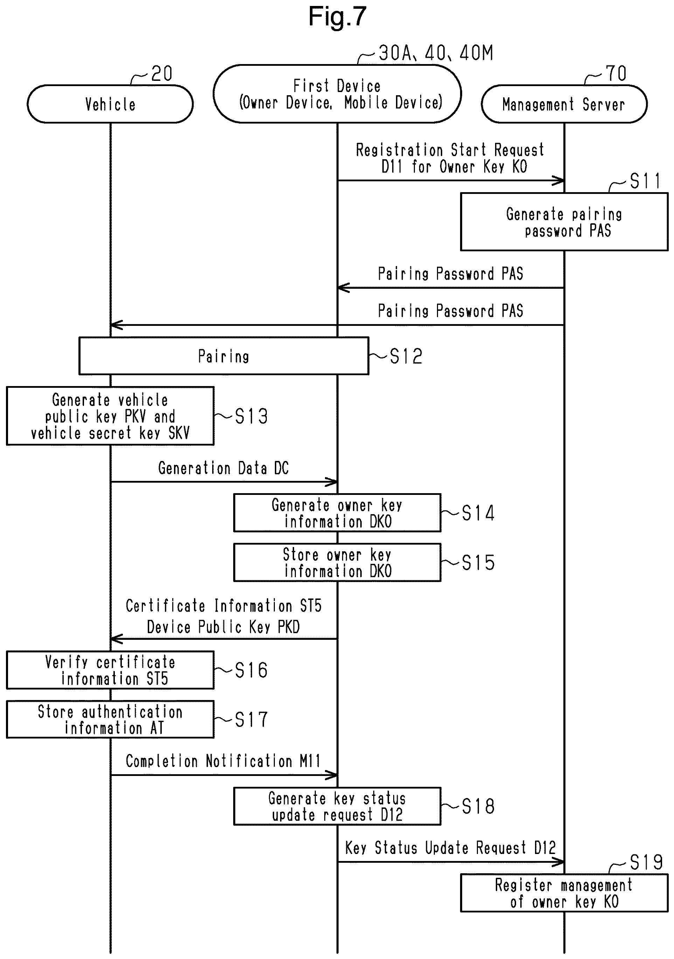

The following describes the series of processes illustrated in Fig. 7 in which the management system 10 registers the owner key KO with the first device 30A when the first device 30A is a personal device.

The management system 10 causes the first device 30A, which is a personal device, to store the owner key information DKO, which is the key information DK indicating the owner key KO. The management system 10 causes the vehicle 20 to store the authentication information AT for authenticating the owner key KO. Accordingly, the first device 30A is configured as the mobile device 40M, which serves as the owner device 40. The mobile device 40M activates the owner key KO by performing short-range wireless communication with the vehicle 20.

As shown in Fig. 7, when the management server 70 receives a registration start request D11 for the owner key KO from the first device 30A, the registration process for the owner key KO is started. The registration start request D11 includes information indicating that the first device 30A with which the owner key KO is registered is a personal device. For example, the registration start request D11 includes the owner device identification information.

In step S11, the management server 70 generates a pairing password PAS, which is used for pairing between the first device 30A and the vehicle 20. The management server 70 transmits information indicating the pairing password PAS to the first device 30A. The management server 70 transmits information indicating the pairing password PAS to the vehicle 20.

After receiving the pairing password PAS, the vehicle 20 is set to a pairing mode via the HMI 22. The vehicle 20 then proceeds to step S12 while remaining ready to receive the password from the first device 30A.

In step S12, the vehicle 20 performs pairing with the first device 30A. Upon the paring, the vehicle 20 establishes a secure channel for data transmission with the first device 30A. The pairing is performed using the pairing password PAS transmitted from the management server 70 to the vehicle 20 and the first device 30A. Upon completion of the paring, the vehicle 20 proceeds to step S13.

In step S13, the vehicle 20 generates a vehicle public key PKV, which is a public key of the vehicle 20, and a vehicle secret key SKV, which is a secret key of the vehicle 20. Then, the vehicle 20 transmits generation data DC for generating the owner key KO to the first device 30A through the secure channel. The generation data DC includes the vehicle identification information ST1 and the vehicle public key information ST7, which indicates the vehicle public key PKV. Upon receiving the generation data DC, the first device 30A proceeds to step S14.

In step S14, the first device 30A generates the owner key information DKO indicating the owner key KO. Then, the first device 30A proceeds to step S15.

In step S15, the first device 30A stores the owner key information DKO. Subsequently, the first device 30A transmits the certificate information ST5, which relates to the owner key KO, and the device public key information ST6, which indicates the device public key PKD, to the vehicle 20.

Upon receiving the certificate information ST5 and the device public key information ST6, the vehicle 20 executes the process of step S16. In step S16, the vehicle 20 verifies the certificate information ST5. Upon completion of the verification of the certificate information ST5, the vehicle 20 proceeds to step S17.

In step S17, the vehicle 20 stores the device public key information ST6, which indicates the device public key PKD, in the storage device 28 as the authentication information AT. Subsequently, the vehicle 20 transmits a completion notification M11 to the first device 30A, indicating that the storage of the authentication information AT has been completed.

Upon receiving the completion notification M11, the first device 30A performs the process of step S18. In step S18, the first device 30A generates a key status update request D12 for the owner key KO. The key status update request D12 is a signal that requests the management server 70 to update the database DB. The first device 30A transmits the key status update request D12 for the owner key KO via the device server 60 to the management server 70.

Upon receiving the key status update request D12, the management server 70 executes the process of step S19. In step S19, the management server 70 registers management of the owner key KO. Specifically, the management server 70 stores, as the data DA of the vehicle 20 in the database DB, information indicating that the device 30 with which the owner key KO is registered is the first device 30A (i.e., the mobile device 40M). Thus, the management system 10 terminates the series of processes for registering the owner key KO of the vehicle 20 with the first device 30A (i.e., personal device). The process from the pairing in step S12 to the registration management of the owner key KO in step S19 is an activation process executed to register the owner key KO.

### Series of Processes for Registering Owner Key KO to Virtual Machine

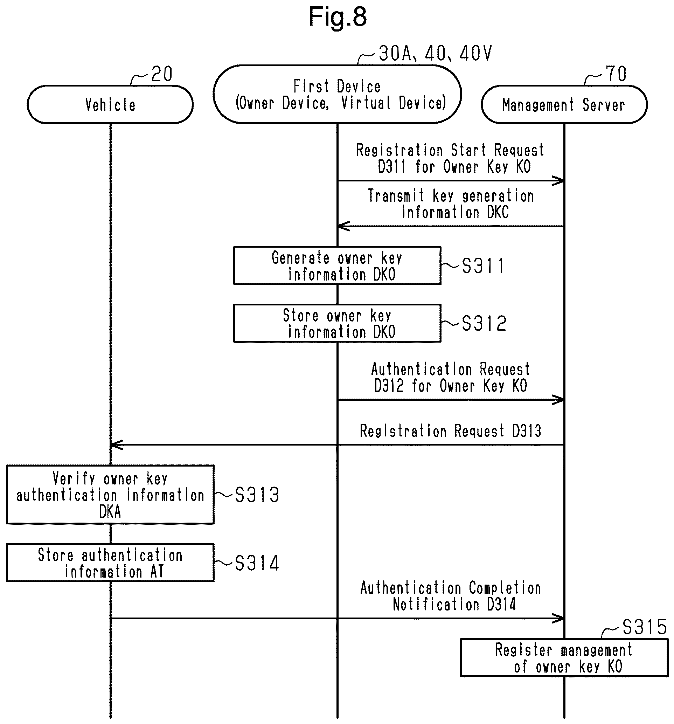

The following describes a series of processes illustrated in Fig. 8 in which the management system 10 registers the owner key KO with the first device 30A when the first device 30A is a virtual machine.

The management system 10 causes the first device 30A, which is a virtual machine, to store the owner key information DKO, which is the key information DK indicating the owner key KO. The management system 10 causes the vehicle 20 to store the authentication information AT for authenticating the owner key KO. Accordingly, the first device 30A is configured as the virtual device 40V, which serves as the owner device 40. The virtual device 40V activates the owner key KO through wireless communication, without performing short-range wireless communication with the vehicle 20.

As shown in Fig. 8, when the management server 70 receives a registration start request D311 for the owner key KO from the first device 30A, the registration process for the owner key KO is started. The registration start request D311 includes information indicating that the first device 30A with which the owner key KO is registered is a virtual machine. For example, the registration start request D311 includes the owner device identification information.

Upon receiving the registration start request D311, the management server 70 transmits key generation information DKC, which is used to generate the owner key KO, to the virtual device 40V. The key generation information DKC includes information corresponding to the vehicle identification information ST1 and the vehicle public key information ST7, which indicates the vehicle public key PKV. Upon receiving the key generation information DKC, the first device 30A proceeds to step S311.

In step S311, the first device 30A generates the owner key information DKO, which indicates the owner key KO. Next, in step S312, the first device 30A stores the owner key information DKO. Then, the first device 30A transmits, to the management server 70, an authentication request D312 for the owner key KO. The authentication request D312 includes owner key authentication information DKA corresponding to the certificate information ST5, which relates to the owner key KO, and the device public key information ST6, which indicates the device public key PKD.

Upon receiving the authentication request D312, the management server 70 transmits a registration request D313 to the vehicle 20. The registration request D313 includes the owner key authentication information DKA.

Upon receiving the registration request D313, the vehicle 20 performs the process of step S313. In step S313, the vehicle 20 activates equipment required for authentication of the owner key KO using the communication module 21. This equipment includes, for example, the communication module 21 and the digital key ECU provided in the vehicle management device 26. By activating this equipment, the vehicle 20 is enabled to authenticate a digital key using the communication module 21. Then, the vehicle 20 verifies the owner key authentication information DKA. Upon completion of the verification of the information corresponding to the certificate information ST5, which is included in the owner key authentication information DKA, the vehicle 20 proceeds to step S314.

In step S314, the vehicle 20 stores information corresponding to the device public key information ST6, which indicates the device public key PKD, as the authentication information AT. Subsequently, the vehicle 20 uses the communication module 21 to transmit an authentication completion notification D314 to the management server 70. The authentication completion notification D314 indicates that the storage of the authentication information AT has been completed.

Upon receiving the authentication completion notification D314, the management server 70 executes the process of step S315. In step S315, the management server 70 registers management of the owner key KO. Specifically, the management server 70 stores, as the data DA of the vehicle 20 in the database DB, information indicating that the device 30 with which the owner key KO is registered is the first device 30A (i.e., the virtual device 40V). Thus, the management system 10 terminates the series of processes for registering the owner key KO of the vehicle 20 with the first device 30A, which is a virtual machine. The process from the verification of the owner key authentication information DKA in step S313 to the registration management of the owner key KO in step S315 is an activation process executed to register the owner key KO.

### Registration of Friend Key

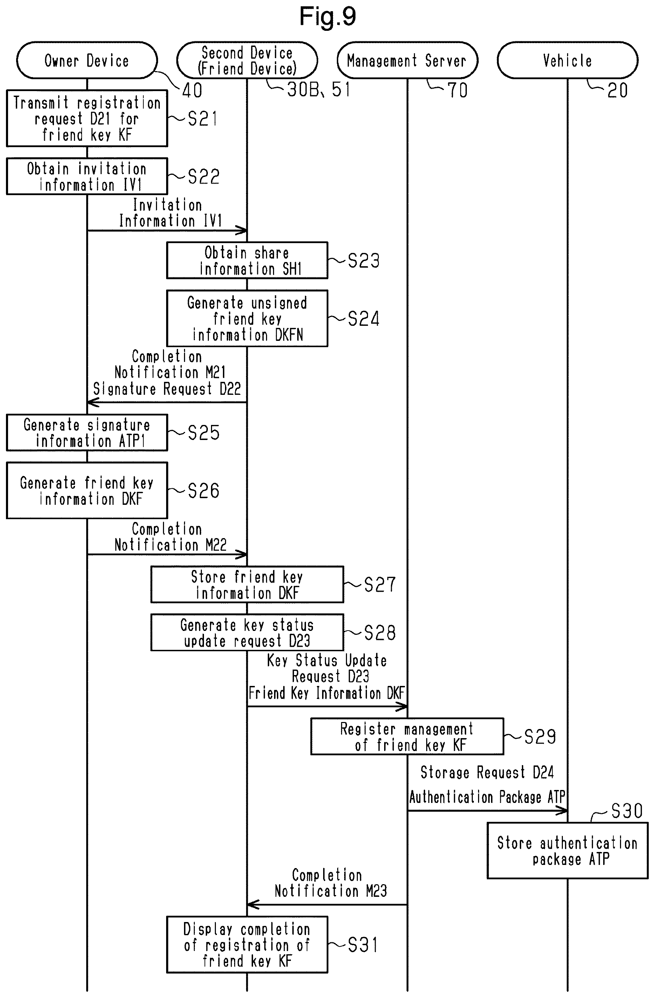

As shown in Fig. 9, the management system 10 executes a series of registration processes to register a friend key KF. The following describes an example of registering the friend key KF to the second device 30B, which does not store the friend key information DKF, through the series of processes.

Upon receiving an operation to request the registration of the friend key KF, the owner device 40 executes the process of step S21. In step S21, the owner device 40 transmits, to a relay server (not shown), a registration request D21 for the friend key KF. Then, the owner device 40 proceeds to step S22.

In step S22, the owner device 40 acquires invitation information IV1, which is used to share a digital key, from the relay server. The invitation information IV1 includes, for example, a uniform resource locator (URL) link. The URL link contains share information SH1 necessary to share the digital key. The owner device 40 transmits the invitation information IV1 to the second device 30B.

Upon receiving the invitation information IV1, the second device 30B executes the process of step S23. In step S23, the second device 30B acquires the share information SH1 based on the invitation information IV1. Specifically, the second device 30B downloads the share information SH1 from the URL link.

The share information SH1 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the owner device 40. Then, the second device 30B proceeds to step S24.

In step S24, the second device 30B generates unsigned friend key information DKFN by using the share information SH1. The unsigned friend key information DKFN is friend key information DKF that does not have the signature information ATP1. The second device 30B uploads the generated unsigned friend key information DKFN to the URL link included in the invitation information IV1. Then, the second device 30B transmits a completion notification M21 to the owner device 40, indicating that the upload of the generated unsigned friend key information DKFN to the URL link has been completed. The second device 30B also transmits a signature request D22 to the owner device 40.

The owner device 40 receives the completion notification M21 and the signature request D22 from the second device 30B. Upon receiving the completion notification M21, the owner device 40 obtains the unsigned friend key information DKFN. Upon receiving the signature request D22, the owner device 40 executes the process of step S25.

In step S25, the owner device 40 generates the signature information ATP1. Specifically, the owner device 40 presents the HMI 32 with the unsigned friend key information DKFN that has been obtained, and accepts an operation indicating that the user of the owner device 40 has agreed to the registration of the friend key KF. Upon receiving the operation performed by the user, the owner device 40 generates the signature information ATP1 based on that operation. Then, the owner device 40 proceeds to step S26.

In step S26, the owner device 40 adds the signature information ATP1 to the unsigned friend key information DKFN, thereby generating the friend key information DKF. The owner device 40 uploads the generated friend key information DKF to the URL link included in the invitation information IV1. Then, the owner device 40 transmits a completion notification M22 to the second device 30B, indicating that the upload of the generated friend key information DKF to the URL link has been completed.

Upon receiving the completion notification M22, the second device 30B performs the process of step S27. In step S27, the second device 30B downloads and stores the friend key information DKF. Thus, the second device 30B is configured as a friend device 51. Subsequently, the second device 30B proceeds to step S28.

In step S28, the second device 30B generates a key status update request D23 for the friend key KF. The second device 30B transmits, to the management server 70, the friend key information DKF and the key status update request D23 for the friend key KF.

Upon receiving the key status update request D23 for the friend key KF, the management server 70 executes the process of step S29. In step S29, the management server 70 registers management of the friend key KF.

Specifically, the management server 70 checks whether the friend key KF, which is the subject of the key status update request D23, is not listed in a revocation list. The revocation list indicates shareable keys KS, including friend keys KF and guest keys KN, for which deletion requests have already been received. When the above-described friend key KF is listed in the revocation list, the management server 70 transmits a notification to the second device 30B, indicating that it cannot respond to the key status update request D23.

When the friend key KF, which is the subject of the key status update request D23, is not listed in the revocation list, the management server 70 registers the information relating to the friend key KF in the database DB. The management server 70 stores, in the database DB, the friend key information DKF of the friend key KF, which is the subject of the key status update request D23. The management server 70 stores, as the data DA in the database DB, information indicating that the device 30 configured as the friend device 51 is the second device 30B. The management server 70 stores the information indicating the relationship between the second device 30B and the owner device 40 with reference to the obtained friend key information DKF. Specifically, the management server 70 stores information indicating that the second device 30B is the device 30 having the friend key KF registered in response to the registration request D21 from the owner device 40.

Subsequently, the management server 70 transmits the authentication package ATP, which is part of the friend key information DKF, along with a storage request D24, which requests the storage of the authentication package ATP, to the vehicle 20. That is, the management server 70 transmits the device public key information ST6, which indicates the device public key PKD of the friend device 51, to the vehicle 20. The management server 70 notifies the vehicle 20 that the device public key PKD has been signed by the owner device 40.

Upon receiving the storage request D24 and the authentication package ATP from the management server 70, the vehicle 20 executes the process of step S30. In step S30, the vehicle 20 stores the received authentication package ATP as the authentication information AT for authenticating the friend key KF.

After completing the registration management, the management server 70 transmits, to the second device 30B, a completion notification M23 for the key status update.

Upon receiving the completion notification M23 of the key status update, the second device 30B executes the process of step S31. In the process of step S31, the second device 30B presents the HMI 32 with information indicating that registration of the friend key KF has been completed. For example, the second device 30B displays, on the HMI 32, an image indicating that the registration of the friend key KF has been completed. As a result, the management system 10 terminates the series of processes for registering the friend key KF.

### Registration of Guest Key

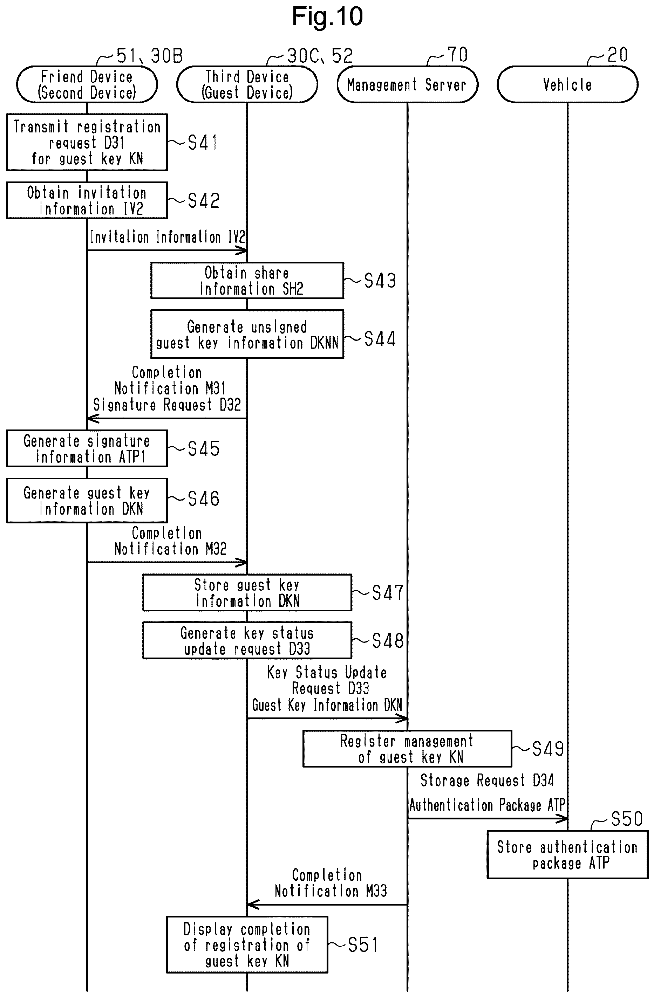

As shown in Fig. 10, the management system 10 executes a series of registration processes in order to register a guest key KN. The following describes an example of registering the guest key KN with the third device 30C, which does not store the guest key information DKN.

Upon receiving an operation to request the registration of the guest key KN, the friend device 51 executes the process of step S41. In step S41, the friend device 51 transmits, to the relay server (not shown), a registration request D31 for the guest key KN. Then, the friend device 51 proceeds to step S42.

In step S42, the friend device 51 obtains invitation information IV2, which is used to share a digital key, from the relay server. The invitation information IV2 includes, for example, a URL link. The URL link contains share information SH2 necessary to share the digital key. The friend device 51 transmits the invitation information IV2 to the third device 30C.

Upon receiving the invitation information IV2, the third device 30C executes the process of step S43. In step S43, the third device 30C obtains the share information SH2 based on the invitation information IV2. Specifically, the second device 30B downloads the share information SH2 through the URL link.

The share information SH2 includes, for example, the shareable key structure information STS, the password information ATP2, the validity start time information ATP3, the validity end time information ATP4, and the name information ATP5. The validity start time information ATP3, the validity end time information ATP4, and the name information ATP5 are configured by the friend device 51. Then, the third device 30C proceeds to step S44.

In step S44, the third device 30C generates unsigned guest key information DKNN using the share information SH2. The unsigned guest key information DKNN is guest key information DKN that does not have the signature information ATP1. The third device 30C uploads the generated unsigned guest key information DKNN to the URL link included in the invitation information IV2. Subsequently, the third device 30C transmits a completion notification M31 to the friend device 51, indicating that the upload of the generated unsigned guest key information DKNN to the URL link has been completed. The third device 30C also transmits a signature request D32 to the friend device 51.

The friend device 51 receives the completion notification M31 and the signature request D32 from the third device 30C. Upon receiving the completion notification M31, the friend device 51 obtains the unsigned guest key information DKNN. Upon receiving the signature request D32, the friend device 51 performs the process of step S45.

In step S45, the friend device 51 generates the signature information ATP1. Specifically, the friend device 51 presents the HMI 32 with the unsigned guest key information DKNN that has been obtained, and accepts an operation indicating that the user of the friend device 51 has agreed to the registration of the guest key KN. Upon receiving the operation performed by the user, the friend device 51 generates the signature information ATP1 based on that operation. Then, the friend device 51 proceeds to step S46.

In step S46, the friend device 51 adds the signature information ATP1 to the unsigned guest key information DKNN, thereby generating the guest key information DKN. The friend device 51 uploads the generated guest key information DKN to the URL link included in the invitation information IV2. The friend device 51 transmits a completion notification M32 to the third device 30C, indicating that the upload of the generated guest key information DKN to the URL link has been completed.

Upon receiving the completion notification M32, the third device 30C executes the process of step S47. In step S47, the third device 30C downloads and stores the guest key information DKN. As a result, the third device 30C is configured as the guest device 52. Then, the third device 30C proceeds to step S47.

In step S48, the third device 30C generates a key status update request D33 for the guest key KN. The third device 30C transmits, to the management server 70, the guest key information DKN and the key status update request D33 for the guest key KN.

Upon receiving the key status update request D33 for the guest key KN, the management server 70 executes the process of step S49. In step S49, the management server 70 registers management of the guest key KN.

Specifically, the management server 70 checks whether the guest key KN, which is the subject of key status update request D33, is not listed in the revocation list. When the guest key KN is listed in the revocation list, the management server 70 transmits a notification to the third device 30C indicating that it cannot respond to the key status update request D33.

When the guest key KN is not listed in the revocation list, the management server 70 registers the information relating to the guest key KN, which is the subject of the key status update request D33, in the database DB. The management server 70 stores, as the data DA in the database DB, the guest key information DNK of the guest key KN, which is the subject of the key status update request D33. The management server 70 stores, as the data DA in the database DB, information indicating that the device 30 configured as the guest device 52 is the third device 30C. The management server 70 stores information indicating the relationship between the third device 30C and the friend device 51 with reference to the obtained guest key information DKN. Specifically, the management server 70 stores information indicating that the third device 30C is the device 30 having the guest key KN registered in response to the registration request D31 from the friend device 51.

Then, the management server 70 transmits the authentication package ATP included in the guest key information DKN, along with a storage request D34, which requests storage of the authentication package ATP, to the vehicle 20. That is, the management server 70 transmits the device public key information ST6, which indicates the device public key PKD of the guest device 52, to the vehicle 20. The management server 70 notifies the vehicle 20 that the device public key PKD has been signed by the friend device 51.

Then, upon receiving the authentication package ATP and the storage request D34, the vehicle 20 executes the process of step S50. In step S50, the vehicle 20 stores the received authentication package ATP. The authentication package ATP is the authentication information AT for authenticating the guest key KN.

After completing the registration management, the management server 70 transmits, to the second device 30B, a completion notification M33 for the key status update.

Upon receiving the completion notification M33 for the key status update, the second device 30B executes the process of step S51. In the process of step S51, the third device 30C presents the HMI 32 with information indicating that registration of the guest key KN has been completed. For example, the third device 30C displays, on the HMI 32, an image indicating that the registration of the guest key KN has been completed. As a result, the management system 10 terminates the series of processes for registering the guest key KN.

### Series of Processes for Deleting Digital Key

A series of processes for deleting a digital key in the management system 10 will now be described. In the present embodiment, among multiple guest keys KN, the third digital key DK3 is a digital key to be deleted (i.e., a deletion-target digital key). Thus, a series of processes for deleting the third digital key DK3 will be described.

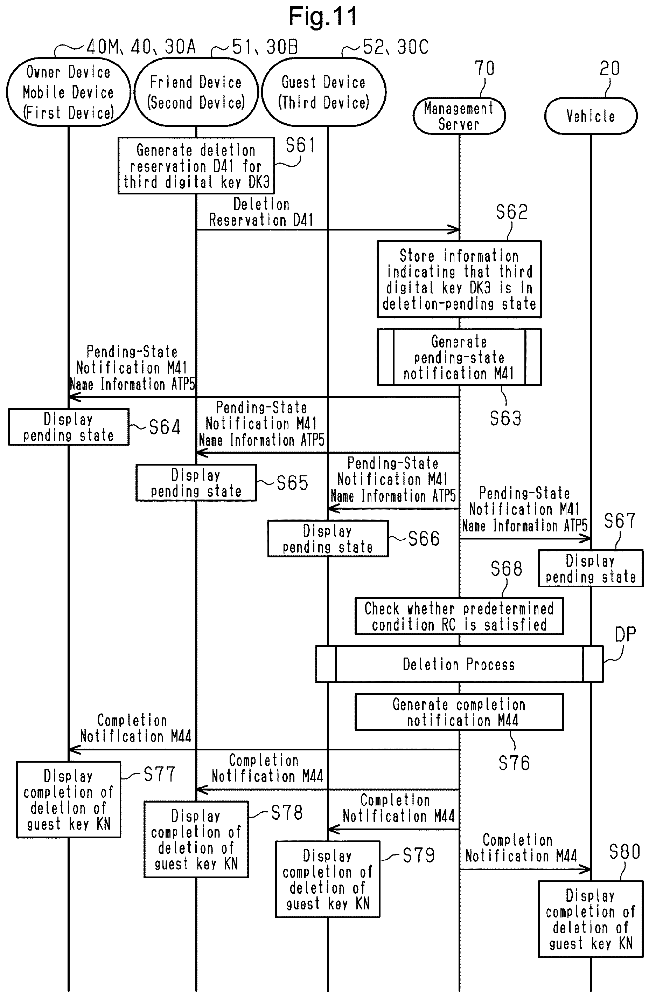

As shown in Fig. 11, upon receiving an operation to request deletion of the third digital key DK3, the second device 30B performs the process of step S61. In step S61, the second device 30B generates a deletion reservation D41 for the third digital key DK3. The deletion reservation D41 is a request to delete the third digital key DK3 upon satisfaction of a predetermined condition RC. The deletion reservation D41 is a signal for reserving deletion of the third digital key DK3. That is, the deletion reservation D41 is a request to delete information relating to a digital key registered with the vehicle 20 from the device 30 that stores that information.

The deletion reservation D41 includes a signal requesting deletion of the third digital key DK3, the digital key identification information ST3 indicating the third digital key DK3, and information indicating the predetermined condition RC. The predetermined condition RC is necessary for the management server 70 to delete a subject digital key after receiving the deletion reservation D41. The predetermined condition RC is defined in advance. The predetermined condition RC in the first embodiment is that a predetermined deletion-pending period has elapsed since the management server 70 received the deletion reservation D41. The deletion reservation D41 includes information for identifying the second device 30B that transmits the deletion reservation D41 to the management server 70. For example, the deletion reservation D41 includes the name information ATP5, which is used to identify the second device 30B. The second device 30B transmits the deletion reservation D41 to the management server 70. In the present embodiment, the second device 30B serves as a sender device from which a deletion request has been transmitted.

Upon receiving the deletion reservation D41 of the third digital key DK3, the management server 70 performs the process of step S62. In step S62, the management server 70 stores information indicating that the third digital key DK3, which is the subject of the deletion reservation D41, is in the deletion-pending state in the database DB. In the deletion-pending state, a digital key is deleted upon satisfaction of the predetermined condition RC. In the deletion-pending state, the management server 70 has received the deletion reservation D41, but the execution of the deletion is suspended. The management server 70 proceeds to step S63.

In step S63, the management server 70 generates a pending-state notification M41, indicating that the digital key requested to be deleted by the deletion reservation D41 is in the deletion-pending state.

### Destination of Pending-State Notification M41

The management server 70 transmits the pending-state notification M41 to a device 30 that stores information relating to a higher-level digital key that is directly hierarchically related to the third digital key DK3, which is the subject of the deletion reservation D41. The management server 70 also transmits the pending-state notification M41 to the vehicle 20.

As shown in Fig. 6, the higher-level digital keys that are directly hierarchically related to the third digital key DK3 are the first digital key DK1 and the second digital key DK2. The management server 70 transmits the pending-state notification M41 to the first device 30A, which stores information relating to the first digital key DK1. The management server 70 transmits the pending-state notification M41 to the second device 30B, which stores the information relating to the second digital key DK2.

The management server 70 also transmits the pending-state notification M41 to the third device 30C storing the information relating to the third digital key DK3, which is the subject of the deletion reservation D41.

Among multiple devices 30 that store information relating to digital keys registered with the vehicle 20, the first device 30A and the third device 30C are devices 30 that belong to users other than the user of the second device 30B, from which the deletion reservation D41 has been transmitted. That is, among multiple devices 30 that store information relating to digital keys registered with the vehicle 20, the management server 70 transmits the pending-state notification M41 to devices 30 that belong to users other than the user of the second device 30B, from which the deletion reservation D41 has been transmitted. In the present embodiment, each of the first device 30A and the third device 30C is a receiving device to which the pending-state notification M41 is transmitted and which belongs to a user other than the user of the second device 30B (i.e., the destination of the deletion reservation D41).

Along with the pending-state notification M41, the management server 70 transmits information indicating a device 30 that has transmitted the deletion reservation D41. Specifically, along with the pending-state notification M41, the management server 70 transmits information for identifying the second device 30B. For example, along with the pending-state notification M41, the management server 70 transmits the name information ATP5, which indicates a name for identifying the second digital key DK2 registered with the second device 30B.

### Change to Information Transmitted with Pending-State Notification M41

The management server 70 is configured to change the information to be transmitted along with the pending-state notification M41 depending on whether the owner device 40 is the mobile device 40M or the virtual device 40V. Upon generating the pending-state notification M41, the management server 70 executes a series of processes for determining whether to transmit, along with the pending-state notification M41, information indicating a device that has transmitted the deletion reservation D41.

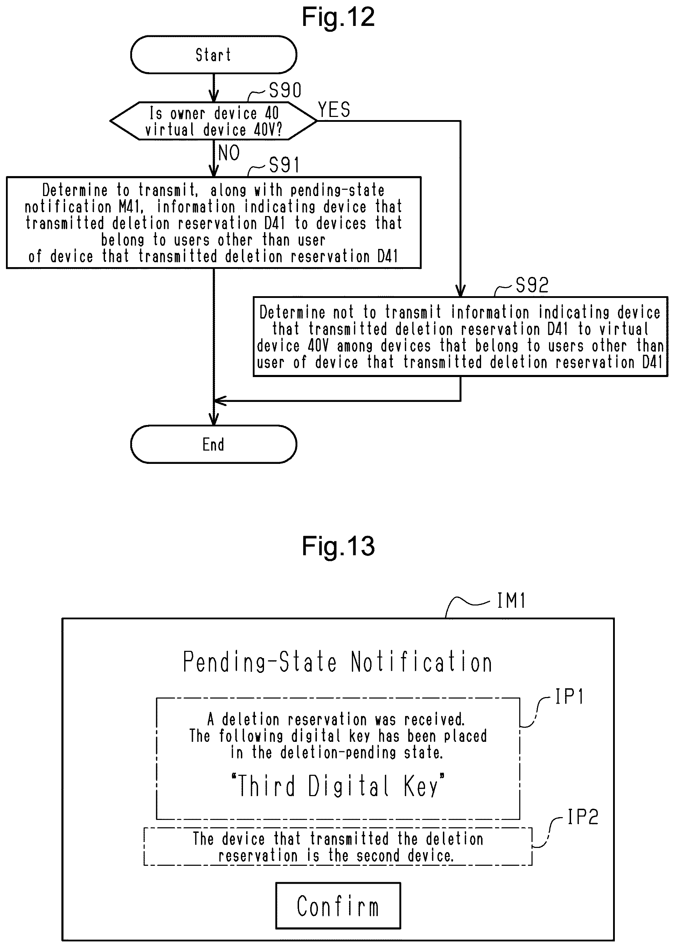

As illustrated in Fig. 12, upon starting the series of processes, the management server 70 acquires information indicating whether the owner device 40 is the virtual device 40V in the process of step S90. Specifically, the management server 70 acquires the classification information TI stored in the storage device 72. The management server 70 determines whether the owner device 40 is the virtual device 40V with reference to the classification information TI. When the owner device 40 is not the virtual device 40V (step S90: NO), the management server 70 proceeds to step S91.

In the process of step S91, the management server 70 determines to transmit, along with the pending-state notification M41, information indicating the device that has transmitted the deletion reservation D41 to the owner device 40. Specifically, the management server 70 determines to transmit the name information ATP5 along with the pending-state notification M41 to the owner device 40. Then, the management server 70 terminates the series of processes shown in Fig. 12.

When the owner device 40 is the virtual device 40V (step S90: YES), the management server 70 proceeds to step S92. In the process of step S92, the management server 70 determines not to transmit, to the owner device 40, information indicating the device that has transmitted the deletion reservation D41. Specifically, the management server 70 determines to transmit only the pending-state notification M41 to the owner device 40. Then, the management server 70 terminates the series of processes shown in Fig. 12. Upon completion of the series of processes illustrated in Fig. 12, the management server 70 transmits the pending-state notification M41 and, if necessary, the name information ATP5, to the owner device 40.

As illustrated in Fig. 11, the management server 70 transmits the pending-state notification M41 and the name information ATP5 to the owner device 40 that is the mobile device 40M. The management server 70 also transmits the pending-state notification M41 and the name information ATP5 to the second device 30B. The management server 70 also transmits the pending-state notification M41 and the name information ATP5 to a device 30 storing information relating to a digital key DK that is the subject of the deletion reservation D41. That is, the management server 70 also transmits the pending-state notification M41 and the name information ATP5 to the third device 30C, which stores information relating to the third digital key DK3. The management server 70 also transmits the pending-state notification M41 and the name information ATP5 to the vehicle 20. When the owner device 40 illustrated in Fig. 11 is the virtual device 40V, the management server 70 transmits only the pending-state notification M41 to the owner device 40.

### Information Indicating that Deletion of Digital Key is Pending

Upon receiving the pending-state notification M41 and the name information ATP5, the mobile device 40M performs the process of step S64. In step S64, the mobile device 40M presents the HMI 32 with information indicating that deletion of the third digital key DK3, which is the subject of the deletion reservation D41, is pending.

As shown in Fig. 13, a first notification image IM1 is displayed on the HMI 22 of the mobile device 40M that has received the pending-state notification M41 and the name information ATP5. The first notification image IM1 is an example of an image indicating that deletion of the third digital key DK3, which is the subject of the deletion reservation D41, is pending. The first notification image IM1 includes a first image section IP1 and a second image section IP2. The first image section IP1 indicates that the digital key requested to be deleted by the deletion reservation D41 is in the deletion-pending state. The first image section IP1 indicates that "Third Digital Key" is in the deletion-pending state. The second image section IP2 indicates the device 30 that has transmitted the deletion reservation D41. The second image section IP2 indicates that the device 30 that has transmitted the deletion reservation D41 is "Second Device." When the section of the first notification image IM1 that displays "Confirm" is selected by the user of the mobile device 40M, the first notification image IM1 is hidden.

Upon receiving the pending-state notification M41 and the name information ATP5, the second device 30B performs the process of step S65. In step S65, the second device 30B presents the HMI 32 with information indicating that deletion of the third digital key DK3, which is the subject of the deletion reservation D41, is pending. For example, the second device 30B displays, on the HMI 32, an image indicating that deletion of the third digital key DK3 is pending. Specifically, after receiving the pending-state notification M41 and the name information ATP5, the second device 30B displays the first notification image IM1, which is shown in Fig. 13, on the HMI 32.

Upon receiving the pending-state notification M41 and the name information ATP5, the third device 30C performs the process of step S66. In step S66, the third device 30C presents the HMI 32 with information indicating that deletion of the third digital key DK3, which is the subject of the deletion reservation D41, is pending. For example, the third device 30C displays, on the HMI 32, an image indicating that deletion of the third digital key DK3 is pending. Specifically, after receiving the pending-state notification M41 and the name information ATP5, the third device 30C displays the first notification image IM1, which is shown in Fig. 13, on the HMI 32.

Upon receiving the pending-state notification M41 and the name information ATP5, the vehicle 20 performs the process of step S67. In step S67, the vehicle 20 presents the HMI 22 with information indicating that deletion of the third digital key DK3, which is the subject of the deletion reservation D41, is pending. Specifically, after receiving the pending-state notification M41 and the name information ATP5, the vehicle 20 displays the first notification image IM1, which is shown in Fig. 13, on the HMI 22.

The virtual device 40V may be configured to present information indicating that deletion of the third digital key DK3, which is the subject of the deletion reservation D41, is pending in response to receiving the pending-state notification M41. For example, the virtual device 40V may include a monitor that displays an image. In this case, the monitor of the virtual device 40V displays the first notification image IM1, excluding the second image section IP2. Then, the management server 70 proceeds to step S68 shown in Fig. 11.

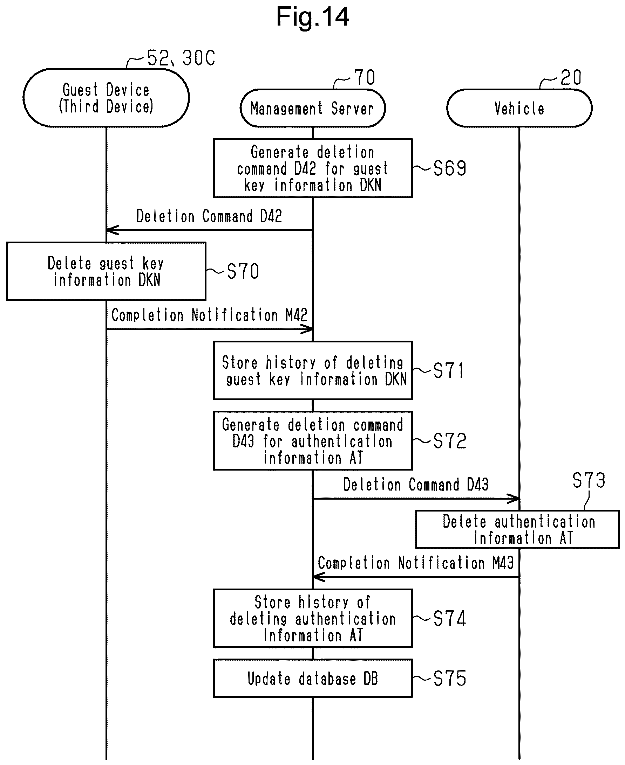

As shown in Fig. 11, in step S68, the management server 70 checks whether the predetermined condition RC is satisfied. When the predetermined condition RC is satisfied, the management system 10 proceeds to a deletion process DP. The deletion process DP includes a series of processes from step S69 to step S75 illustrated in Fig. 14. That is, when the predetermined condition RC is satisfied, the management server 70 proceeds to step S69 shown in Fig. 14.

As shown in Fig. 14, in step S69, the management server 70 generates a deletion command D42 for deleting the guest key information DKN indicating the guest key KN, which is the subject of the deletion reservation D41. The management server 70 transmits the deletion command D42 to the guest devices 52.

Upon receiving the deletion command D42, the guest device 52 performs the process of step S70. In step S70, the guest device 52 deletes the guest key information DKN in accordance with the deletion command D42. The guest device 52 transmits a completion notification M42 for deletion, indicating that the deletion of the guest key information DKN has been completed in accordance with the deletion command D42, to the management server 70.

Upon receiving the completion notification M42, the management server 70 performs the process of step S71. In step S71, the management server 70 stores information indicating that the guest key information DKN has been deleted from the guest device 52.

In step S72, the management server 70 generates a deletion command D43 for the authentication information AT. The deletion command D43 for the authentication information AT deletes the authentication information AT for authenticating the guest key KN, which is the subject of the deletion reservation D41. The management server 70 transmits the deletion command D43 to the vehicle 20.

Then, upon receiving the deletion command D43, the vehicle 20 executes the process of step S73. In step S73, the vehicle 20 deletes the authentication information AT for authenticating the guest key KN, which is the subject of the deletion reservation D41, in accordance with the deletion command D43. That is, the vehicle 20 deletes the authentication package ATP of the guest key KN. Subsequently, the vehicle 20 transmits the completion notification M43 for deletion, which indicates that the deletion of the authentication information AT in accordance with the deletion command D43 has been completed, to the management server 70.

Upon receiving the completion notification M43, the management server 70 performs the process of step S74. In step S74, the management server 70 stores information indicating that the authentication information AT, which is used to authenticate the guest key KN to be deleted in the current series of processes relating to the deletion, has been deleted from the vehicle 20. Then, the management server 70 proceeds to step S75.

In step S75, the management server 70 updates the database DB. Specifically, the management server 70 deletes the information relating to the third device 30C. which has the third digital key DK3 to be deleted in the current series of processes, from the data DA of the vehicle 20 in the database DB. Then, the management server 70 proceeds to step S76 shown in Fig. 11.

As shown in Fig. 11, in step S76, the management server 70 transmits a completion notification M44 to each of the mobile device 40M, the second device 30B, the third device 30C, and the vehicle 20. The completion notification M44 indicates that the series of processes for deleting the guest key KN according to the deletion reservation D41 has been completed.

Upon receiving the completion notification M44, the mobile device 40M performs the process of step S77. In step S77, the mobile device 40M presents the HMI 32 with information indicating that deletion of the third digital key DK3, which is the subject of the deletion reservation D41, has been completed. For example, the mobile device 40M displays, on the HMI 32, an image indicating that deletion of the third digital key DK3 has been completed.

Upon receiving the completion notification M44, the second device 30B performs the process of step S78. In step S78, the second device 30B presents the HMI 32 with information indicating that deletion of the third digital key DK3, which is the subject of the deletion reservation D41, has been completed. For example, the second device 30B displays, on the HMI 32, an image indicating that deletion of the third digital key DK3 has been completed.

Upon receiving the completion notification M44, the third device 30C performs the process of step S79. In step S79, the third device 30C presents the HMI 32 with information indicating that deletion of the third digital key DK3, which is the subject of the deletion reservation D41, has been completed. For example, the third device 30C displays, on the HMI 32, an image indicating that deletion of the third digital key DK3 has been completed.

Upon receiving the completion notification M44, the vehicle 20 performs the process of step S80. In step S80, the vehicle 20 presents the HMI 22 with information indicating that deletion of the third digital key DK3, which is the subject of the deletion reservation D41, has been completed. For example, the vehicle 20 displays, on the HMI 22, an image indicating that deletion of the third digital key DK3 has been completed. Then, the management system 10 terminates the current series of processes for deleting the third digital key DK3.

### Operation of the First Embodiment

The management server 70 of the management system 10 transmits the pending-state notification M41, which indicates that a digital key that is the subject of the deletion reservation D41 (i.e., a deletion request) is in the deletion-pending state, to the first device 30A and the third device 30C. Among multiple devices 30 that store information relating to digital keys registered with the vehicle 20, the first device 30A and the third device 30C are devices 30 other than the second device 30B that has transmitted the deletion reservation D41.

### Advantages of the First Embodiment

(1-1) The management server 70 allows the users of devices 30 other than the second device 30B that has transmitted the deletion reservation D41 to confirm that the third digital key DK3 is the subject of the deletion reservation D41 and is in the deletion-pending state.

(1-2) The user of the third device 30C, which stores information relating to the third digital key DK3, may wish to confirm whether the deletion reservation D41 has been made for the third digital key DK3. The management server 70 transmits the pending-state notification M41 to the third device 30C storing the information relating to the third digital key DK3, which is the subject of the deletion reservation D41. Thus, the management server 70 allows the user of the third device 30C storing the information relating to the third digital key DK3, which is the subject of the deletion reservation D41, to confirm that the third digital key DK3 is the subject of the deletion reservation D41 and is in the deletion-pending state.

(1-3) The management server 70 transmits the pending-state notification M41 to the first device 30A, which stores information relating to the first digital key DK1. The first digital key DK1 is a higher-level digital key directly hierarchically related to the third digital key DK3, which is the subject of the deletion reservation D41. The user of a device 30 that stores information relating to a given digital key is highly likely to wish to confirm whether the deletion reservation D41 has been made for a lower-level digital key that is directly hierarchically related to the given digital key. The management server 70 allows the user of the first device 30A to confirm that the third digital key DK3 is the subject of the deletion reservation D41 and is in the deletion-pending state. In this case, the first device 30A is a device 30 that stores the information relating to the first digital key DK1, which is a higher-level digital key that is directly hierarchically related to the third digital key DK3.

(1-4) The management server 70 transmits the pending-state notification M41 to the owner device 40, which belongs to the owner of a vehicle 20. The owner of the vehicle 20 may wish to confirm whether the deletion reservation D41 has been made for a digital key of the vehicle 20. The management server 70 allows the user of the owner device 40 to confirm that the third digital key DK3 is the subject of the deletion reservation D41 and is in the deletion-pending state.

(1-5) The management server 70 transmits, along with the pending-state notification M41, information indicating the second device 30B that has transmitted the deletion reservation D41. The management server 70 allows the users of devices 30 other than the second device 30B that has transmitted the deletion reservation D41 to confirm the information indicating the second device 30B, which has transmitted the deletion reservation D41.

(1-6) The management server 70 changes the information to be transmitted depending on whether the owner device 40, which is a device 30 that belongs to the owner of a vehicle 20, is the mobile device 40M and whether the owner device 40 is the virtual device 40V, which is constructed on the server 80. Specifically, when the owner device 40 is the virtual device 40V, the information relating to the second device 30B that has transmitted the deletion reservation D41 will not be transmitted to the owner device 40. When the virtual device 40V receives information relating to the second device 30B, no user may be available to review the information. When no user is available to review the information, the information relating to the second device 30B that has transmitted the deletion reservation D41 is likely to be unnecessary for the virtual device 40V. In the above configuration, the management server 70 prevents the virtual device 40V from receiving information that is unnecessary for the virtual device 40V.

### Modifications to the First Embodiment

The first embodiment may be modified as follows. The first embodiment described above and the following modifications to the first embodiment may be combined as long as they are not technically inconsistent.

The management server 70 may transmit the pending-state notification M41 to a device 30 that stores information relating to a digital key directly hierarchically related to the third digital key DK3, which is the subject of the deletion reservation D41. For example, the management server 70 may transmit the pending-state notification M41 to the eighth device 30H storing information relating to the eighth digital key DK8, which is directly hierarchically related to the third digital key DK3. The user of a device 30 that stores information relating to a given digital key is highly likely to wish to confirm whether the deletion reservation D41 has been made for a digital key that is directly hierarchically related to the given digital key. The management server 70 allows the user of the eighth device 30H to confirm that the third digital key DK3 is the subject of the deletion reservation D41 and is in the deletion-pending state. The eighth device 30H is a device 30 that stores information relating to the eighth digital key DK8, which is directly hierarchically related to the third digital key DK3.

The management server 70 may transmit the pending-state notification M41 to a device 30 that stores information relating to a higher-level digital key than the third digital key DK3, which is the subject of the deletion reservation D41. For example, the management server 70 may transmit the pending-state notification M41 to the fifth device 30E storing information relating to the fifth digital key DK5, which has a higher level than the third digital key DK3. The user of a device 30 that stores information relating to a given digital key is highly likely to wish to confirm whether the deletion reservation D41 has been made for a digital key that has a lower level than the given digital key. Thus, the management server 70 allows the user of fifth device 30E storing the information relating to the fifth digital key DK5, which has a higher level than the third digital key DK3, to confirm that the third digital key DK3 is the subject of the deletion reservation D41 and is in the deletion-pending state.

As long as the management server 70 transmits the pending-state notification M41 to the devices 30 that belong to users other than the user of the second device 30B, from which the deletion reservation D41 has been transmitted, the management server 70 does not have to transmit the information indicating the second device 30B.

The destinations of the pending-state notification M41 may be changed by the management server 70. For example, the management server 70 may transmit the pending-state notification M41 while excluding, from the destinations of the pending-state notification M41, any device 30 that stores information relating to a digital key that is the subject of the deletion reservation D41. The management server 70 may transmit the pending-state notification M41 while excluding the owner device 40 from the destinations of the pending-state notification M41.

The management server 70 may transmit the pending-state notification M41 to a device 30 other than devices 30 that store information relating to higher-level digital keys that are directly hierarchically related to the third digital key DK3, which is the subject of the deletion reservation D41.

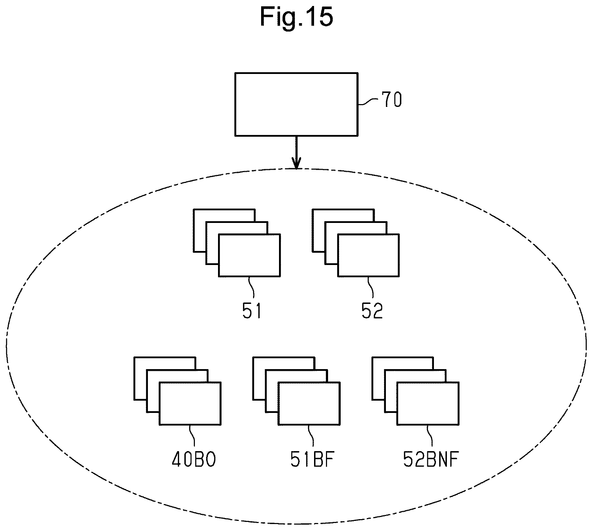

As shown in Fig. 15, the devices 30 to which the management server 70 transmits the pending-state notification M41 include multiple friend devices 51. The devices 30 to which the management server 70 transmits the pending-state notification M41 include multiple guest devices 52. The devices 30 to which the management server 70 transmits the pending-state notification M41 include multiple devices 40BO, which belong to the owner of a vehicle 20. The devices 30 to which the management server 70 transmits the pending-state notification M41 include multiple devices 51BF, which belong to the users of the friend devices 51 other than the second device 30B. The devices 30 to which the management server 70 transmits the pending-state notification M41 include multiple devices 52BNF, which belong to the users of the guest devices 52.

Even if the owner device 40 is the virtual device 40V, the management server 70 may transmit the information indicating the second device 30B, from which the deletion reservation D41 has been transmitted, to the owner device 40 along with the pending-state notification M41.

### Second Embodiment

The management server 70 according to a second embodiment will now be described with reference to Figs. 11, 14, and 16 to 18. The following describes the second embodiment, focusing on differences from the first embodiment. In the second embodiment, the owner device 40 is the mobile device 40M. In the second embodiment, the management server 70 transmits a confirmation request D52, which will be described later, along with a pending-state notification M51 in a series of processes for deleting a digital key. The following description focuses on differences from the first embodiment, and identical portions are briefly described or omitted.

### Series of Processes for Deleting Digital Key

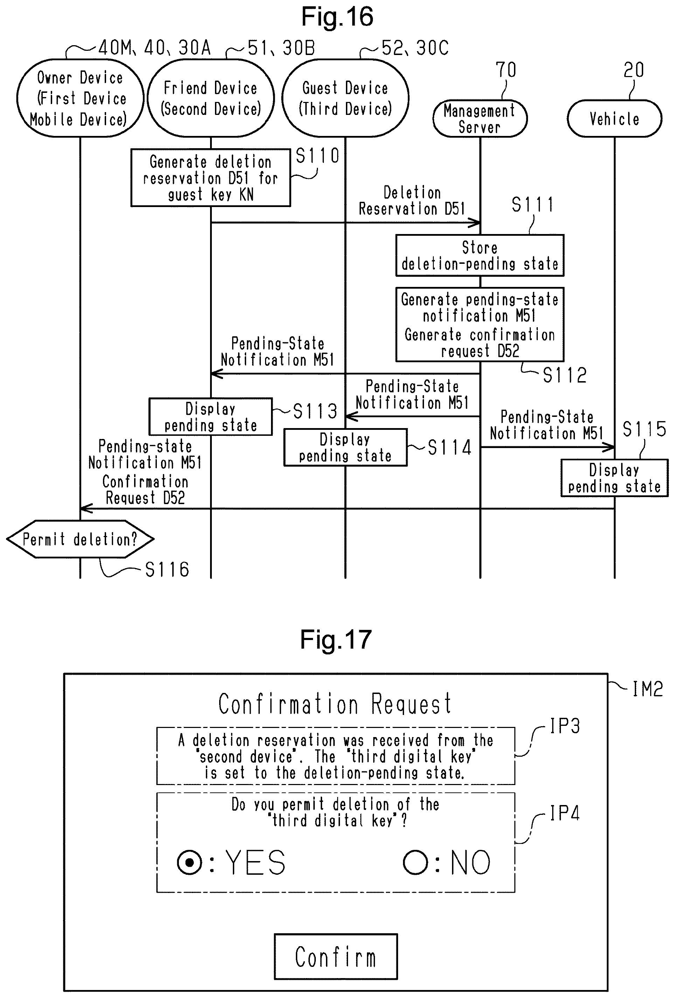

As shown in Fig. 16, upon receiving an operation to request deletion of the third digital key DK3, the second device 30B performs the process of step S110. In step S110, the second device 30B generates a deletion reservation D51 for the third digital key DK3. The deletion reservation D51 is a request to delete the third digital key DK3 when the predetermined condition RC is satisfied. In the same manner as the deletion reservation D41, the deletion reservation D51 is a signal for reserving deletion of the third digital key DK3. The second device 30B transmits the deletion reservation D51 to the management server 70.

The deletion reservation D51 includes a signal requesting deletion of the third digital key DK3, the digital key identification information ST3 indicating the third digital key DK3, and information indicating the predetermined condition RC.

Upon receiving the deletion reservation D51, the management server 70 executes the process of step S111. In step S111, the management server 70 stores, in the database DB, information indicating that the third digital key DK3, which is the subject of the deletion reservation D51, is in the deletion-pending state. Then, the management server 70 proceeds to step S112.

In step S112, the management server 70 generates the pending-state notification M51, which indicates that the digital key requested to be deleted by the deletion reservation D51, is in the deletion-pending state. The pending-state notification M51 includes information used to identify the second device 30B that transmitted the deletion reservation D51. Specifically, the pending-state notification M51 includes the name information ATP5, which indicates the name for identifying the second digital key DK2 registered with the second device 30B.

Further, the management server 70 generates the confirmation request D52 for prompting the user of a device 30 to select whether to permit deletion of a digital key that is the subject of the deletion reservation D51.

### Destinations of Pending-State Notification M51 and Confirmation Request D52

The management server 70 transmits the pending-state notification M51 to the first device 30A and the second device 30B. The first device 30A and the second device 30B each store information relating to a higher-level digital key that is directly hierarchically related to the third digital key DK3, which is the subject of the deletion reservation D51. The management server 70 also transmits the pending-state notification M51 to the third device 30C storing the information relating to the third digital key DK3, which is the subject of the deletion reservation D51. The management server 70 also transmits the pending-state notification M51 to the vehicle 20.

Further, the management server 70 transmits the confirmation request D52 to the owner device 40, which belongs to the owner of the vehicle 20. That is, the management server 70 transmits the pending-state notification M51 and the confirmation request D52 to the first device 30A. The first digital key DK1 has a higher level than the third digital key DK3. That is, the management server 70 transmits the confirmation request D52 to a device 30 that stores the information relating to a higher-level digital key than the third digital key DK3, which is the subject of the deletion reservation D51.

Upon receiving the pending-state notification M51, the second device 30B performs the process of step S113. In step S113, the second device 30B presents the HMI 32 with information indicating that deletion of the third digital key DK3, which is the subject of the deletion reservation D51, is pending. Step S113 is identical to step S65 in the first embodiment, and thus will not be described in detail.

Upon receiving the pending-state notification M51, the third device 30C performs the process of step S114. In step S114, the third device 30C presents the HMI 32 with information indicating that deletion of the third digital key DK3, which is the subject of the deletion reservation D51, is pending. Step S114 is identical to step S66 in the first embodiment, and thus will not be described in detail.

Upon receiving the pending-state notification M51, the vehicle 20 performs the process of step S115. In step S115, the vehicle 20 presents the HMI 22 with information indicating that deletion of the third digital key DK3, which is the subject of the deletion reservation D51, is pending. Step S115 is identical to step S67 in the first embodiment, and thus will not be described in detail.

### Process Executed by the Mobile Device 40M after Receiving the Confirmation Request D52

Upon receiving the pending-state notification M51 and the confirmation request D52, the mobile device 40M, which is the first device 30A, performs the process of step S116. In step S116, the mobile device 40M presents the HMI 32 with an image that prompts the user of the mobile device 40M to choose whether to permit deletion of the third digital key DK3, which is the subject of the deletion reservation D51.

As illustrated in Fig. 17, the HMI 32 of the mobile device 40M that has received the pending-state notification M51 and the confirmation request D52 displays a second notification image IM2. The second notification image IM2 is an example of an image prompting the user of the mobile device 40M to choose whether to permit deletion of the third digital key DK3, which is the subject of the deletion reservation D51.

The second notification image IM2 includes a third image section IP3 and a fourth image section IP4. The third image section IP3 indicates that the digital key requested to be deleted by the deletion reservation D51 is in the deletion-pending state. The third image section IP3 indicates that "Third Digital Key" is in the deletion-pending state. The third image section IP3 also indicates the device 30 that has transmitted the deletion reservation D51. The third image section IP3 indicates that the device 30 that has transmitted the deletion reservation D51 is "Second Device."

The fourth image section IP4 displays a request prompting the user of the mobile device 40M to choose whether to permit deletion of a digital key that is the subject of the deletion reservation D51. The fourth image section IP4 displays a request prompting the user to choose whether to permit deletion of "Third Digital Key."

When permitting deletion of "Third Digital Key," the user of the mobile device 40M selects "YES" by using the radio button in the fourth image section IP4. When the user of the mobile device 40M does not permit deletion of "Third Digital Key," the user selects "NO" using the radio button in the fourth image section IP4.

### Step S116: YES

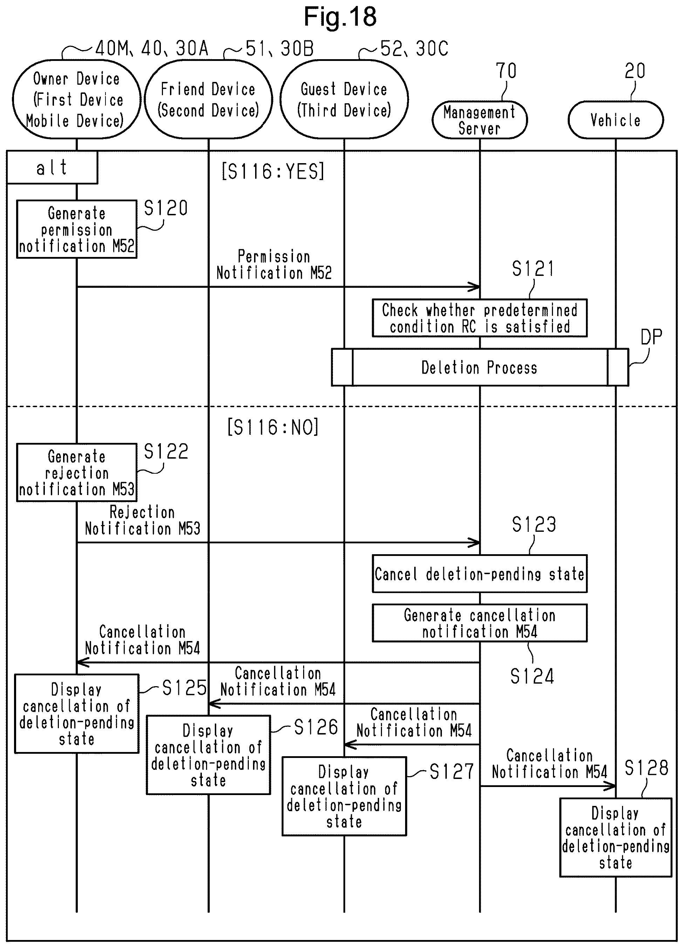

When the user of the mobile device 40M selects "YES" by using the radio button in the fourth image section IP4 in Fig. 17 and then presses "Confirm" in the second notification image IM2 (step S116: YES), the mobile device 40M performs the process of step S120 shown in Fig. 18. In the process of step S120, the mobile device 40M generates a permission notification M52. The permission notification M52 permits deletion of the third digital key DK3, which is the subject of the deletion reservation D51. The mobile device 40M transmits the permission notification M52 to the management server 70.

Upon receiving the permission notification M52, the management server 70 performs the process of step S121. In step S121, the management server 70 checks whether the predetermined condition RC is satisfied. When the predetermined condition RC is satisfied, the management system 10 proceeds to the deletion process DP. The deletion process DP includes the series of processes from step S69 to step S75 illustrated in Fig. 14. After terminating the deletion process DP, the management system 10 executes the series of processes from step S76 to step S80 shown in Fig. 11. Then, the management system 10 terminates the current series of processes for deleting the third digital key DK3.

### Step S116: NO

When the user of the mobile device 40M selects "NO" by using the radio button in the fourth image section IP4 in Fig. 17 and then presses "Confirm" in the second notification image IM2 (step S116: NO), the mobile device 40M performs the process of step S122 shown in Fig. 18. In the process of step S122, the mobile device 40M generates a rejection notification M53. The rejection notification M53 indicates that deletion of the third digital key DK3, which is the subject of the deletion reservation D51, is rejected. The mobile device 40M transmits the rejection notification M53 to the management server 70.

Upon receiving the rejection notification M53, the management server 70 performs the process of step S123. In step S123, the management server 70 cancels the deletion-pending state of the third digital key DK3. Then, the management server 70 proceeds to step S124. When the management server 70 receives the rejection notification M53, the management system 10 does not execute the deletion process DP of deleting the third digital key DK3, which is the subject of the deletion reservation D51.

In the process of step S124, the management server 70 generates a cancellation notification M54. The cancellation notification M54 includes information indicating that the deletion-pending state of the third digital key DK3 has been canceled.

Then, the management server 70 transmits the cancellation notification M54 to each of multiple devices 30 and the vehicle 20 to which the pending-state notification M51 was transmitted in the process of step S112. Specifically, the management server 70 transmits the cancellation notification M54 to each of the mobile device 40M, the second device 30B, the third device 30C, and the vehicle 20.

Upon receiving the cancellation notification M54, the mobile device 40M performs the process of step S125. In step S125, the mobile device 40M presents the HMI 32 with information indicating that the deletion-pending state of the third digital key DK3, which is the subject of the deletion reservation D51, has been canceled. For example, the mobile device 40M displays, on the HMI 32, an image indicating that the deletion-pending state of the third digital key DK3 has been canceled.

Upon receiving the cancellation notification M54, the second device 30B performs the process of step S126. In step S126, the second device 30B presents the HMI 32 with information indicating that the deletion-pending state of the third digital key DK3, which is the subject of the deletion reservation D51, has been canceled. For example, the second device 30B displays, on the HMI 32, an image indicating that the deletion-pending state of the third digital key DK3 has been canceled.

Upon receiving the cancellation notification M54, the third device 30C performs the process of step S127. In step S127, the third device 30C presents the HMI 32 with information indicating that the deletion-pending state of the third digital key DK3, which is the subject of the deletion reservation D51, has been canceled. For example, the third device 30C displays, on the HMI 32, an image indicating that the deletion-pending state of the third digital key DK3 has been canceled.

Upon receiving the cancellation notification M54, the vehicle 20 performs the process of step S128. In step S128, the vehicle 20 presents the HMI 22 with information indicating that the deletion-pending state of the third digital key DK3, which is the subject of the deletion reservation D51, has been canceled. For example, the vehicle 20 displays, on the HMI 22, an image indicating that the deletion-pending state of the third digital key DK3 has been canceled. Then, the management system 10 terminates the current series of processes for deleting the third digital key DK3.

### Operation of the Second Embodiment

Even if the user of the second digital key DK2 wishes the third digital key DK3 to be deleted, the users of other digital keys may not wish the third digital key DK3 to be deleted. The management server 70 transmits the confirmation request D52 along with the pending-state notification M51 to a device 30 belonging to the user of a device 30 other than the second device 30B, among the devices 30 that store information relating to digital keys registered with the vehicle 20. The second device 30B is a device 30 that has transmitted the deletion reservation D51 to the management server 70. The confirmation request D52 prompts the user of the device 30 to select whether to permit deletion of the third digital key DK3.

### Advantages of the Second Embodiment

In addition to the advantages (1-1) to (1-5) of the first embodiment, the second embodiment has the following advantages.

(2-1) In executing deletion of the third digital key DK3, the management server 70 takes into account the preference of a user who does not wish the third digital key DK3 to be deleted.

(2-2) The management server 70 transmits the confirmation request D52 to the first device 30A, which stores information relating to the first digital key DK1. The first digital key DK1 has a higher level than the third digital key DK3, which is the subject of the deletion reservation D51. Even if a certain user wishes the third digital key DK3 to be deleted, the user of the first device 30A storing the information relating to the first digital key DK1, which is higher than the third digital key DK3, may not wish the third digital key DK3 to be deleted. In executing deletion of the third digital key DK3, the management server 70 takes into account the preference of the user of the first device 30A storing information relating to the first digital key DK1, which has a higher level than the third digital key DK3.

(2-3) The management server 70 transmits the confirmation request D52 to the mobile device 40M. That is, the management server 70 transmits the confirmation request D52 to the owner device 40, which is a device 30 that belongs to the owner of the vehicle 20. Even if a certain user wishes the third digital key DK3 to be deleted, the user of the owner device 40 may not wish the third digital key DK3 to be deleted. In executing deletion of the third digital key DK3, the management server 70 takes into account the preference of the user of the owner device 40.

### Modifications to the Second Embodiment

The second embodiment may be modified as follows. The second embodiment described above and the following modifications to the second embodiment may be combined as long as they are not technically inconsistent.

The management server 70 may transmit the confirmation request D52 to a device 30 other than the device 30 that stores information relating to a higher-level digital key than the third digital key DK3, which is the subject of the deletion reservation D51.

As shown in Fig. 15, the devices 30 to which the management server 70 transmits the confirmation request D52 include multiple friend devices 51. The devices 30 to which the management server 70 transmits the confirmation request D52 include multiple guest devices 52. The devices 30 to which the management server 70 transmits the confirmation request D52 include multiple devices 40BO, which belong to the owner of a vehicle 20. The devices 30 to which the management server 70 transmits the confirmation request D52 include multiple devices 51BF, which belong to the users of the friend devices 51. The devices 30 to which the management server 70 transmits the confirmation request D52 include multiple devices 52BNF, which belong to the users of the guest devices 52.

The destinations to which the management server 70 transmits the confirmation request D52 may be changed. For example, the management server 70 may transmit the confirmation request D52 to a device 30 that stores the information relating to a digital key that is the subject of the deletion reservation D51. The management server 70 may transmit the confirmation request D52 to a device 30 that stores the information relating to a digital key directly hierarchically related to a digital key that is the subject of the deletion reservation D51. The management server 70 does not have to transmit the confirmation request D52 to a device 30 that stores the information relating to a higher-level digital key than a digital key that is the subject of the deletion reservation D51. The management server 70 does not have to transmit the confirmation request D52 to the owner device 40.

The management server 70 may transmit the confirmation request D52 to each of multiple devices 30. In this case, the condition for canceling the deletion-pending state may be set as needed. For example, the management server 70 may set a condition such that the deletion-pending state is released when the rejection notification M53 is received from all the devices 30 to which the confirmation request D52 has been transmitted. For example, the management server 70 may set a condition such that the deletion-pending state is released when the rejection notification M53 is received from at least half of the devices 30 to which the confirmation request D52 has been transmitted. For example, in a case where the management server 70 has received the permission notification M52 from a device 30 that stores the information relating to the highest-level digital key, the management server 70 may set a condition such that the management server 70 does not cancel the deletion-pending state even when receiving the rejection notification M53 from another device.

### Third Embodiment

The management server 70 according to a third embodiment will now be described with reference to Figs. 11, 19, and 20. The following describes the third embodiment, focusing on differences from the first embodiment. In the third embodiment, the owner device 40 is the virtual device 40V. In the third embodiment, along with deletion of a digital key that is the subject of a deletion reservation D61, a lower-level digital key directly hierarchically related to that digital key is configured to be deleted. In the third embodiment, in a case where the owner device 40 is the virtual device 40V, when the management server 70 receives the deletion reservation D61 from the owner device 40, the management server 70 does not transmit a pending-state notification M61 to a device 30 that stores information relating to a lower-level digital key directly hierarchically related to the digital key that is the subject of the deletion reservation D61. The following description focuses on differences from the first embodiment, and identical portions are briefly described or omitted.

### Series of Processes for Deleting Digital Key

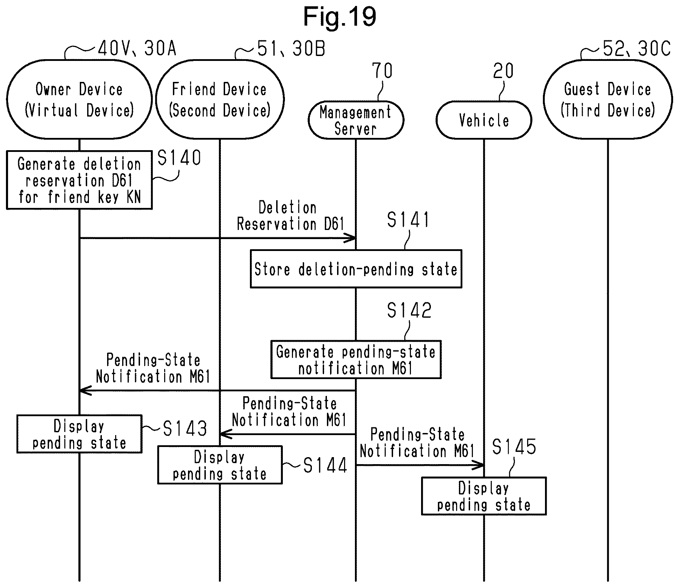

As shown in Fig. 19, upon receiving an operation to request deletion of the second digital key DK2, the virtual device 40V performs the process of step S140. In step S140, the virtual device 40V generates the deletion reservation D61 for the second digital key DK2. The deletion reservation D61 is a request to delete the second digital key DK2 when the predetermined condition RC is satisfied. The deletion reservation D61 is a signal for reserving deletion of the second digital key DK2. The virtual device 40V transmits the deletion reservation D61 to the management server 70.

The deletion reservation D61 includes a signal requesting deletion of the second digital key DK2, the digital key identification information ST3 indicating the second digital key DK2, and information indicating the predetermined condition RC. The predetermined condition RC in the third embodiment is that a predetermined deletion-pending period has elapsed since the management server 70 received the deletion reservation D61. The deletion reservation D61 includes information used to identify whether the owner device 40 that transmits the deletion reservation D61 to the management server 70 is the virtual device 40V. For example, the deletion reservation D61 includes the classification information TI.

Upon receiving the deletion reservation D61, the management server 70 executes the process of step S141. In step S141, the management server 70 stores, in the database DB, information indicating that the second digital key DK2, which is the subject of the deletion reservation D61, is in the deletion-pending state. Then, the management server 70 proceeds to step S142.

In step S142, the management server 70 generates the pending-state notification M61, which indicates that the digital key requested to be deleted by the deletion reservation D61, is in the deletion-pending state. The pending-state notification M61 includes information used to identify the virtual device 40V that transmitted the deletion reservation D61.

### Destination of Pending-State Notification M61

The management server 70 changes the destination of the pending-state notification M61 depending on whether the deletion reservation D61 has been received from the virtual device 40V. Upon generating the pending-state notification M61, the management server 70 executes a series of processes for determining the destination of the pending-state notification M61.

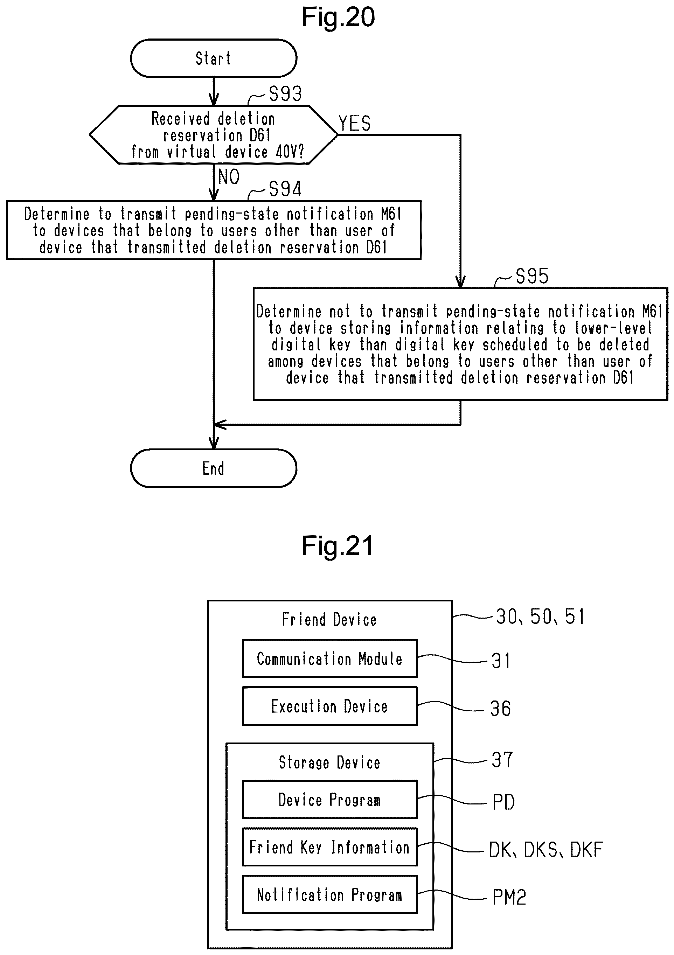

As illustrated in Fig. 20, upon starting the series of processes, the management server 70 acquires information indicating whether the owner device 40 that has transmitted the deletion reservation D61 is the virtual device 40V in the process of step S93. Specifically, the management server 70 acquires the classification information TI included in the deletion reservation D61. The management server 70 determines whether the owner device 40 that has transmitted the deletion reservation D61 is the virtual device 40V with reference to the classification information TI. When the owner device 40 that has transmitted the deletion reservation D61 is not the virtual device 40V (step S93: NO), the management server 70 proceeds to step S94.

In the process of step S94, the management server 70 determines to transmit the pending-state notification M61 to the owner device 40. Further, in the process of step S94, the management server 70 determines to transmit the pending-state notification M61 to devices 30 that belong to users other than the user of the owner device 40 that has transmitted the deletion reservation D61. Then, the management server 70 terminates the series of processes shown in Fig. 20.

Specifically, in the process of step S94, the management server 70 determines to transmit the pending-state notification M61 to devices 30 that belong to users other than the user of the device 30 that has transmitted the deletion reservation D61.

When the owner device 40 is the virtual device 40V (step S93: YES), the management server 70 proceeds to step S95.

In the process of step S95, the management server 70 determines to transmit the pending-state notification M61 to the owner device 40. Further, in the process of step S95, the management server 70 determines not to transmit the pending-state notification M61 to the device 30 storing information relating to a lower-level digital key directly hierarchically related to the second digital key DK2, among the devices 30 that belong to users other than the user of the virtual device 40V that has transmitted the deletion reservation D61.

Specifically, in the process of step S95, the management server 70 determines not to transmit the pending-state notification M61 to the device 30 storing information relating to a lower-level digital key directly hierarchically related to a digital key that is the subject of the deletion reservation D61, among the devices 30 belonging to users other than the user of the device 30 that has transmitted the deletion reservation D61. Then, the management server 70 terminates the series of processes shown in Fig. 20.

As shown in Fig. 19, the owner device 40 of the third embodiment is the virtual device 40V. Accordingly, the management server 70 transmits the pending-state notification M61 to each of the virtual device 40V, the second device 30B, and the vehicle 20. For example, the management server 70 does not transmit the pending-state notification M61 to the third device 30C, which stores the information relating to the third digital key DK3. The third digital key DK3 is a lower-level digital key that is directly hierarchically related to the second digital key DK2, which is the subject of the deletion reservation D61.

Upon receiving the pending-state notification M61, the virtual device 40V performs the process of step S143. In step S143, the virtual device 40V presents information indicating that deletion of the second digital key DK2, which is the subject of the deletion reservation D61, is pending. For example, if the virtual device 40V is capable of displaying an image on a monitor, the virtual device 40V displays, on the monitor, an image indicating that deletion of the second digital key DK2 is pending.

Upon receiving the pending-state notification M61, the second device 30B performs the process of step S144. In step S144, the second device 30B presents the HMI 32 with information indicating that deletion of the second digital key DK2, which is the subject of the deletion reservation D61, is pending. For example, the second device 30B displays, on the HMI 32, an image indicating that deletion of the second digital key DK2 is pending.

Upon receiving the pending-state notification M61, the vehicle 20 performs the process of step S145. In step S145, the vehicle 20 presents the HMI 22 with information indicating that deletion of the second digital key DK2, which is the subject of the deletion reservation D61, is pending. For example, the vehicle 20 displays, on the HMI 22, an image indicating that deletion of the second digital key DK2 is pending. The management system 10 deletes the second digital key DK2 by performing the same processes as those subsequent to step S68 shown in Fig. 11. In this case, the deletion process DP is performed by each of the second device 30B, the management server 70, and the vehicle 20. Then, for example, the management system 10 deletes the third digital key DK3 by performing the same processes as those subsequent to step S68 shown in Fig. 11. In this case, the deletion process DP is performed by each of the third device 30C, the management server 70, and the vehicle 20.

### Operation of the Third Embodiment

For example, the owner device 40 may be the virtual device 40V when a rental operator or a sharing operator owns the vehicle 20. When, for example, a rental operator owns the vehicle 20, along with deletion of a digital key that is the subject of the deletion reservation D61, a lower-level digital key directly hierarchically related to that digital key may be configured to be deleted.

In this case, if the pending-state notification M61 is transmitted to the third device 30C storing the information relating to the third digital key DK3 (i.e., a lower-level digital key that is directly hierarchically related to the second digital key DK2, which is the subject of the deletion reservation D61), the user of the third device 30C would receive unnecessary notifications.

### Advantage of the Third Embodiment

In addition to the advantage (1-1) and (1-3) of the first embodiment, the third embodiment has the following advantage.

(3-1) When the second digital key DK2 is the subject of deletion, the management server 70 does not transmit the pending-state notification M61, which is unnecessary for the user of the third device 30C storing the information relating to the third digital key DK3. This allows the user of the third device 30C to avoid receiving unnecessary notifications.

### Modification to the Third Embodiment

The third embodiment may be modified as follows.

The management server 70 does not have to transmit the pending-state notification M61 to the virtual device 40V.

### Fourth Embodiment

The management system 10 according to a fourth embodiment will now be described with reference to Figs. 11 and 21 to 23. In the fourth embodiment, the second device 30B, which is a friend device 51, transmits a pending-state notification M71 and a completion notification M73. In the fourth embodiment, the second device 30B, which is a friend device 51, stores information necessary for communicating with each of the first device 30A and the third device 30C in the storage device 37. The following description focuses on differences from the first embodiment, and identical portions are briefly described or omitted.

As shown in Fig. 21, the storage device 37 of the second device 30B, which is a friend device 51, stores a notification program PM2. When a device 30 that stores the notification program PM2 transmits a deletion reservation D71, the notification program PM2 causes the execution device 36 of the device 30 to transmit the pending-state notification M71.

### Series of Processes for Deleting Digital Key

A series of processes for deleting a digital key in the management system 10 in the fourth embodiment will now be described. In the present embodiment, the digital key to be deleted is the third digital key DK3. Thus, a series of processes for deleting the third digital key DK3 will be described.

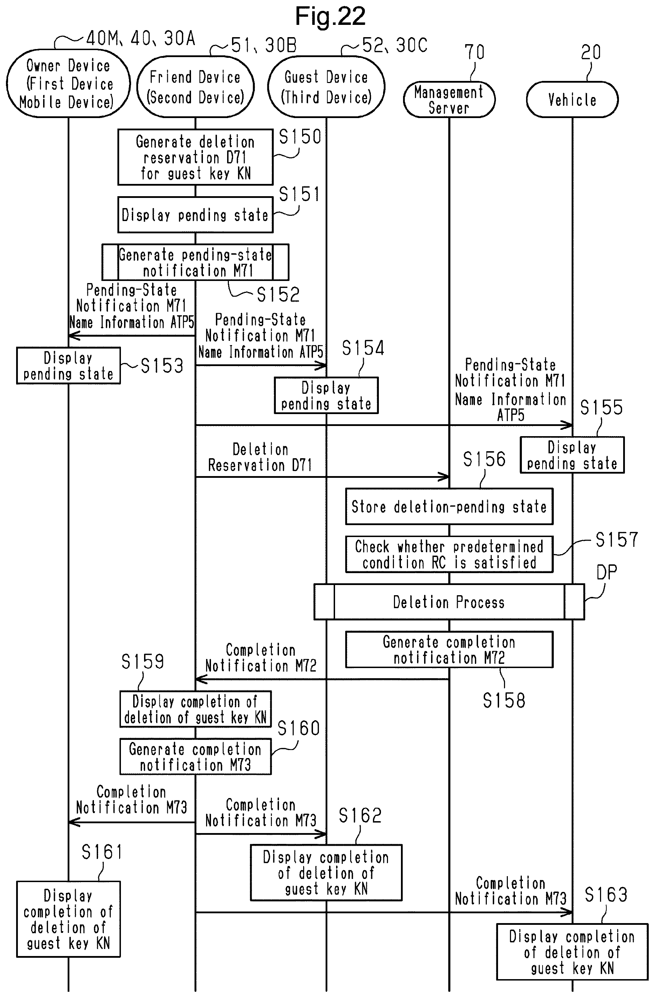

As shown in Fig. 22, upon receiving an operation to request deletion of the third digital key DK3, the second device 30B performs the process of step S150. In step S150, the second device 30B generates the deletion reservation D71 for the third digital key DK3. The deletion reservation D71 is a request to delete the third digital key DK3 when the predetermined condition RC is satisfied. The deletion reservation D71 is a signal for reserving deletion of the third digital key DK3. That is, the deletion reservation D71 is a request to delete information relating to a digital key registered with the vehicle 20 from a device 30 that stores that information.

The deletion reservation D71 includes a signal requesting deletion of the third digital key DK3, the digital key identification information ST3 indicating the third digital key DK3, and information indicating the predetermined condition RC. The predetermined condition RC in the fourth embodiment is that a predetermined deletion-pending period has elapsed since the management server 70 received the deletion reservation D71. The deletion reservation D71 includes information for identifying the second device 30B that transmits the deletion reservation D71 to the management server 70. Upon generating the deletion reservation D71, the second device 30B proceeds to step S151.

In step S151, the second device 30B presents the HMI 32 with information indicating that deletion of the third digital key DK3, which is the subject of the deletion reservation D71, is pending. Then, the second device 30B proceeds to step S152.

In step S152, the second device 30B generates the pending-state notification M71 indicating that the third digital key DK3, which is the subject of the deletion reservation D71, is in the deletion-pending state.

### Destination of Pending-State Notification M71

The second device 30B transmits the pending-state notification M71 to a device 30 that stores information relating to a higher-level digital key that is directly hierarchically related to the third digital key DK3, which is the subject of the deletion reservation D71. The second device 30B also transmits the pending-state notification M71 to the vehicle 20.

The higher-level digital keys that are directly hierarchically related to the third digital key DK3 are the first digital key DK1 and the second digital key DK2. The second device 30B transmits the pending-state notification M71 to the first device 30A, which stores information relating to the first digital key DK1. The first device 30A is the owner device 40.

The second device 30B also transmits the pending-state notification M71 to the third device 30C storing the information relating to the third digital key DK3, which is the subject of the deletion reservation D71.

Among multiple devices 30 that store information relating to digital keys registered with the vehicle 20, the first device 30A and the third device 30C are devices 30 that belong to users other than the user of the second device 30B, from which the deletion reservation D71 has been transmitted. That is, among multiple devices 30 that store information relating to digital keys registered with the vehicle 20, the second device 30B transmits the pending-state notification M71 to devices 30 that belong to users other than the user of the second device 30B, from which the deletion reservation D71 has been transmitted.

Along with the pending-state notification M71, the second device 30B transmits information indicating the device 30 from which the deletion reservation D71 has been transmitted. Specifically, the second device 30B transmits information for identifying the second device 30B along with the pending-state notification M71. For example, the second device 30B transmits the name information ATP5, which indicates the name for identifying the second digital key DK2 registered with the second device 30B, along with the pending-state notification M71.

### Change to Information Transmitted with Pending-State Notification M71

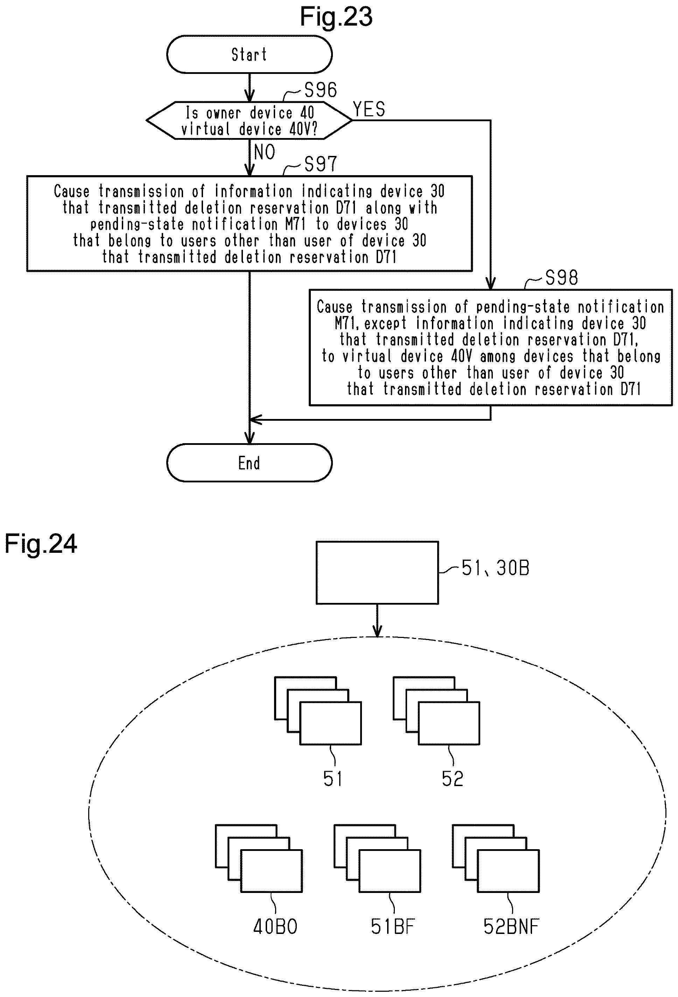

In the process of S152, the second device 30B is configured to change the information to be transmitted along with the pending-state notification M71 depending on whether the owner device 40 is the mobile device 40M or the virtual device 40V. In the process of S152, upon generating the pending-state notification M71, as shown in Fig. 23, the second device 30B executes a series of processes for determining whether to transmit, along with the pending-state notification M41, information indicating the device from which the deletion reservation D71 has been transmitted.

As illustrated in Fig. 23, upon starting the series of processes, the second device 30B acquires information indicating whether the owner device 40 is the virtual device 40V in the process of step S96. Specifically, the second device 30B acquires, from the management server 70, the classification information TI stored in the storage device 72 of the management server 70. The second device 30B determines whether the owner device 40 is the virtual device 40V with reference to the classification information TI. When the owner device 40 is not the virtual device 40V (step S96: NO), the second device 30B proceeds to step S97.

In the process of step S97, the second device 30B determines to transmit, to the owner device 40 along with the pending-state notification M71, information indicating the device from which the deletion reservation D71 has been transmitted. Specifically, the second device 30B determines to transmit the name information ATP5 along with the pending-state notification M71 to the owner device 40.

In other words, the notification program PM2 causes the second device 30B to transmit information indicating the device 30 that has transmitted the deletion reservation D71, along with the pending-state notification M71, to the device 30 that belong to users other than the user of the device 30 that has transmitted the deletion reservation D71. Then, the second device 30B terminates the series of processes illustrated in Fig. 23.

When the owner device 40 is the virtual device 40V (step S96: YES), the second device 30B proceeds to step S98. In the process of step S98, the second device 30B determines not to transmit, to the owner device 40, information indicating the device from which the deletion reservation D71 has been transmitted. Specifically, the management server 70 determines to transmit only the pending-state notification M71 to the owner device 40.

In other words, the notification program PM2 causes the second device 30B to transmit only the pending-state notification M71 to the virtual device 40V among the devices 30 that belong to users other than the user of the device 30 that has transmitted the deletion reservation D71, without transmitting information indicating the device 30 that has transmitted the deletion reservation D71. Then, the second device 30B terminates the series of processes illustrated in Fig. 23.

Upon completion of the series of processes illustrated in Fig. 23, the second device 30B transmits the pending-state notification M71 and, if necessary, the name information ATP5, to each of the owner device 40, the third device 30C, and the vehicle 20.

As illustrated in Fig. 22, the second device 30B transmits the pending-state notification M71 and the name information ATP5 to the owner device 40 that is the mobile device 40M. The second device 30B also transmits the pending-state notification M71 and the name information ATP5 to the third device 30C. The management server 70 also transmits the pending-state notification M71 and the name information ATP5 to the vehicle 20. When the owner device 40 illustrated in Fig. 11 is the virtual device 40V, the management server 70 transmits only the pending-state notification M71 to the owner device 40.

Upon receiving the pending-state notification M71 and the name information ATP5, the mobile device 40M performs the process of step S153. In step S153, the mobile device 40M presents the HMI 32 with information indicating that deletion of the third digital key DK3, which is the subject of the deletion reservation D41, is pending. Step S153 is identical to step S64 in the first embodiment, and thus will not be described in detail.

Upon receiving the pending-state notification M71 and the name information ATP5, the third device 30C performs the process of step S154. In step S154, the third device 30C presents the HMI 32 with information indicating that deletion of the third digital key DK3, which is the subject of the deletion reservation D71, is pending. Step S154 is identical to step S66 in the first embodiment, and thus will not be described in detail.

Upon receiving the pending-state notification M71 and the name information ATP5, the vehicle 20 performs the process of step S155. In step S155, the vehicle 20 presents the HMI 22 with information indicating that deletion of the third digital key DK3, which is the subject of the deletion reservation D71, is pending. Step S155 is identical to step S67 in the first embodiment, and thus will not be described in detail.

The virtual device 40V may be configured to present information indicating that deletion of the third digital key DK3, which is the subject of the deletion reservation D71, is pending in response to receiving the pending-state notification M71.

### Transmission of Deletion Reservation D71

After transmitting the pending-state notification M71, the second device 30B transmits the deletion reservation D71 to the management server 70. The second device 30B may transmit the pending-state notification M71 after transmitting the deletion reservation D71. The second device 30B may simultaneously transmit the deletion reservation D71 and the pending-state notification M71. The management server 70 that has received the deletion reservation D71 executes steps S156 shown in Fig. 22.

In step S156, the management server 70 stores, in the database DB, information indicating that the third digital key DK3, which is the subject of the deletion reservation D71, is in the deletion-pending state. In the deletion-pending state, a digital key is deleted upon satisfaction of the predetermined condition RC. Then, the management server 70 proceeds to step S157.

In step S157, the management server 70 checks whether the predetermined condition RC is satisfied. When the predetermined condition RC is satisfied, the management system 10 proceeds to the deletion process DP. The deletion process DP is identical to that in the first embodiment, and thus will not be described in detail. Then, the management server 70 proceeds to step S158.

In step S158, the management server 70 generates a completion notification M72 for the deletion process, indicating that the series of processes for deleting the third digital key DK3 in accordance with the deletion reservation D71 has been completed. The management server 70 transmits the completion notification M72 to the second device 30B, from which the deletion reservation D71 has been transmitted.

Upon receiving the completion notification M72, the second device 30B performs the process of step S159. In step S159, the second device 30B presents the HMI 32 with information indicating that deletion of the third digital key DK3, which is the subject of the deletion reservation D71, has been completed. Then, the second device 30B proceeds to step S160.

In step S160, the second device 30B generates the completion notification M73 for the deletion process, indicating that the process for deleting the third digital key DK3 has been completed. The second device 30B transmits the completion notification M73 to each of the mobile device 40M, the third device 30C, and the vehicle 20. The mobile device 40M, the third device 30C, and the vehicle 20 are the destinations of the pending-state notification M71.

Upon receiving the completion notification M73, the mobile device 40M performs the process of step S161. In step S161, the mobile device 40M presents the HMI 32 with information indicating that deletion of the third digital key DK3, which is the subject of the deletion reservation D71, has been completed. Step S161 is identical to step S77 in the first embodiment, and thus will not be described in detail.

Upon receiving the completion notification M73, the third device 30C performs the process of step S162. In step S162, the third device 30C presents the HMI 32 with information indicating that deletion of the third digital key DK3, which is the subject of the deletion reservation D71, has been completed. Step S162 is identical to step S79 in the first embodiment, and thus will not be described in detail.

Upon receiving the completion notification M73, the vehicle 20 performs the process of step S163. In step S163, the vehicle 20 presents the HMI 22 with information indicating that deletion of the third digital key DK3, which is the subject of the deletion reservation D71, has been completed. Step S163 is identical to step S80 in the first embodiment, and thus will not be described in detail. Then, the management system 10 terminates the current series of processes for deleting the third digital key DK3.

### Operation of the Fourth Embodiment

The second device 30B serves as the device from which the deletion reservation D71 is transmitted. The notification program PM2 causes the execution device 36 of the second device 30B to transmit the pending-state notification M71. The pending-state notification M71 is transmitted to a device 30 that stores information relating to a digital key that is registered with a vehicle 20 that can use another digital key stored in the second device 30B.

### Advantages of the Fourth Embodiment

(4-1) The notification program PM2 allows the users of devices 30 other than the second device 30B that has transmitted the deletion reservation D71 to confirm that the third digital key DK3 is the subject of the deletion reservation D71 and is in the deletion-pending state.

(4-2) The notification program PM2 allows the execution device 36 of the second device 30B to transmit the pending-state notification M71 to the third device 30C storing the information relating to the third digital key DK3, which is the subject of the deletion reservation D71. The user of the third device 30C storing information relating to the third digital key DK3 may wish to confirm whether the deletion reservation D71 has been made for the third digital key DK3. The notification program PM2 allows the user of the third device 30C storing the information relating to the third digital key DK3 to confirm that the deletion reservation D71 has been made for the third digital key DK3.

(4-3) The notification program PM2 allows the execution device 36 of the second device 30B to transmit the pending-state notification M71 to the first device 30A, which stores the information relating to the first digital key DK1. The first digital key DK1 is a higher-level digital key that is directly hierarchically related to the third digital key DK3, which is the subject of the deletion reservation D71. The user of a device 30 that stores information relating to a given digital key is highly likely to wish to confirm whether the deletion reservation D71 has been made for a lower-level digital key that is directly hierarchically related to the given digital key. The notification program PM2 allows the user of the first device 30A to confirm that the deletion reservation D71 has been made for the third digital key DK3. In this case, the first device 30A is a device 30 that stores the information relating to the first digital key DK1, which is a higher-level digital key that is directly hierarchically related to the third digital key DK3.

(4-4) The notification program PM2 causes the execution device 36 of the second device 30B to transmit the pending-state notification M71 to the owner device 40, which is a device 30 that belongs to the owner of the vehicle 20. The owner of the vehicle 20 may wish to confirm whether the deletion reservation D71 has been made for a digital key of the vehicle 20. The notification program PM2 allows the user of the owner device 40 to confirm that the deletion reservation D71 has been made for the third digital key DK3, which is a digital key of the vehicle 20.

(4-5) The notification program PM2 causes the execution device 36 of the second device 30B to transmit information indicating the second device 30B, from which the deletion reservation D71 has been transmitted, along with the pending-state notification M71. The notification program PM2 allows the users of the devices 30 other than the second device 30B to confirm the information indicating the second device 30B, from which the deletion reservation D71 has been transmitted.

(4-6) The notification program PM2 causes the execution device 36 of the second device 30B to transmit information indicating the second device 30B, from which the deletion reservation D71 has been transmitted, along with the pending-state notification M71. When the owner device 40 is the virtual device 40V, the notification program PM2 causes the execution device 36 of the second device 30B to transmit only the pending-state notification M71 to the owner device 40, without transmitting the information indicating the second device 30B, from which the deletion reservation D71 has been transmitted. When the virtual device 40V receives the information indicating the second device 30B, from which the deletion reservation D71 has been transmitted, no user may be available to review the information. When no user is available to review the information, the information indicating the second device 30B is likely to be unnecessary for the virtual device 40V. In the above configuration, the notification program PM2 prevents the virtual device 40V from receiving unnecessary information.

### Modifications to the Fourth Embodiment

The fourth embodiment may be modified as follows. The fourth embodiment described above and the following modifications to the fourth embodiment may be combined as long as they are not technically inconsistent.

The notification program PM2 may allow the execution device 36 of the second device 30B to transmit the pending-state notification M71 to a device 30 that stores information relating to a digital key that is directly hierarchically related to the third digital key DK3, which is the subject of the deletion reservation D71. For example, the notification program PM2 may allow the execution device 36 of the second device 30B to transmit the pending-state notification M71 to the eighth device 30H. The eighth device 30H stores information relating to the eighth digital key DK8, which is directly hierarchically related to the third digital key DK3. The user of a device 30 that stores information relating to a given digital key is highly likely to wish to confirm whether the deletion reservation D71 has been made for a digital key that is directly hierarchically related to the given digital key. The notification program PM2 allows the user of the eighth device 30H to confirm that the deletion reservation D71 has been made for the third digital key DK3. The eighth device 30H is a device 30 that stores the information relating to the eighth digital key DK8, which is directly hierarchically related to the third digital key DK3.

The notification program PM2 may allow the execution device 36 of the second device 30B to transmit the pending-state notification M71 to a device 30 that stores information relating to a higher-level digital key than the third digital key DK3, which is the subject of the deletion reservation D71. For example, the notification program PM2 may allow the execution device 36 of the second device 30B to transmit the pending-state notification M71 to the fifth device 30E. The fifth device 30E stores information relating to the fifth digital key DK5, which has a higher level than the third digital key DK3. The user of a device 30 that stores information relating to a given digital key is highly likely to wish to confirm whether the deletion reservation D71 has been made for a digital key that has a lower level than the given digital key. The notification program PM2 allows the user of the fifth device 30E storing the information relating to the fifth digital key DK5 (i.e., a lower-level digital key than the third digital key DK3, which is the subject of the deletion reservation D71), to confirm that the deletion reservation D71 has been made for the third digital key DK3.

The notification program PM2 does not have to cause the execution device 36 of the second device 30B to transmit information indicating the second device 30B, from which the deletion reservation D71 has been transmitted, as long as the program causes the execution device 36 of the second device 30B to transmit the pending-state notification M71.

The notification program PM2 may change the destinations to which the pending-state notification M71 is to be transmitted by the execution device 36 of the second device 30B. For example, the notification program PM2 may allow the execution device 36 of the second device 30B to transmit the pending-state notification M71 while excluding, from the destinations of the pending-state notification M71, any device 30 that stores information relating to a digital key that is the subject of the deletion reservation D71. The notification program PM2 may allow the execution device 36 of the second device 30B to transmit the pending-state notification M71 while excluding the owner device 40 from the destinations of the pending-state notification M71.

The notification program PM2 may cause the execution device 36 of the second device 30B to transmit the pending-state notification M71 to a device 30 other than the first device 30A.

As shown in Fig. 24, the devices 30 to which the second device 30B transmits the pending-state notification M71 include multiple friend devices 51. The devices 30 to which the second device 30B transmits the pending-state notification M71 include multiple guest devices 52. The devices 30 to which the second device 30B transmits the pending-state notification M71 include multiple devices 40BO, which belong to the owner of a vehicle 20. The devices 30 to which the second device 30B transmits the pending-state notification M71 include multiple devices 51BF, which belong to the users of multiple friend devices 51. The devices 30 to which the second device 30B transmits the pending-state notification M71 include multiple devices 52BNF, which belong to the users of multiple guest devices 52.

The notification program PM2 may cause the execution device 36 of the second device 30B to transmit information indicating the second device 30B, from which the deletion reservation D71 has been transmitted, to the virtual device 40V along with the pending-state notification M71.

### Fifth Embodiment

The management system 10 according to a fifth embodiment will now be described with reference to Figs. 11, 14, 17, 21, 25, and 26. The following describes the fifth embodiment, focusing on differences from the fourth embodiment. In the fifth embodiment, the owner device 40 is the mobile device 40M. In the fifth embodiment, the second device 30B, which is a friend device 51, transmits a confirmation request D82 along with a pending-state notification M81 in a series of processes for deleting a digital key. The following description focuses on differences from the fourth embodiment, and identical portions are briefly described or omitted.

As shown in Fig. 21, the storage device 37 of the friend device 51 stores the notification program PM2. When a device 30 that stores the notification program PM2 transmits a deletion reservation D81, the notification program PM2 causes the device 30 to transmit the pending-state notification M81 and the confirmation request D82.

### Series of Processes for Deleting Digital Key

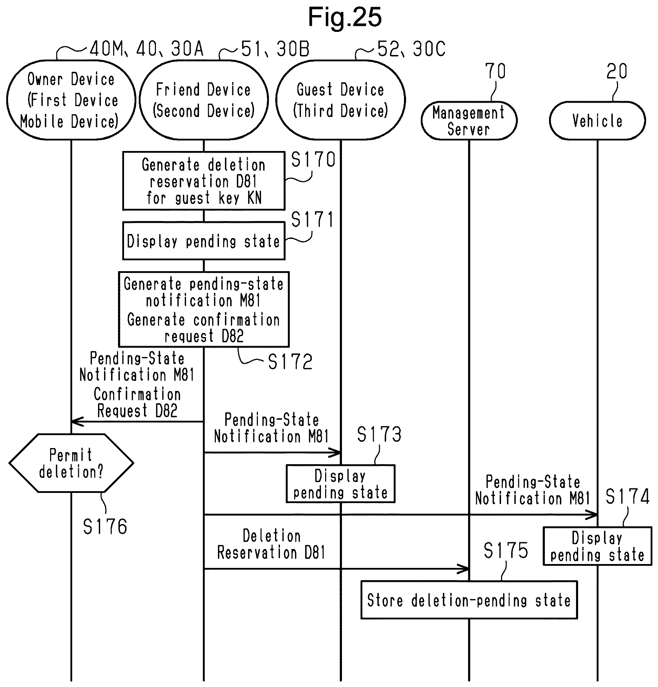

As shown in Fig. 25, upon receiving an operation to request deletion of the third digital key DK3, the second device 30B performs the process of step S170. In step S170, the second device 30B generates the deletion reservation D81 for the third digital key DK3. The deletion reservation D81 is a request to delete the third digital key DK3 when the predetermined condition RC is satisfied. The deletion reservation D81 is a signal for reserving deletion of the third digital key DK3. That is, the deletion reservation D81 is a request to delete information relating to a digital key registered with the vehicle 20 from a device 30 that stores that information.

The deletion reservation D81 includes a signal requesting deletion of the third digital key DK3, the digital key identification information ST3 indicating the third digital key DK3, and information indicating the predetermined condition RC. The deletion reservation D81 includes information for identifying the second device 30B that transmits the deletion reservation D81 to the management server 70. Upon generating the deletion reservation D81, the second device 30B proceeds to step S171.

In step S171, the second device 30B presents the HMI 32 with information indicating that deletion of the third digital key DK3, which is the subject of the deletion reservation D81, is pending. Then, the second device 30B proceeds to step S172.

### Destinations of Pending-State Notification M81 and Confirmation Request D82

In step S172, the second device 30B generates the pending-state notification M81 indicating that the digital key that is the subject of the deletion reservation D81 is in the deletion-pending state. Further, the second device 30B generates the confirmation request D82 for prompting the user of a device 30 to select whether to permit deletion of the digital key that is the subject of the deletion reservation D81.

The second device 30B transmits the pending-state notification M81 to the first device 30A storing the information relating to a higher-level digital key that is directly hierarchically related to the third digital key DK3, which is the subject of the deletion reservation D81. The second device 30B also transmits the pending-state notification M81 to the third device 30C storing the information relating to the third digital key DK3, which is the subject of the deletion reservation D81. The second device 30B also transmits the pending-state notification M81 to the vehicle 20.

Further, the second device 30B transmits the confirmation request D82 to the owner device 40. That is, the second device 30B transmits the pending-state notification M81 and the confirmation request D82 to the first device 30A. The first digital key DK1 has a higher level than the third digital key DK3. That is, the second device 30B transmits the confirmation request D82 to a device 30 that stores the information relating to a higher-level digital key than the third digital key DK3, which is the subject of the deletion reservation D81.

Upon receiving the pending-state notification M81, the third device 30C performs the process of step S173. In step S173, the third device 30C presents the HMI 32 with information indicating that deletion of the third digital key DK3, which is the subject of the deletion reservation D81, is pending. Step S173 is identical to step S66 in the first embodiment, and thus will not be described in detail.

Upon receiving the pending-state notification M81, the vehicle 20 performs the process of step S174. In step S174, the vehicle 20 presents the HMI 22 with information indicating that deletion of the third digital key DK3, which is the subject of the deletion reservation D81, is pending. Step S174 is identical to step S67 in the first embodiment, and thus will not be described in detail.

After transmitting the pending-state notification M81, the second device 30B transmits the deletion reservation D81 to the management server 70. The second device 30B may transmit the pending-state notification M81 after transmitting the deletion reservation D81. The second device 30B may simultaneously transmit the deletion reservation D81 and the pending-state notification M81.

After receiving the deletion reservation D81, the management server 70 executes the process of step S175. In step S175, the management server 70 stores, in the database DB, information indicating that the third digital key DK3, which is the subject of the deletion reservation D81, is in the deletion-pending state. In the deletion-pending state, a digital key is deleted upon satisfaction of the predetermined condition RC.

### Process Executed by the Mobile Device 40M after Receiving the Confirmation Request D82.

Upon receiving the pending-state notification M81 and the confirmation request D82, the mobile device 40M, which is the first device 30A, performs the process of step S176. In step S176, the mobile device 40M presents the HMI 32 with an image that prompts the user of the mobile device 40M to choose whether to permit deletion of the third digital key DK3, which is the subject of the deletion reservation D81. Step S176 is identical to step S116 in the second embodiment, and thus will not be described in detail.

### Step S176: YES

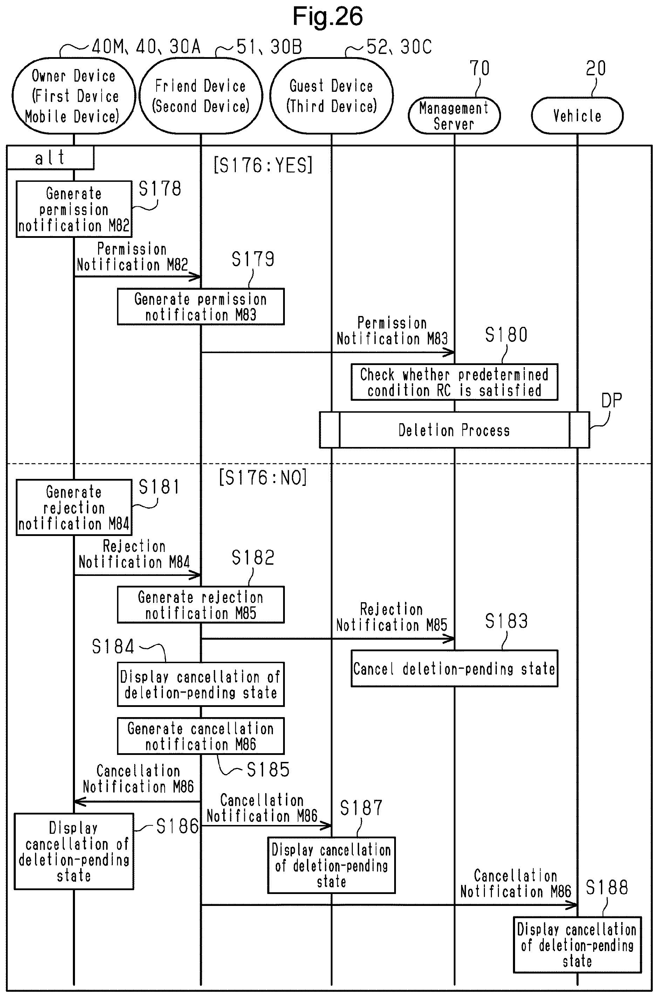

When the user of the mobile device 40M selects "YES" by using the radio button in the fourth image section IP4 in Fig. 17 and then presses "Confirm" in the second notification image IM2 (step S176: YES), the mobile device 40M performs the process of step S178 shown in Fig. 26. In the process of step S178, the mobile device 40M generates a permission notification M82. The permission notification M82 permits deletion of the third digital key DK3, which is the subject of the deletion reservation D81. The mobile device 40M transmits the permission notification M82 to the second device 30B.

Upon receiving the permission notification M82, the second device 30B executes the process of step S179. In the process of step S179, the second device 30B generates a permission notification M83. The permission notification M83 permits deletion of the third digital key DK3, which is the subject of the deletion reservation D81. The second device 30B transmits the permission notification M83 to the management server 70.

Upon receiving the permission notification M83, the management server 70 performs the process of step S180. In step S180, the management server 70 checks whether the predetermined condition RC is satisfied. When the predetermined condition RC is satisfied, the management system 10 proceeds to the deletion process DP. The deletion process DP includes the series of processes from step S69 to step S75 illustrated in Fig. 14. After terminating the deletion process DP, the management system 10 executes the series of processes from step S76 to step S80 shown in Fig. 11. Then, the management system 10 terminates the current series of processes for deleting the third digital key DK3.

### Step S176: NO

When the user of the mobile device 40M selects "NO" by using the radio button in the fourth image section IP4 in Fig. 17 and then presses "Confirm" in the second notification image IM2 (step S176: NO), the mobile device 40M performs the process of step S181 shown in Fig. 26. In the process of step S181, the mobile device 40M generates a rejection notification M84. The rejection notification M84 indicates that deletion of the third digital key DK3, which is the subject of the deletion reservation D81, is rejected. The mobile device 40M transmits the rejection notification M84 to the second device 30B.

Upon receiving the rejection notification M84, the second device 30B performs the process of step S182. In step S182, the second device 30B generates a rejection notification M85. The rejection notification M85 indicates that deletion of the third digital key DK3, which is the subject of the deletion reservation D81, is rejected. The second device 30B transmits the rejection notification M85 to the management server 70.

Upon receiving the rejection notification M85, the management server 70 performs the process of step S183. In step S183, the management server 70 cancels the deletion-pending state of the third digital key DK3. When the management server 70 receives the rejection notification M85, the management system 10 does not execute the deletion process DP for deleting the third digital key DK3, which is the subject of the deletion reservation D81.

After transmitting the rejection notification M85 to the management server 70, the second device 30B proceeds to step S184. In step S184, the second device 30B presents the HMI 32 with information indicating that the deletion-pending state of the third digital key DK3, which is the subject of the deletion reservation D81, has been canceled. Then, the second device 30B proceeds to step S185.

In the process of step S185, the second device 30B generates a cancellation notification M86. The cancellation notification M86 includes information indicating that the deletion-pending state of the third digital key DK3 has been canceled. Then, the second device 30B transmits the cancellation notification M86 to each of multiple devices 30 and the vehicle 20 to which the pending-state notification M81 was transmitted in the process of step S172, which is shown in Fig. 25. Specifically, the second device 30B transmits the cancellation notification M86 to each of the mobile device 40M, the third device 30C, and the vehicle 20.

Upon receiving the cancellation notification M86, the mobile device 40M performs the process of step S186. In step S186, the mobile device 40M presents the HMI 32 with information indicating that the deletion-pending state of the third digital key DK3, which is the subject of the deletion reservation D81, has been canceled. For example, the mobile device 40M displays, on the HMI 32, an image indicating that the deletion-pending state of the third digital key DK3 has been canceled.

Upon receiving the cancellation notification M86, the third device 30C performs the process of step S187. In step S187, the third device 30C presents the HMI 32 with information indicating that the deletion-pending state of the third digital key DK3, which is the subject of the deletion reservation D81, has been canceled. For example, the third device 30C displays, on the HMI 32, an image indicating that the deletion-pending state of the third digital key DK3 has been canceled.

Upon receiving the cancellation notification M86, the vehicle 20 performs the process of step S188. In step S188, the vehicle 20 presents the HMI 22 with information indicating that the deletion-pending state of the third digital key DK3, which is the subject of the deletion reservation D81, has been canceled. For example, the vehicle 20 displays, on the HMI 22, an image indicating that the deletion-pending state of the third digital key DK3 has been canceled. Then, the management system 10 terminates the current series of processes for deleting the third digital key DK3.

### Operation of the Fifth Embodiment

Even if the user of the second device 30B wishes the third digital key DK3 to be deleted, another user may not wish the third digital key DK3 to be deleted. The notification program PM2 causes the execution device 36 of the second device 30B to transmit the confirmation request D82 along with the pending-state notification M81 to devices 30 that belong to the user of a device 30 other than the second device 30B, which transmits the deletion reservation D81. The confirmation request D82 prompts the user of the device 30 to select whether to permit deletion of the third digital key DK3.

### Advantages of the Fifth Embodiment

The fifth embodiment has the following advantages in addition to advantages (4-1) to (4-5) of the fourth embodiment.

(5-1) To cause the execution device 36 of the second device 30B to delete the third digital key DK3, the notification program PM2 takes into account the preference of a user who does not wish the third digital key DK3 to be deleted.

(5-2) The notification program PM2 causes the execution device 36 of the second device 30B to transmit the confirmation request D82 to the first device 30A. The first device 30A stores the information relating to the first digital key DK1 having a higher level than the third digital key DK3, which is the subject of the deletion reservation D81. Even if a certain user wishes the third digital key DK3 to be deleted, the user of the first device 30A, which stores the information relating to a higher-level digital key than the third digital key DK3, may not wish the third digital key DK3 to be deleted. To cause the execution device 36 of the second device 30B to delete the third digital key DK3, the notification program PM2 takes into account the preference of the user of the device 30 that stores the information relating to the first digital key DK1, which has a higher level than the third digital key DK3.

(5-3) The notification program PM2 causes the execution device 36 of the second device 30B to transmit the confirmation request D82 to the owner device 40, which is a device 30 that belongs to the owner of the vehicle 20. Even if a certain user wishes a digital key to be deleted, the user of the owner device 40 may not wish that digital key to be deleted. To cause the execution device 36 of the second device 30B to delete a digital key, the notification program PM2 takes into account the preference of the user of the owner device 40.

### Modifications to the Fifth Embodiment

The fifth embodiment may be modified as follows. The fifth embodiment described above and the following modifications to the fifth embodiment may be combined as long as they are not technically inconsistent.

The notification program PM2 may cause the execution device 36 of the second device 30B to transmit the confirmation request D82 to any device 30 other than a device 30 that stores the information relating to a higher-level digital key than the third digital key DK3, which is the subject of the deletion reservation D81.

As shown in Fig. 24, the devices 30 to which the notification program PM2 causes the execution device 36 of the second device 30B to transmit the confirmation request D82 include multiple friend devices 51. The devices 30 to which the notification program PM2 causes the execution device 36 of the second device 30B to transmit the confirmation request D82 include multiple guest devices 52. The devices 30 to which the notification program PM2 causes the execution device 36 of the second device 30B to transmit the confirmation request D82 include multiple devices 40BO, which belong to the owner of the vehicle 20. The devices 30 to which the notification program PM2 causes the execution device 36 of the second device 30B to transmit the confirmation request D82 include multiple devices 51BF, which belong to the users of multiple friend devices 51. The devices 30 to which the notification program PM2 causes the execution device 36 of the second device 30B to transmit the confirmation request D82 include multiple devices 52BNF, which belong to the users of multiple guest devices 52.

The notification program PM2 may change the destination to which the confirmation request D82 is to be transmitted by the execution device 36 of the second device 30B. For example, the notification program PM2 may cause the execution device 36 of the second device 30B to transmit the confirmation request D82 to any device 30 that stores the information relating to a digital key that is the subject of the deletion reservation D81. The notification program PM2 may cause the execution device 36 of the second device 30B to transmit the confirmation request D82 to any device 30 that stores the information relating to a digital key directly hierarchically related to a digital key that is the subject of the deletion reservation D81. The notification program PM2 does not have to cause the execution device 36 of the second device 30B to transmit the confirmation request D82 to a device 30 that stores the information relating to a higher-level digital key than a digital key that is the subject of the deletion reservation D81. The notification program PM2 does not have to cause the execution device 36 of the second device 30B to transmit the confirmation request D82 to the owner device 40.

The notification program PM2 may cause the execution device 36 of the second device 30B to transmit the confirmation request D82 to multiple devices 30. In this case, the condition for causing the execution device 36 of the second device 30B to transmit the rejection notification M85 to the management server 70 may be set as needed. That is, the condition for canceling the deletion-pending state may be set as needed. For example, the notification program PM2 may set a condition such that the program causes the execution device 36 of the second device 30B to transmit the rejection notification M85 to the management server 70 when the second device 30B receives the rejection notification M84 from all of multiple devices 30 to which the confirmation request D82 has been transmitted. For example, the notification program PM2 may set a condition such that the program causes the execution device 36 of the second device 30B to transmit the rejection notification M85 to the management server 70 when the second device 30B receives the rejection notification M84 from at least half of the devices 30 to which the confirmation request D82 has been transmitted. For example, the notification program PM2 may set a condition such that the program causes the execution device 36 of the second device 30B to transmit the permission notification M83 to the management server 70 so as not to cancel the deletion-pending state even when the second device 30B receives the permission notification M82 from the device 30 that stores the information relating to the highest-level digital key but also receives the rejection notification M84 from another device 30. For example, the notification program PM2 may set a condition such that the program causes the execution device 36 of the second device 30B to transmit the rejection notification M85 to the management server 70 even when the second device 30B receives the rejection notification M84 from at least one device 30 but also receives the permission notification M82 from another device 30.

### Sixth Embodiment

The management system 10 according to a sixth embodiment will now be described with reference to Figs. 11, 27, and 28. The following describes the sixth embodiment, focusing on differences from the fourth embodiment. In the sixth embodiment, the owner device 40 is the virtual device 40V. In the third embodiment, along with deletion of a digital key that is the subject of a deletion reservation D91, a lower-level digital key directly hierarchically related to that digital key is configured to be deleted. The following description focuses on differences from the fourth embodiment, and identical portions are briefly described or omitted.

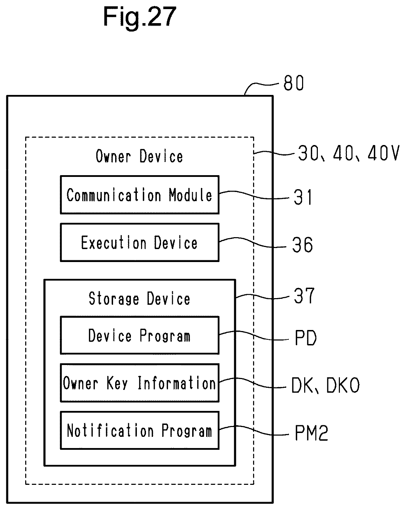

As illustrated in Fig. 27, the storage device 37 of the owner device 40 stores the notification program PM2. When the device 30 that stores the notification program PM2 transmits a deletion reservation D91, the notification program PM2 causes the device 30 that stores the program to transmit the pending-state notification M91 while excluding, from the destinations of the pending-state notification M91, a device 30 that stores information relating to a lower-level digital key directly hierarchically related to a digital key that is the subject of the deletion reservation D91.

### Series of Processes for Deleting Digital Key

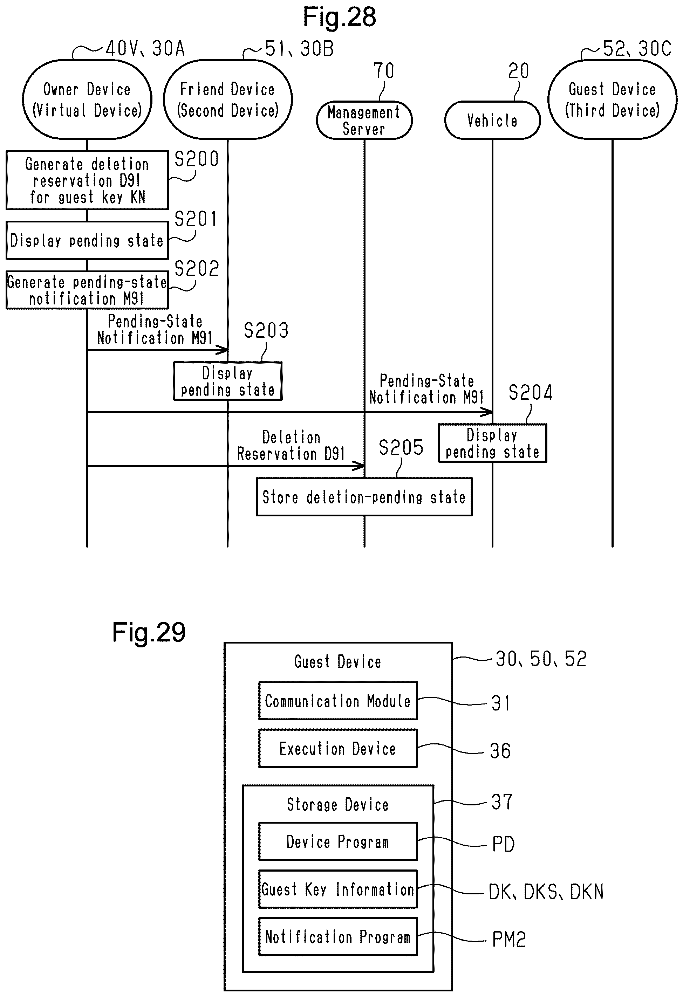

As shown in Fig. 28, upon receiving an operation to request deletion of the second digital key DK2, the virtual device 40V performs the process of step S200. In step S200, the virtual device 40V generates the deletion reservation D91 for the second digital key DK2. The deletion reservation D91 is identical to the deletion reservation D61 in the third embodiment, and thus will not be described in detail. Upon generating the deletion reservation D91, the virtual device 40V proceeds to step S201. In step S201, the virtual device 40V presents the HMI 32 with information indicating that deletion of the second digital key DK2, which is the subject of the deletion reservation D91, is pending. Then, the virtual device 40V proceeds to step S202.

In step S202, the virtual device 40V generates the pending-state notification M91 indicating that the second digital key DK2, which is the subject of the deletion reservation D91, is in the deletion-pending state.

### Destination of Pending-State Notification M91

The virtual device 40V transmits the pending-state notification M91 while excluding, from the destinations of the pending-state notification M91, a device 30 that stores information relating to a lower-level digital key directly hierarchically related to the second digital key DK2, which is the subject of the deletion reservation D91.

As shown in Fig. 28, the virtual device 40V transmits the pending-state notification M91 to the second device 30B, which stores the information relating to the second digital key DK2. The virtual device 40V transmits the pending-state notification M91 to the vehicle 20. The virtual device 40V does not transmit the pending-state notification M91 to the third device 30C storing the information relating to the third digital key DK3, which is a lower-level digital key that is directly hierarchically related to the second digital key DK2.

Upon receiving the pending-state notification M91, the second device 30B performs the process of step S203. In step S203, the second device 30B presents the HMI 32 with information indicating that deletion of the second digital key DK2, which is the subject of the pending-state notification M91, is pending. Step S203 is identical to step S144 in the third embodiment, and thus will not be described in detail.

Upon receiving the pending-state notification M91, the vehicle 20 performs the process of step S204. In step S204, the vehicle 20 presents the HMI 22 with information indicating that deletion of the second digital key DK2, which is the subject of the deletion reservation D91, is pending. Step S204 is identical to step S145 in the third embodiment, and thus will not be described in detail.

### Transmission of Deletion Reservation D91

After transmitting the pending-state notification M91, the virtual device 40V transmits the deletion reservation D91 to the management server 70. The virtual device 40V may transmit the pending-state notification M91 after transmitting the deletion reservation D91. The virtual device 40V may simultaneously transmit the deletion reservation D91 and the pending-state notification M91. After receiving the deletion reservation D91, the management server 70 executes the process of step S205. In step S205, the management server 70 stores, in the database DB, information indicating that the second digital key DK2, which is the subject of the deletion reservation D91, is in the deletion-pending state. Then, the management system 10 deletes the second digital key DK2 by performing the same processes as those subsequent to step S68 shown in Fig. 11. In this case, the deletion process DP is performed by each of the second device 30B, the management server 70, and the vehicle 20. Subsequently, the management system 10 deletes the third digital key DK3 by performing the same processes as those subsequent to step S68 shown in Fig. 11. In this case, the deletion process DP is performed by each of the third device 30C, the management server 70, and the vehicle 20.

### Operation of the Sixth Embodiment

For example, the owner device 40 may be the virtual device 40V when a rental operator or a sharing operator owns the vehicle 20. When, for example, a rental operator owns the vehicle 20, along with deletion of a digital key that is the subject of the deletion reservation D91, a lower-level digital key directly hierarchically related to that digital key may be configured to be deleted.

In this case, for example, if the pending-state notification M91 is transmitted to the third device 30C storing the information relating to the third digital key DK3 (i.e., a lower-level digital key that is directly hierarchically related to the second digital key DK2, which is the subject of the deletion reservation D91), the user of the third device 30C would receive unnecessary notifications.

### Advantage of the Sixth Embodiment

In addition to the advantages (4-1) and (4-3) of the fourth embodiment, the sixth embodiment has the following advantage.

(6-1) When the second digital key DK2 is the subject of deletion, the notification program PM2 causes the execution device 36 of the virtual device 40V to transmit the pending-state notification M91 while excluding the third device 30C, which stores the information relating to the third digital key DK3, from the destinations of the notification. This allows the user of the third device 30C to avoid receiving unnecessary notifications.

### Seventh Embodiment

The management system 10 according to a seventh embodiment will now be described with reference to Figs. 29 to 31. In the seventh embodiment, the third device 30C is the subject of a deletion reservation D101, and transmits a pending-state notification M102 and a completion notification M104. In the seventh embodiment, the third device 30C stores information necessary for communicating with each of the first device 30A and the second device 30B in the storage device 37. The following description focuses on differences from the first embodiment, and identical portions are briefly described or omitted.

As shown in Fig. 29, the storage device 37 of a guest device 52, which is the subject of the deletion reservation D101, stores the notification program PM2. When a device 30 that stores the notification program PM2 receives the pending-state notification M101, the notification program PM2 causes the execution device 36 of that device 30 to transmit the pending-state notification M102.

### Series of Processes for Deleting Digital Key

A series of processes for deleting a digital key in the management system 10 in the seventh embodiment will now be described. In the present embodiment, the digital key to be deleted is the third digital key DK3. Thus, a series of processes for deleting the third digital key DK3 will be described.

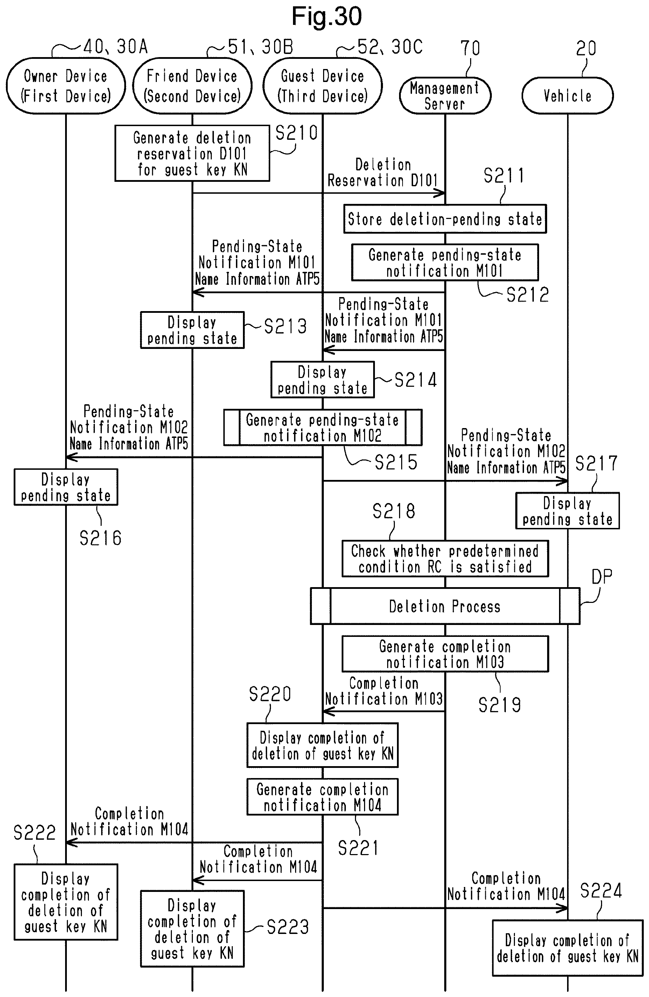

As shown in Fig. 30, upon receiving an operation to request deletion of the third digital key DK3, the second device 30B performs the process of step S210. In step S210, the second device 30B generates the deletion reservation D101 for the third digital key DK3. The deletion reservation D101 is identical to the deletion reservation D41 in the first embodiment, and thus will not be described in detail. The second device 30B transmits the deletion reservation D101 to the management server 70.

Upon receiving the deletion reservation D101 of the third digital key DK3, the management server 70 performs the process of step S211. Step S211 is identical to step S62 in the first embodiment, and thus will not be described in detail. Then, the management server 70 proceeds to step S212.

In step S212, the management server 70 generates the pending-state notification M101, indicating that the digital key requested to be deleted by the deletion reservation D101 is in the deletion-pending state.

### Destination of Pending-State Notification M101

The management server 70 transmits the pending-state notification M101 to the third device 30C storing the information relating to the third digital key DK3, which is the subject of the deletion reservation D101. The third device 30C is the guest device 52. The management server 70 also transmits the pending-state notification M101 to the second device 30B, from which the deletion reservation D101 has been transmitted.

The management server 70 transmits, along with the pending-state notification M101, information indicating a device 30 that has transmitted the deletion reservation D101. Specifically, the management server 70 transmits information for identifying the second device 30B along with the pending-state notification M101. For example, the management server 70 transmits the name information ATP5, which indicates the name for identifying the second digital key DK2 registered with the second device 30B, along with the pending-state notification M101.

Upon receiving the pending-state notification M101, the second device 30B performs the process of step S213. In step S213, the second device 30B presents the HMI 32 with information indicating that deletion of the third digital key DK3, which is the subject of the deletion reservation D101, is pending. Step S213 is identical to step S65 in the first embodiment, and thus will not be described in detail.

Upon receiving the pending-state notification M101, the third device 30C performs the process of step S214. In step S214, the third device 30C presents the HMI 32 with information indicating that deletion of the third digital key DK3, which is the subject of the deletion reservation D101, is pending. Step S214 is identical to step S66 in the first embodiment, and thus will not be described in detail. Then, the third device 30C proceeds to step S215.

### Destination of Pending-State Notification M102

In step S215, the third device 30C generates the pending-state notification M102, indicating that the digital key requested to be deleted by the deletion reservation D101 is in the deletion-pending state.

Further, in step S215, the third device 30C that has received the pending-state notification M101 transmits the pending-state notification M102 to devices 30 that belong to users other than the user of the second device 30B, from which the deletion reservation D101 has been transmitted, among multiple devices 30 that store information relating to digital keys registered with the vehicle 20.

Specifically, for example, the third device 30C transmits the pending-state notification M102 to the first device 30A, which stores the information relating to the first digital key DK1. The third device 30C also transmits the pending-state notification M102 to the vehicle 20.

The third device 30C transmits, along with the pending-state notification M102, information indicating a device 30 that has transmitted the deletion reservation D101. Specifically, the third device 30C transmits information for identifying the second device 30B along with the pending-state notification M102. For example, the third device 30C transmits the name information ATP5, which indicates the name for identifying the second digital key DK2 registered with the second device 30B, along with the pending-state notification M102.

### Change to Information Transmitted with Pending-State Notification M102

The third device 30C is configured to change the information to be transmitted along with the pending-state notification M102 depending on whether the owner device 40 is the mobile device 40M or the virtual device 40V. Upon generating the pending-state notification M102, the third device 30C executes a series of processes for determining whether to transmit information indicating a device that has transmitted the deletion reservation D101 along with the pending-state notification M102.

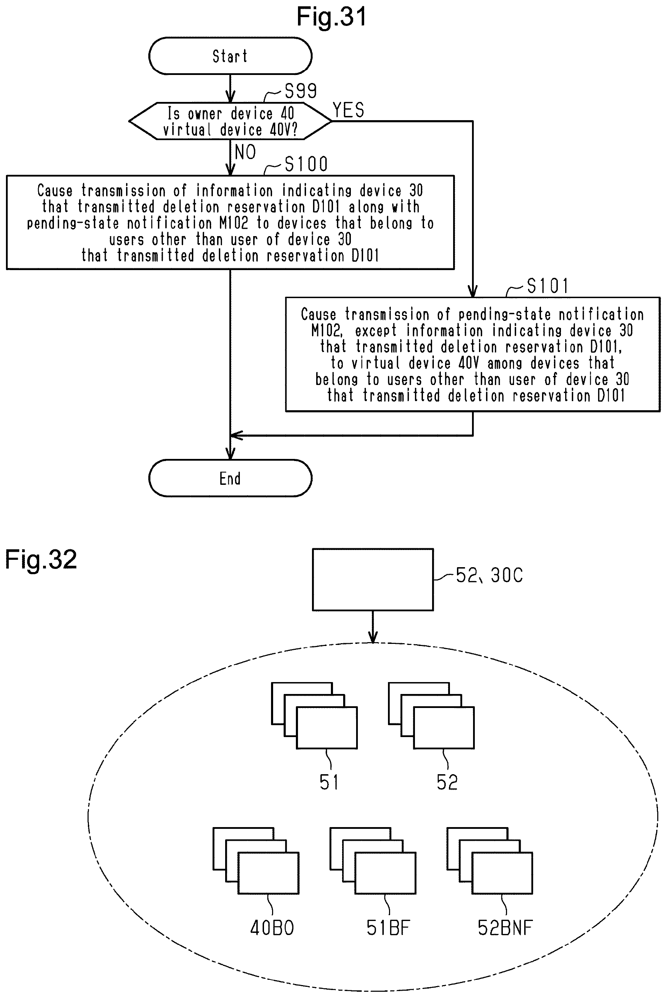

As illustrated in Fig. 31, upon starting the series of processes, the third device 30C acquires information indicating whether the owner device 40 is the virtual device 40V in the process of step S99. Specifically, the third device 30C acquires, from the management server 70, the classification information TI stored in the storage device 72 of the management server 70. The third device 30C determines whether the owner device 40 is the virtual device 40V with reference to the classification information TI. When the owner device 40 is not the virtual device 40V (step S99: NO), the third device 30C proceeds to step S100.

In the process of step S100, the third device 30C determines to transmit, to the owner device 40 along with the pending-state notification M102, information indicating the device that has transmitted the deletion reservation D101. Specifically, the third device 30C determines to transmit the name information ATP5 along with the pending-state notification M102 to the owner device 40.

In other words, the notification program PM2 causes the third device 30C to transmit information indicating the device 30 that has transmitted the deletion reservation D101, along with the pending-state notification M102, to devices 30 that belong to users other than the user of the device 30 that has transmitted the deletion reservation D101. Then, the third device 30C terminates the series of processes illustrated in Fig. 31.

When the owner device 40 is the virtual device 40V (step S99: YES), the third device 30C proceeds to step S101. In the process of step S101, the third device 30C determines not to transmit, to the owner device 40, the information indicating the device that has transmitted the deletion reservation D101. Specifically, the third device 30C determines to transmit only the pending-state notification M102 to the owner device 40.

In other words, the notification program PM2 causes the third device 30C to transmit only the pending-state notification M102 to the virtual device 40V among the devices 30 belonging to users other than the user of the device 30 that has transmitted the deletion reservation D101, without transmitting information indicating the device 30 that has transmitted the deletion reservation D101. Then, the third device 30C terminates the series of processes illustrated in Fig. 31.

Upon completion of the series of processes illustrated in Fig. 31, the third device 30C transmits the pending-state notification M102 and, if necessary, the name information ATP5, to each of the owner device 40 and the vehicle 20.

As illustrated in Fig. 30, the third device 30C transmits the pending-state notification M102 and the name information ATP5 to the owner device 40 that is the mobile device 40M. The third device 30C also transmits the pending-state notification M102 and the name information ATP5 to the vehicle 20. When the owner device 40 illustrated in Fig. 30 is the virtual device 40V, the third device 30C transmits only the pending-state notification M102 to the owner device 40.

Upon receiving the pending-state notification M102 and the name information ATP5, the mobile device 40M performs the process of step S216. In step S216, the mobile device 40M presents the HMI 32 with information indicating that deletion of the third digital key DK3, which is the subject of the deletion reservation D101, is pending. Step S216 is identical to step S64 in the first embodiment, and thus will not be described in detail.

Upon receiving the pending-state notification M102 and the name information ATP5, the vehicle 20 performs the process of step S217. In step S217, the vehicle 20 presents the HMI 22 with information indicating that deletion of the third digital key DK3, which is the subject of the deletion reservation D101, is pending. Step S217 is identical to step S67 in the first embodiment, and thus will not be described in detail.

The virtual device 40V may be configured to present information indicating that deletion of the third digital key DK3, which is the subject of the deletion reservation D101, is pending in response to receiving the pending-state notification M102.

After transmitting the pending-state notification M101, the management server 70 proceeds to step S218. In step S218, the management server 70 checks whether the predetermined condition RC is satisfied. When the predetermined condition RC is satisfied, the management system 10 proceeds to the deletion process DP. The deletion process DP is identical to that in the first embodiment, and thus will not be described in detail. Then, the management server 70 proceeds to step S219.

In step S219, the management server 70 generates a completion notification M103 for the deletion process, indicating that the series of processes for deleting the third digital key DK3 in accordance with the deletion reservation D101 has been completed. The management server 70 transmits the completion notification M103 to the third device 30C storing the information relating to the third digital key DK3, which is the subject of the deletion reservation D101.

Upon receiving the completion notification M103, the third device 30C performs the process of step S220. In step S220, the third device 30C presents the HMI 32 with information indicating that deletion of the third digital key DK3, which is the subject of the deletion reservation D101, has been completed. Step S220 is identical to step S79 in the first embodiment, and thus will not be described in detail. Then, the third device 30C proceeds to step S221.

### Transmission of Completion Notification M104

In step S221, the third device 30C generates a completion notification M104 for the deletion process, indicating that the series of processes for deleting the third digital key DK3 in accordance with the deletion reservation D101 has been completed. The third device 30C transmits the completion notification M104 to each of the mobile device 40M, the second device 30B, and the vehicle 20.

Upon receiving the completion notification M104, the mobile device 40M performs the process of step S222. In step S222, the mobile device 40M presents the HMI 32 with information indicating that deletion of the third digital key DK3, which is the subject of the deletion reservation D101, has been completed. Step S222 is identical to step S77 in the first embodiment, and thus will not be described in detail.

Upon receiving the completion notification M104, the second device 30B performs the process of step S223. In step S223, the second device 30B presents the HMI 32 with information indicating that deletion of the third digital key DK3, which is the subject of the deletion reservation D101, has been completed. Step S223 is identical to step S78 in the first embodiment, and thus will not be described in detail.

Upon receiving the completion notification M104, the vehicle 20 performs the process of step S224. In step S224, the vehicle 20 presents the HMI 22 with information indicating that deletion of the third digital key DK3, which is the subject of the deletion reservation D101, has been completed. Step S224 is identical to step S80 in the first embodiment, and thus will not be described in detail. Then, the management system 10 terminates the current series of processes for deleting the third digital key DK3.

### Operation of the Seventh Embodiment

The third device 30C stores the information relating to the third digital key DK3, which is the subject of the deletion reservation D101. The notification program PM2 causes the execution device 36 of the third device 30C to transmit the pending-state notification M102 to the first device 30A. Among multiple devices 30 that store information relating to digital keys other than the third digital key DK3 registered with the vehicle 20, the first device 30A is a device 30 that belongs to a user other than the user of the second device 30B, which has transmitted the deletion reservation D101.

### Advantages of the Seventh Embodiment

(7-1) The notification program PM2 allows the users of devices 30 other than the second device 30B that has transmitted the deletion reservation D101 to confirm that the third digital key DK3 is the subject of the deletion reservation D101 and is in the deletion-pending state.

(7-2) The notification program PM2 allows the execution device 36 of the third device 30C to transmit the pending-state notification M102 to the first device 30A, which stores the information relating to the first digital key DK1. The first digital key DK1 is a higher-level digital key that is directly hierarchically related to the third digital key DK3, which is the subject of the deletion reservation D101. The user of a device 30 that stores information relating to a given digital key is highly likely to wish to confirm whether the deletion reservation D101 has been made for a lower-level digital key that is directly hierarchically related to the given digital key. The notification program PM2 allows the user of the first device 30A to confirm that the deletion reservation D101 has been made for the third digital key DK3. In this case, the first device 30A is a device 30 that stores the information relating to the first digital key DK1, which is a higher-level digital key that is directly hierarchically related to the third digital key DK3.

(7-3) The notification program PM2 causes the execution device 36 of the third device 30C to transmit the pending-state notification M102 to the owner device 40, which is a device 30 that belongs to the owner of the vehicle 20. The owner of the vehicle 20 may wish to confirm whether the deletion reservation D101 has been made for a digital key of the vehicle 20. The notification program PM2 allows the user of the owner device 40 to confirm that the deletion reservation D101 has been made for the third digital key DK3, which is a digital key of the vehicle 20.

(7-4) The notification program PM2 causes the execution device 36 of the third device 30C to transmit information indicating the second device 30B, from which the deletion reservation D101 has been transmitted, along with the pending-state notification M102. The notification program PM2 allows the users of the devices 30 other than the second device 30B to confirm the information indicating the second device 30B, from which the deletion reservation D101 has been transmitted.

(7-5) The notification program PM2 causes the execution device 36 of the third device 30C to transmit information indicating the second device 30B, from which the deletion reservation D101 has been transmitted, along with the pending-state notification M102. When the owner device 40 is the virtual device 40V, the notification program PM2 causes the execution device 36 of the third device 30C to transmit only the pending-state notification M101 to the owner device 40, without transmitting the information indicating the second device 30B, from which the deletion reservation D101 has been transmitted. When the virtual device 40V receives the information indicating the second device 30B, from which the deletion reservation D101 has been transmitted, no user may be available to review the information. When no user is available to review the information, the information indicating the second device 30B is likely to be unnecessary for the virtual device 40V. In the above configuration, the notification program PM2 prevents the virtual device 40V from receiving unnecessary information.

### Modifications to the Seventh Embodiment

The seventh embodiment may be modified as described below. The seventh embodiment described above and the following modifications to the seventh embodiment may be combined as long as they are not technically inconsistent.

The notification program PM2 may allow the execution device 36 of the third device 30C to transmit the pending-state notification M102 to a device 30 that stores information relating to a digital key that is directly hierarchically related to the third digital key DK3, which is the subject of the deletion reservation D101. For example, the notification program PM2 may allow the execution device 36 of the third device 30C to transmit the pending-state notification M102 to the eighth device 30H. The eighth device 30H stores information relating to the eighth digital key DK8, which is directly hierarchically related to the third digital key DK3. The user of a device 30 that stores information relating to a given digital key is highly likely to wish to confirm whether the deletion reservation D101 has been made for a digital key that is directly hierarchically related to the given digital key. The notification program PM2 allows the user of the eighth device 30H to confirm that the deletion reservation D101 has been made for the third digital key DK3. The eighth device 30H is a device 30 that stores the information relating to the eighth digital key DK8, which is directly hierarchically related to the third digital key DK3.

The notification program PM2 may allow the execution device 36 of the third device 30C to transmit the pending-state notification M102 to a device 30 that stores information relating to a higher-level digital key than the third digital key DK3, which is the subject of the deletion reservation D101. For example, the notification program PM2 may allow the execution device 36 of the third device 30C to transmit the pending-state notification M102 to the fifth device 30E. The fifth device 30E stores information relating to the fifth digital key DK5, which has a higher level than the third digital key DK3. The user of a device 30 that stores information relating to a given digital key is highly likely to wish to confirm whether the deletion reservation D101 has been made for a digital key that has a lower level than the given digital key. The notification program PM2 allows the user of the fifth device 30E to confirm that the deletion reservation D101 has been made for the third digital key DK3. The fifth device 30E is a device 30 that stores the information relating to the fifth digital key DK5 (i.e., a higher-level digital key than the third digital key DK3, which is the subject of the deletion reservation D101).

The notification program PM2 does not have to cause the execution device 36 of the third device 30C to transmit information indicating the second device 30B, from which the deletion reservation D101 has been transmitted, as long as the program causes the execution device 36 of the third device 30C to transmit the pending-state notification M102.

The notification program PM2 may change the destination to which the pending-state notification M102 is to be transmitted by the execution device 36 of the third device 30C. For example, the notification program PM2 may exclude the owner device 40 from the destination to which the pending-state notification M102 is to be transmitted by the execution device 36 of the third device 30C.

The notification program PM2 may cause the execution device 36 of the third device 30C to transmit the pending-state notification M102 to a device 30 other than the first device 30A.

As shown in Fig. 32, the devices 30 to which the third device 30C transmits the pending-state notification M102 include multiple friend devices 51. The devices 30 to which the third device 30C transmits the pending-state notification M102 include multiple guest devices 52. The devices 30 to which the third device 30C transmits the pending-state notification M102 include multiple devices 40BO, which belong to the owner of the vehicle 20. The devices 30 to which the third device 30C transmits the pending-state notification M102 include multiple devices 51BF, which belong to the users of the friend devices 51. The devices 30 to which the third device 30C transmits the pending-state notification M102 include multiple devices 52BNF, which belong to the users of the guest devices 52.

The notification program PM2 may cause the execution device 36 of the third device 30C to transmit information indicating the second device 30B, from which the deletion reservation D101 has been transmitted, to the virtual device 40V along with the pending-state notification M102.

### Eighth Embodiment

The management system 10 according to an eighth embodiment will now be described with reference to Figs. 11, 17, 29, 33, and 34. The following describes the eighth embodiment, focusing on differences from the seventh embodiment. In the eighth embodiment, the owner device 40 is the mobile device 40M. In the eighth embodiment, the third device 30C, which is a guest device 52, transmits a confirmation request D112 along with a pending-state notification M112 in the series of processes for deleting a digital key. The following description focuses on differences from the seventh embodiment, and identical portions are briefly described or omitted.

As shown in Fig. 29, the storage device 37 of the guest device 52 stores the notification program PM2. When a device 30 that stores the notification program PM2 transmits the pending-state notification M112, the notification program PM2 causes the device 30 to transmit the confirmation request D112 along with the pending-state notification M112.

### Series of Processes for Deleting Digital Key

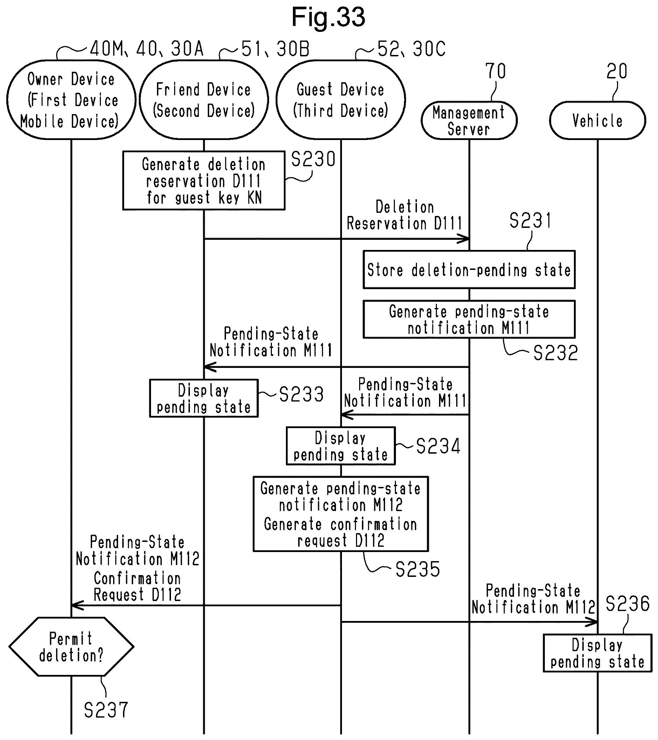

As shown in Fig. 33, upon receiving an operation to request deletion of the third digital key DK3, the second device 30B performs the process of step S230. In step S230, the second device 30B generates a deletion reservation D111 for the third digital key DK3. The deletion reservation D111 is a request to delete the third digital key DK3 when the predetermined condition RC is satisfied. The deletion reservation D111 is a signal for reserving deletion of the third digital key DK3. That is, the deletion reservation D111 is a request to delete information relating to a digital key registered with the vehicle 20 from a device 30 that stores that information.

The deletion reservation D111 includes a signal requesting deletion of the third digital key DK3, the digital key identification information ST3 indicating the third digital key DK3, and information indicating the predetermined condition RC. The deletion reservation D111 includes information for identifying the second device 30B that transmits the deletion reservation D111 to the management server 70. The second device 30B transmits the deletion reservation D111 to the management server 70.

After receiving the deletion reservation D111, the management server 70 executes the process of step S231. In step S231, the management server 70 stores, in the database DB, information indicating that the third digital key DK3, which is the subject of the deletion reservation D111, is in the deletion-pending state. Then, the management server 70 proceeds to step S232.

In step S232, the management server 70 generates the pending-state notification M111, indicating that the digital key requested to be deleted by the deletion reservation D111 is in the deletion-pending state. The pending-state notification M111 includes information used to identify the second device 30B that has transmitted the deletion reservation D111. Specifically, the pending-state notification M111 includes the name information ATP5, which indicates the name for identifying the second digital key DK2 registered with the second device 30B.

### Destination of Pending-State Notification M111

The management server 70 transmits the pending-state notification M111 to the third device 30C storing the information relating to the third digital key DK3, which is the subject of the deletion reservation D111. The management server 70 also transmits the pending-state notification M111 to the second device 30B, to which the deletion reservation D111 has been transmitted.

Upon receiving the pending-state notification M111, the second device 30B performs the process of step S233. In step S233, the second device 30B presents the HMI 32 with information indicating that deletion of the third digital key DK3, which is the subject of the deletion reservation D111, is pending. Step S233 is identical to step S65 in the first embodiment, and thus will not be described in detail.

Upon receiving the pending-state notification M111, the third device 30C performs the process of step S234. In step S234, the third device 30C presents the HMI 32 with information indicating that deletion of the third digital key DK3, which is the subject of the deletion reservation D111, is pending. Step S234 is identical to step S66 in the first embodiment, and thus will not be described in detail. Then, the third device 30C proceeds to step S235.

### Destinations of Pending-State Notification M112 and Confirmation Request D112

In step S235, the third device 30C generates the pending-state notification M112, indicating that a digital key that is the subject of the deletion reservation D111 is in the deletion-pending state. Further, the third device 30C generates the confirmation request D112 for prompting the user of a device 30 to select whether to permit deletion of the digital key that is the subject of the deletion reservation D111.

The third device 30C transmits the pending-state notification M112 to devices 30 that belong to users other than the user of the second device 30B, from which the deletion reservation D71 has been transmitted, among multiple devices 30 that store information relating to digital keys registered with the vehicle 20,

Specifically, for example, the third device 30C transmits the pending-state notification M112 to the first device 30A, which stores the information relating to the first digital key DK1. The third device 30C also transmits the pending-state notification M112 to the vehicle 20.

Further, the third device 30C transmits the confirmation request D112 along with the pending-state notification M112 to the owner device 40. That is, the third device 30C transmits the pending-state notification M112 and the confirmation request D112 to the first device 30A. The first digital key DK1 has a higher level than the third digital key DK3. That is, the third device 30C transmits the confirmation request D112 to a device 30 that stores the information relating to a higher-level digital key than the third digital key DK3, which is the subject of the deletion reservation D111.

Upon receiving the pending-state notification M112, the vehicle 20 performs the process of step S236. In step S236, the vehicle 20 presents the HMI 22 with information indicating that deletion of the third digital key DK3, which is the subject of the deletion reservation D111, is pending. Step S236 is identical to step S67 in the first embodiment, and thus will not be described in detail.

### Process Executed by the Mobile Device 40M after Receiving the Confirmation Request D112

Upon receiving the pending-state notification M112 and the confirmation request D112, the mobile device 40M, which is the first device 30A, performs the process of step S237. In step S237, the mobile device 40M presents the HMI 32 with an image that prompts the user of the mobile device 40M to choose whether to permit deletion of the third digital key DK3, which is the subject of the deletion reservation D111. Step S237 is identical to step S116 in the second embodiment, and thus will not be described in detail.

### Step S237: YES

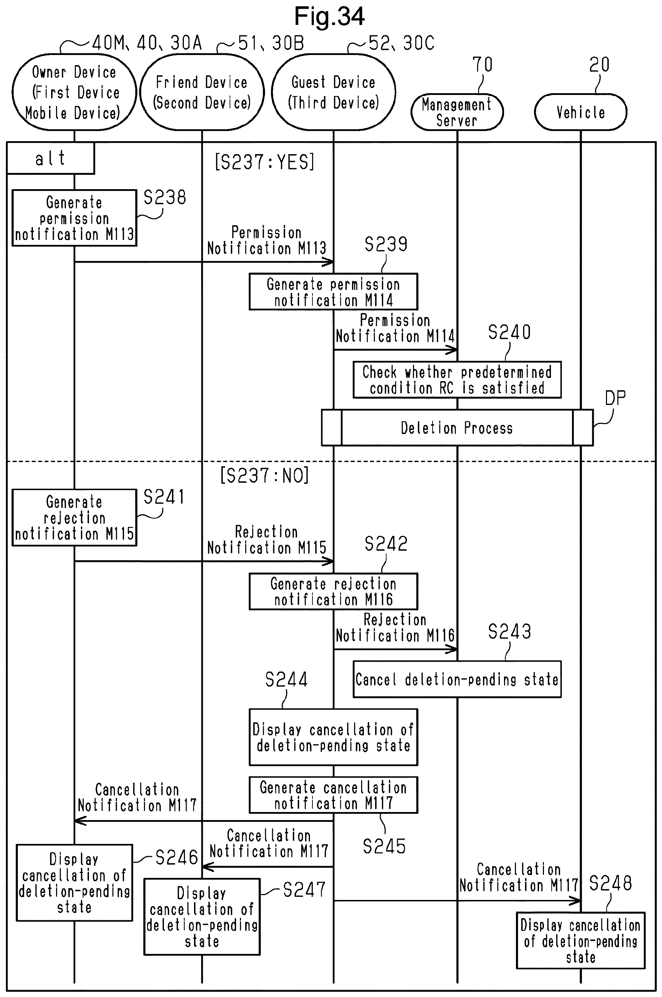

When the user of the mobile device 40M selects "YES" by using the radio button in the fourth image section IP4 in Fig. 17 and then presses "Confirm" in the second notification image IM2 (step S237: YES), the mobile device 40M performs the process of step S238 shown in Fig. 34. In the process of step S238, the mobile device 40M generates a permission notification M113. The permission notification M113 permits deletion of the third digital key DK3, which is the subject of the deletion reservation D111. The mobile device 40M transmits the permission notification M113 to the third device 30C.

Upon receiving the permission notification M113, the third device 30C performs the process of step S239. In the process of step S239, the third device 30C generates a permission notification M114. The permission notification M114 permits deletion of the third digital key DK3, which is the subject of the deletion reservation D111. The third device 30C transmits the permission notification M114 to the management server 70.

Upon receiving the permission notification M114, the management server 70 performs the process of step S240. In step S240, the management server 70 checks whether the predetermined condition RC is satisfied. When the predetermined condition RC is satisfied, the management system 10 proceeds to the deletion process DP. The deletion process DP includes the series of processes from step S69 to step S75 illustrated in Fig. 14. After terminating the deletion process DP, the management system 10 executes the series of processes from step S76 to step S80 shown in Fig. 11. Then, the management system 10 terminates the current series of processes for deleting the third digital key DK3.

### Step S237: NO

When the user of the mobile device 40M selects "NO" by using the radio button in the fourth image section IP4 in Fig. 17 and then presses "Confirm" in the second notification image IM2 (step S237: NO), the mobile device 40M performs the process of step S241 shown in Fig. 34. In the process of step S241, the mobile device 40M generates a rejection notification M115. The rejection notification M115 indicates that deletion of the third digital key DK3, which is the subject of the deletion reservation D111, is rejected. The mobile device 40M transmits the rejection notification M115 to the third device 30C.

Upon receiving the rejection notification M115, the third device 30C performs the process of step S242. In step S242, the third device 30C generates a rejection notification M116. The rejection notification M116 indicates that deletion of the third digital key DK3, which is the subject of the deletion reservation D111, is rejected. The third device 30C transmits the rejection notification M116 to the management server 70. That is, when receiving the rejection notification M115, the third device 30C does not cause the management system 10 to delete the third digital key DK3, which is the subject of the deletion reservation D111.

Upon receiving the rejection notification M116, the management server 70 performs the process of step S243. In step S243, the management server 70 cancels the deletion-pending state of the third digital key DK3. When the management server 70 receives the rejection notification M116, the management system 10 does not execute the deletion process DP for deleting the third digital key DK3, which is the subject of the deletion reservation D111.

After transmitting the rejection notification M116 to the management server 70, the third device 30C proceeds to step S244. In step S244, the third device 30C presents the HMI 32 with information indicating that the deletion-pending state of the third digital key DK3, which is the subject of the deletion reservation D111, has been canceled. Then, the third device 30C proceeds to step S245.

In step S245, the third device 30C generates a cancellation notification M117. The cancellation notification M117 includes information indicating that the deletion-pending state of the third digital key DK3 has been canceled. Then, the third device 30C transmits the cancellation notification M117 to each of multiple devices 30 and the vehicle 20 to which the pending-state notification M112 was transmitted in the process of step S245. Specifically, the third device 30C transmits the cancellation notification M117 to each of the mobile device 40M and the vehicle 20. The third device 30C also transmits the cancellation notification M117 to the second device 30B.

Upon receiving the cancellation notification M117, the mobile device 40M performs the process of step S246. In step S246, the mobile device 40M presents the HMI 32 with information indicating that the deletion-pending state of the third digital key DK3, which is the subject of the deletion reservation D111, has been canceled. Step S246 is identical to step S186 in the fifth embodiment, and thus will not be described in detail.

Upon receiving the cancellation notification M117, the second device 30B performs the process of step S247. In step S247, the second device 30B presents the HMI 32 with information indicating that the deletion-pending state of the third digital key DK3, which is the subject of the deletion reservation D111, has been canceled. For example, the second device 30B displays, on the HMI 32, an image indicating that the deletion-pending state of the third digital key DK3 has been canceled.

Upon receiving the cancellation notification M117, the vehicle 20 performs the process of step S248. In step S248, the vehicle 20 presents the HMI 22 with information indicating that the deletion-pending state of the third digital key DK3, which is the subject of the deletion reservation D111, has been canceled. Step S248 is identical to step S188 in the fifth embodiment, and thus will not be described in detail. Then, the management system 10 terminates the current series of processes for deleting the third digital key DK3.

### Operation of the Eighth Embodiment

Even if the user of the second device 30B wishes the third digital key DK3 to be deleted, another user may not wish the third digital key DK3 to be deleted. The notification program PM2 causes the execution device 36 of the third device 30C to transmit the confirmation request D112 along with the pending-state notification M112 to devices 30 that belong to the user of the device 30 other than the second device 30B, which has transmitted the deletion reservation D111. The confirmation request D112 prompts the user of the device 30 to select whether to permit deletion of the third digital key DK3.

### Advantages of the Eighth Embodiment

The eighth embodiment provides the following advantages in addition to advantages (7-1) to (7-5) of the seventh embodiment.

(8-1) In executing deletion of the third digital key DK3, the notification program PM2 takes into account the preference of a user who does not wish the third digital key DK3 to be deleted.

(8-2) The notification program PM2 causes the execution device 36 of the third device 30C to transmit the confirmation request D112 to the first device 30A. The first device 30A stores the information relating to the first digital key DK1 (i.e., a digital key having a higher level than the third digital key DK3, which is the subject of the deletion reservation D111). Even if a certain user wishes the third digital key DK3 to be deleted, the user of the first device 30A, which stores the information relating to a higher-level digital key than the third digital key DK3, may not wish the third digital key DK3 to be deleted. In executing deletion of the third digital key DK3, the notification program PM2 takes into account the preference of the user of the device 30 that stores the information relating to the first digital key DK1, which has a higher level than the third digital key DK3.

(8-3) The notification program PM2 causes the execution device 36 of the third device 30C to transmit the confirmation request D112 to the owner device 40, which is a device 30 that belongs to the owner of the vehicle 20. Even if a certain user wishes a digital key to be deleted, the user of the owner device 40 may not wish that digital key to be deleted. In executing deletion of a digital key, the notification program PM2 takes into account the preference of the user of the owner device 40.

### Modifications to the Eighth Embodiment

The eighth embodiment may be modified as follows. The eighth embodiment described above and the following modifications to the eighth embodiment may be combined as long as they are not technically inconsistent.

The notification program PM2 may cause the execution device 36 of the third device 30C to transmit the confirmation request D112 to any device 30 other than a device 30 that stores the information relating to a higher-level digital key than the third digital key DK3, which is the subject of the deletion reservation D111.

As shown in Fig. 32, the devices 30 to which the notification program PM2 causes the execution device 36 of the third device 30C to transmit the confirmation request D112 include multiple friend devices 51. The devices 30 to which the notification program PM2 causes the execution device 36 of the third device 30C to transmit the confirmation request D112 include multiple guest devices 52. The devices 30 to which the notification program PM2 causes the execution device 36 of the third device 30C to transmit the confirmation request D112 include multiple devices 40BO, which belong to the owner of the vehicle 20. The devices 30 to which the notification program PM2 causes the execution device 36 of the third device 30C to transmit the confirmation request D112 include multiple devices 51BF, which belong to the users of the friend devices 51. The devices 30 to which the notification program PM2 causes the execution device 36 of the third device 30C to transmit the confirmation request D112 include multiple devices 52BNF, which belong to the users of the guest devices 52.

The notification program PM2 may change the destination to which the confirmation request D112 is to be transmitted by the execution device 36 of the third device 30C. For example, the notification program PM2 may cause the execution device 36 of the third device 30C to transmit the confirmation request D112 to any device 30 that stores the information relating to a digital key directly hierarchically related to a digital key that is the subject of the deletion reservation D111. The notification program PM2 does not have to cause the execution device 36 of the third device 30C to transmit the confirmation request D112 to a device 30 storing the information relating to a higher-level digital key than a digital key that is the subject of the deletion reservation D111. The notification program PM2 does not have to cause the execution device 36 of the third device 30C to transmit the confirmation request D112 to the owner device 40.

The notification program PM2 may cause the execution device 36 of the third device 30C to transmit the confirmation request D112 to multiple devices 30. In this case, the condition for causing the execution device 36 of the third device 30C to transmit the rejection notification M116 to the management server 70 may be set as needed. That is, the condition for canceling the deletion-pending state may be set as needed. For example, the notification program PM2 may set a condition such that the program causes the execution device 36 of the third device 30C to transmit the rejection notification M115 to the management server 70 when receiving the rejection notification M116 from all of multiple devices 30 to which the confirmation request D112 has been transmitted. For example, the notification program PM2 may set a condition such that the program causes the execution device 36 of the third device 30C to transmit the rejection notification M115 to the management server 70 when receiving the rejection notification M116 from at least half of multiple devices 30 to which the confirmation request D112 has been transmitted. For example, the notification program PM2 may set a condition such that the program causes the execution device 36 of the third device 30C to transmit the permission notification M114 to the management server 70 so as not to cancel the deletion-pending state even when the third device 30C receives the permission notification M113 from the device 30 that stores the information relating to the highest-level digital key but also receives the rejection notification M115 from another device 30. For example, the notification program PM2 may set a condition such that the program causes the execution device 36 of the third device 30C to transmit the rejection notification M116 to the management server 70 even when the third device 30C receives the rejection notification M115 from at least one device 30 but also receives the permission notification M113 from another device 30.

### Ninth Embodiment

The management system 10 according to a ninth embodiment will now be described with reference to Figs. 11, 21, 35, and 36. The following describes the ninth embodiment, focusing on differences from the sixth embodiment. In the ninth embodiment, the owner device 40 is the virtual device 40V. In the ninth embodiment, along with deletion of a digital key that is the subject of a deletion reservation D121, a lower-level digital key directly hierarchically related to that digital key is configured to be deleted. The following description focuses on differences from the ninth embodiment, and identical portions are briefly described or omitted.

As shown in Fig. 21, the storage device 37 of the friend device 51 stores the notification program PM2. When the device 30 that stores the notification program PM2 receives a pending-state notification M121, the notification program PM2 causes the device 30 that stores the program to transmit a pending-state notification M122 while excluding, from the destinations of the pending-state notification M122, a device 30 that stores information relating to a lower-level digital key directly hierarchically related to a digital key that is the subject of the deletion reservation D121.

### Series of Processes for Deleting Digital Key

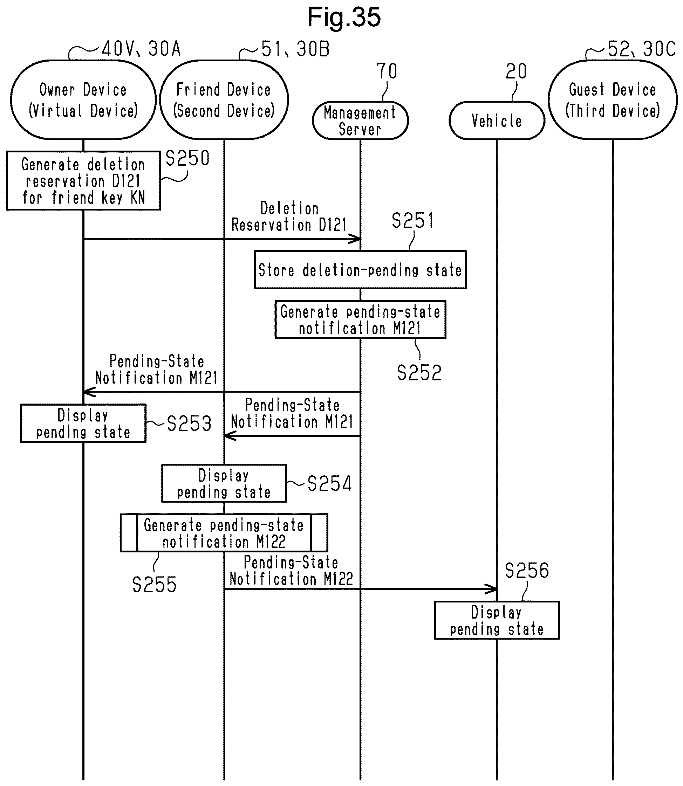

As shown in Fig. 35, upon receiving an operation to request deletion of the second digital key DK2, the virtual device 40V performs the process of step S250. In step S250, the virtual device 40V generates the deletion reservation D121 for the second digital key DK2. The deletion reservation D121 is identical to the deletion reservation D61 in the third embodiment, and thus will not be described in detail. The virtual device 40V transmits the deletion reservation D121 to the management server 70.

Upon receiving the deletion reservation D121, the management server 70 executes the process of step S251. In step S251, the management server 70 stores, in the database DB, information indicating that the second digital key DK2, which is the subject of the deletion reservation D121, is in the deletion-pending state. Then, the management server 70 proceeds to step S252.

In step S252, the management server 70 generates the pending-state notification M121, indicating that the digital key requested to be deleted by the deletion reservation D121 is in the deletion-pending state.

The management server 70 transmits the pending-state notification M121 to the virtual device 40V. The management server 70 transmits the pending-state notification M121 to the second device 30B storing the information relating to the second digital key DK2, which is the subject of the deletion reservation D121. In the present embodiment, the second device 30B is a friend device 51.

Upon receiving the pending-state notification M121, the virtual device 40V performs the process of step S253. In step S253, the virtual device 40V presents information indicating that deletion of the second digital key DK2, which is the subject of the deletion reservation D121, is pending. Step S253 is identical to step S143 in the third embodiment, and thus will not be described in detail.

Upon receiving the pending-state notification M121, the second device 30B performs the process of step S254. In step S254, the second device 30B presents the HMI 32 with information indicating that deletion of the second digital key DK2, which is the subject of the deletion reservation D121, is pending. Step S254 is identical to step S144 in the third embodiment, and thus will not be described in detail. Then, the second device 30B proceeds to step S255.

In step S255, the second device 30B generates the pending-state notification M122, indicating that the digital key requested to be deleted by the deletion reservation D121 is in the deletion-pending state.

### Destination of Pending-State Notification M122

The second device 30B changes the destination of the pending-state notification M122 depending on whether the owner device 40 is the virtual device 40V. Upon generating the pending-state notification M122, the second device 30B executes a series of processes for determining the destination of the pending-state notification M122.

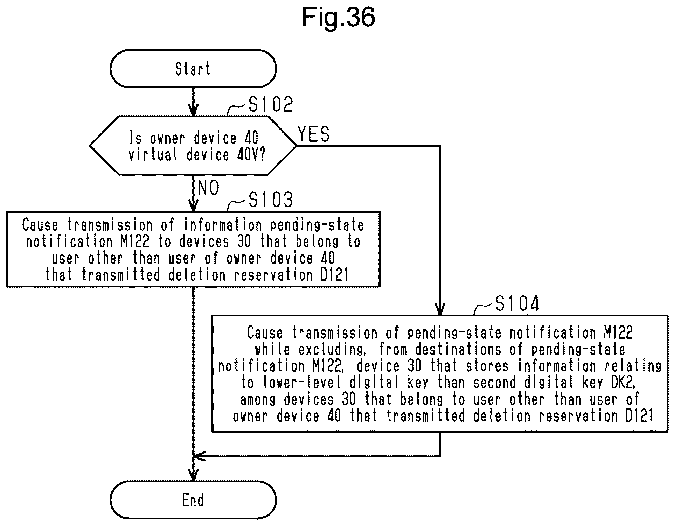

As illustrated in Fig. 36, upon starting the series of processes, the second device 30B acquires information indicating whether the owner device 40 is the virtual device 40V in the process of step S102. Specifically, the second device 30B acquires, from the management server 70, the classification information TI stored in the storage device 72 of the management server 70. The second device 30B determines whether the owner device 40 is the virtual device 40V with reference to the classification information TI. When the owner device 40 is not the virtual device 40V (step S102: NO), the second device 30B proceeds to step S103.

In the process of step S103, the second device 30B determines to transmit the pending-state notification M122 to devices 30 that belong to users other than the user of the owner device 40 that has transmitted the deletion reservation D121.

In other words, the notification program PM2 causes the second device 30B to transmit the pending-state notification M122 to devices 30 that belong to users other than the user of the owner device 40 that has transmitted the deletion reservation D121. Then, the second device 30B terminates the series of processes shown in Fig. 36.

When the owner device 40 is the virtual device 40V (step S102: YES), the second device 30B proceeds to step S104.

In the process of step S104, the second device 30B determines to transmit the pending-state notification M122 while excluding, from the destinations of the pending-state notification M122, a device 30 that stores information relating to a lower-level digital key directly hierarchically related to the second digital key DK2, among the devices 30 that belong to users other than the user of the owner device 40 that has transmitted the deletion reservation D121.

In other words, the notification program PM2 causes the second device 30B to transmit the pending-state notification M122 while excluding, from the destinations of the pending-state notification M122, a device 30 that stores information relating to a lower-level digital key directly hierarchically related to the second digital key DK2, among the devices 30 that belong to users other than the user of the owner device 40 that has transmitted the deletion reservation D121. Then, the second device 30B terminates the series of processes shown in Fig. 36.

As shown in Fig. 35, the owner device 40 of the ninth embodiment is the virtual device 40V. Accordingly, the second device 30B transmits the pending-state notification M122 to the vehicle 20. The second device 30B does not transmit the pending-state notification M122 to the third device 30C storing the information relating to the third digital key DK3 (i.e., a lower-level digital key that is directly hierarchically related to the second digital key DK2, which is the subject of the deletion reservation D121).

Upon receiving the pending-state notification M122, the vehicle 20 performs the process of step S256. In step S256, the vehicle 20 presents the HMI 22 with information indicating that deletion of the third digital key DK3 is pending. Step S256 is identical to step S145 in the third embodiment, and thus will not be described in detail.

Then, the management system 10 deletes the second digital key DK2 by performing the same processes as those subsequent to step S68 shown in Fig. 11. In this case, the deletion process DP is performed by each of the second device 30B, the management server 70, and the vehicle 20. Subsequently, the management system 10 deletes the third digital key DK3 by performing the same processes as those subsequent to step S68 shown in Fig. 11. In this case, the deletion process DP is performed by each of the third device 30C, the management server 70, and the vehicle 20.

### Operation of the Ninth Embodiment

For example, the owner device 40 may be the virtual device 40V when a rental operator or a sharing operator owns the vehicle 20. When, for example, a rental operator owns the vehicle 20, along with deletion of a digital key that is the subject of the deletion reservation D121, a lower-level digital key directly hierarchically related to that digital key may be configured to be deleted.

In this case, if the pending-state notification M122 is transmitted to the third device 30C storing the information relating to the third digital key DK3 (i.e., a lower-level digital key that is directly hierarchically related to the second digital key DK2, which is the subject of the deletion reservation D121), the user of the third device 30C would receive unnecessary notifications.

### Advantage of the Ninth Embodiment

The ninth embodiment provides the following advantage in addition to advantages (7-1) and (7-3) of the seventh embodiment.

(9-1) Upon receiving the pending-state notification M121, the notification program PM2 causes the execution device 36 to transmit the pending-state notification M122 except for notifications unnecessary for a user. Accordingly, the user avoids receiving unnecessary notifications.

### Other Modifications

Other elements that may be commonly modified across the above embodiments are as follows. The following modifications may be combined as long as they are not technically inconsistent.

### Management System

The vehicle 20 may lack at least one of the BLE module 23, the UWB module 24, and the NFC module 25. The vehicle 20 is capable of performing short-range wireless communication with the device 30 as long as it includes at least one of the modules. The vehicle 20 may include modules other than those listed above, provided that the module is capable of performing short-range wireless communication with the device 30.

Among the ECUs included in the vehicle 20, an ECU other than the vehicle management device 26 may authenticate a digital key.

The digital key-related aspects of the above embodiments do not have to be compliant with the CCC standard.

The vehicle management device 26 is not limited to a digital key ECU. The vehicle management device 26 may be, for example, a central ECU that integrally manages multiple ECUs included in the vehicle 20.

In the above embodiments, the vehicle management device 26 is provided with the execution device 27, which is processing circuitry including one or more processors that run computer programs (software) to execute various processes. However, the execution device 27 may be provided with processing circuitry including one or more dedicated hardware circuits, such as application-specific integrated circuits (ASICs) that execute at least some of the processes. Alternatively, the execution device 27 may be provided with processing circuitry including a combination of one or more processors and one or more dedicated hardware circuits. The processor includes a CPU and a memory such as a RAM or a ROM. The memory stores program codes or instructions configured to cause the CPU to execute the processes. The memory, or a computer-readable medium, includes any type of medium that is accessible by general-purpose computers and dedicated computers. The same applies to the execution device 36 of each device 30 and the execution device 71 of the management server 70.

The devices 30 are not limited to smartphones. The devices 30 may be smartwatches. The devices 30 may be predetermined servers. In this case, the devices 30 may be included in a predetermined server. For example, when the owner of a vehicle 20 is a rental service provider or a sharing service provider, the owner device 40 may be included in the predetermined server. Further, for example, friend devices 51 may be included in the predetermined server.

In the above embodiments, digital keys are arranged in a hierarchy consisting of, in descending order, an owner key KO, a friend key KF, and a guest key KN, such that digital keys with higher hierarchy levels are assigned greater permission levels. However, digital keys with higher hierarchy levels do not have to be assigned greater permission levels. For example, the same level of permission may be set for the three hierarchies of an owner key KO, a friend key KF, and a guest key KN.

A shareable device 50 is configured to receive a shareable key KS as in the above embodiments. A device 30 configured to receive a digital key, such as the shareable device 50, may be referred to as a receiver device.

A separate device server 60 does not have to be provided for each type of device 30. It is sufficient that multiple devices 30 and the management server 70 can wirelessly communicate with each other. The management system 10 may lack the device server 60. In this case, in the management system 10, it is sufficient that multiple devices 30 and the management server 70 can communicate directly via wireless communication.

The management server 70 may include multiple servers. For example, the management server 70 may include a server that stores the database DB and a server that executes the server program PS. In addition, for example, the management server 70 may include a server that communicates with the vehicles 20 and a server that communicates with the device server 60, and these servers may communicate with each other.

The management server 70 does not have to store the database DB. It is sufficient that the management server 70 manages at least a combination of the key information DK of a device 30 and the authentication information AT of the vehicle management device 26 for one digital key in the management system 10.

Deleting a digital key means changing the digital key from an enabled state to a disabled state. In the above embodiments, a digital key is changed to a disabled state by deleting either corresponding authentication information AT or corresponding key information DK.

Accordingly, deleting a digital key means deleting at least one of the authentication information AT, which relates to a digital key stored in the vehicle management device 26, and the key information DK, which relates to a digital key stored in a device 30. When both the key authentication information AT and the key information DK are deleted, the digital key is deleted at the point in time when either the key authentication information AT or the key information DK is first deleted.

### Various Types of Information

The information relating to a digital key stored in the vehicle management device 26 is not limited to the authentication information AT, and may be any information relating to the digital key. For example, the information relating to a digital key may include information used to identify the digital key.

The information relating to a digital key stored in a device 30 is not limited to the key information DK, and may include any information relating to the digital key. For example, the information relating to a digital key may include information used to identify the digital key.

As in the above embodiments, the information relating to a digital key stored in the vehicle management device 26 may differ from the information relating to a digital key stored in a device 30, or may match it.

The authentication information AT is not limited to the examples of the above embodiments as long as it is used to authenticate a digital key during use. For example, the authentication information AT may be a common key shared by the vehicle management device 26 and a device 30. For example, the authentication information AT may be a common secret key shared by the vehicle management device 26 and a device 30.

The structure of information included in the key information DK is not limited to the examples described in the above embodiments. For example, the owner key information DKO does not have to include the slot identification information ST4. For example, the key information DK may include information indicating the type of digital key. The information indicating the type of digital key indicates, for example, an owner key KO, a friend key KF, or a guest key KN.

The management system 10 may include information indicating the type of device 30 in the database DB. The information indicating the type of device 30 indicates, for example, whether the device is a smartphone, a smartwatch, or a predetermined server as in the above modifications.

The structure of the data DA in the database DB is not limited to the examples of the above embodiments. The database DB may be modified as long as it includes information necessary for the management server 70 to perform management in the management system 10.

In the database DB, permissions for digital keys are not required to be uniform by key type and may be set individually for each digital key. In the database DB, the permission of a digital key does not have to be defined.

### Series of Processes for Registering Digital Keys

The series of processes for registering an owner key KO is not limited to the examples of the above embodiments. For example, even if pairing through the process of step S12 is not performed, the owner device 40 may store the owner key information DKO by exchanging information such as the generation data DC between the vehicle 20 and the first device 30A via the management server 70. The series of processes for registering an owner key KO may be modified to align with the structure of the information included in the owner key information DKO and the structure of the information included in the authentication information AT.

The series of processes for registering a friend key KF is not limited to the examples of the above embodiments. For example, the management server 70 may update the database DB through the process of step S29 after transmitting the authentication package ATP and the storage request D24 to the vehicle 20. The series of processes for registering a friend key KF may be modified to align with the structure of the information included in the friend key information DKF and the structure of the information included in the authentication information AT.

The series of processes for registering a guest key KN is not limited to the examples of the above embodiments. The sequence of processes for registering a guest key KN may differ from the sequence of processes for registering a friend key KF. The series of processes for registering a guest key KN may be modified to align with the structure of the information included in the guest key information DKN and the structure of the information included in the authentication information AT.

A guest key KN does not have to be defined as a type of digital key. That is, a friend key KF may be the only shareable key KS in the management system 10. In this case, the digital key to be processed may be the owner key KO, and the digital key registered based on the digital key to be processed may be the friend key KF.

A guest device 52 may be configured to transmit a request for registration of a new guest key KN. In other words, a shareable device 50 may transmit a request to register a new guest key KN regardless of whether it is a friend device 51 or a guest device 52. In this case, it is sufficient for the management system 10 to register the new guest key KN through the series of processes shown in Fig. 10.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A management server (70) configured to communicate with a vehicle (20) and multiple devices (30) and manage information relating to multiple digital keys registered with the vehicle (20), the management server (70) comprising processing circuitry (71) configured to:
upon receiving a deletion request (D41) for deleting a deletion-target digital key (DK3) from a sender device (30B), the deletion-target digital key (DK3) being one of the digital keys registered with the vehicle (20), and the sender device (30B) being one of the devices (30) that respectively store information relating to the digital keys,
store information indicating the deletion-target digital key (DK3) is in a deletion-pending state in which the deletion-target digital key (DK3) is deleted upon satisfaction of a predetermined condition (RC); and
transmit a pending-state notification (M41) to a receiving device (30A, 30C), the pending-state notification (M41) indicating that the deletion-target digital key (DK3) is in the deletion-pending state, and the receiving device (30A, 30C) being one of the devices (30) that belongs to a user other than a user of the sender device (30B).

2. The management server (70), according to claim 1, wherein
the processing circuitry (71) is configured to transmit the pending-state notification (M41) to a device (30C) that stores information relating to the deletion-target digital key (DK3).

3. The management server (70) according to claim 1, wherein
the processing circuitry (71) is configured to transmit the pending-state notification (M41) to a device (30A) that stores information relating to a digital key (DK1) that is directly hierarchically related to the deletion-target digital key (DK3).

4. The management server (70) according to any one of claims 1 to 3, wherein
the processing circuitry (71) is configured to transmit the pending-state notification (M41) to a device (30A) that stores information relating to a higher-level digital key (DK1) than the deletion-target digital key (DK3).

5. The management server (70) according to any one of claims 1 to 4, wherein
the processing circuitry (71) is configured to transmit the pending-state notification (M41) to an owner device (40), the owner device (40) belonging to an owner of the vehicle (20).

6. The management server (70) according to any one of claims 1 to 5, wherein
the processing circuitry (71) is configured to transmit, along with the pending-state notification (M41), information (ATP5) indicating the sender device (30B).

7. The management server (70) according to any one of claims 1 to 6, wherein
the processing circuitry (71) is configured to:
transmit, along with the pending-state notification (M51), a confirmation request (D52) that prompts a user of the receiving device (30A) to select whether to permit deletion of the deletion-target digital key (DK3); and
when receiving a rejection notification (M53) from the receiving device (30A), refrain from deleting the deletion-target digital key (DK3), the rejection notification (M53) indicating that deletion of the deletion-target digital key (DK3) is rejected.

8. The management server (70) according to any one of claims 1 to 7, wherein
the processing circuitry (71) is configured to transmit the confirmation request (D52) to a device (30A) that stores information relating to a higher-level digital key (DK1) than the deletion-target digital key (DK3).

9. The management server (70) according to any one of claims 1 to 8, wherein
the processing circuitry (71) is configured to transmit the confirmation request (D52) to an owner device (40), the owner device (40) belonging to an owner of the vehicle (20).

10. The management server (70) according to any one of claims 1 to 9, wherein
the processing circuitry (71) is configured to change information to be transmitted depending on whether an owner device (40) is a personal device (40M) or a virtual device (40V) constructed on a server (80), the owner device (40) belonging to an owner of the vehicle (20).

11. The management server (70) according to claim 10, wherein
the processing circuitry (71) is configured to refrain from transmitting information (ATP5) relating to the sender device (30B) to the owner device (40) when the owner device (40) is the virtual device (40V)constructed on the server (80).

12. The management server (70) according to claim 10 or 11,
wherein
the processing circuitry (71) is configured to, in a state in which the owner device (40) is the virtual device (40V) constructed on the server (80), refrain from transmitting the pending-state notification (M61) to a device (30C) that stores information relating to a lower-level digital key (DK3) than the deletion-target digital key (DK2) when receiving the deletion request (D61) from the owner device (40).

13. A notification program (PM2) to be executed by a first device, the first device (30B) being one of multiple devices (30) in a digital key system (10), wherein the digital key system (10) is configured to cause the devices (30) to function as digital keys registered with a vehicle (20) by storing, in the devices (30), information relating to digital keys that are registerable with the vehicle (20),
the notification program (PM2) is configured to cause processing circuitry (36) of the first device (30B) to:
when the first device (30B) transmits a deletion request (D71) for deleting a deletion-target digital key (DK3), the deletion-target digital key (DK3) being one of the digital keys registered with the vehicle (20),
transmit a pending-state notification (M71) to a receiving device (30A, 30C), the receiving device (30A, 30C) being included in the devices (30) and belonging to a user other than a user of the first device (30B), and the pending-state notification (M71) indicating that the deletion-target digital key (DK3) is in a deletion-pending state in which the deletion-target digital key (DK3) is deleted upon satisfaction of a predetermined condition (RC).

14. The notification program (PM2) according to claim 13, wherein the notification program (PM2) is configured to cause the processing circuitry (36) to transmit the pending-state notification (M71) to a device (30C) that stores information relating to the deletion-target digital key (DK3).

15. The notification program (PM2) according to claim 13 or 14,
wherein
the notification program (PM2) is configured to cause the processing circuitry (36) to transmit the pending-state notification (M71) to a device (30A) that stores information relating to a digital key (DK1) that is directly hierarchically related to the deletion-target digital key (DK3).
